# EUROPEAN PATENT SPECIFICATION

(11) **EP 1 642 932 B1**
(45) Date of publication and mention of the grant of the patent: **21.03.2012**
(21) Application number: 04747093.5
(22) Date of filing: 30.06.2004
(51) Int. Cl.: C08L 33/06, C08K 5/00

(54) **CURING COMPOSITION**
HÄRTENDE ZUSAMMENSETZUNG
COMPOSITION DE DURCISSEMENT

(30) Priority: 08.07.2003 JP 2003193786
(43) Date of publication of application: 05.04.2006
(73) Proprietor: KANEKA CORPORATION, Osaka-shi, Osaka 530-8288 (JP)
(72) Inventor: OHNO, Shigeki, Osaka-Factory, Kaneka Corporation, Settsu-shi, Osaka 5660072 (JP); NAKAGAWA, Yoshiki, Osaka-Factory, Settsu-shi, Osaka 5660072 (JP)
(74) Representative: Hart-Davis, Jason
(86) International application number: PCT/JP2004/009624
(87) International publication number: WO 2005/003230

(56) References cited:
- JP-A- 5 271 556
- JP-A- 2000 119 527
- JP-A- 2000 178 456
- US-A1- 4 238 577
- US-A1- 5 130 375
- US-A1- 5 623 011
- US-A1- 5 756 584

## Description

### Technical Field

The present invention relates to a curable composition comprising from 0.1 to 10 parts by weight of a surface tack modifier (II) having a melting point of between 30°C and 200°C at 1 atm, relative to 100 parts by weight of a poly(meth)acrylate (I) having at least one crosslinkable functional group produced by living radical polymerization.

### Background Art

A poly(meth)acrylate having at least one silicon-containing group which has for example a hydroxyl group or a hydrolyzable group bound to the silicon atom, and which may be crosslinked by forming a siloxane bond even at room temperature from moisture (hereinafter also referred to as "crosslinkable silyl group") as a crosslinkable functional group, or a cured product obtained from a composition thereof is superior in heat resistance or weather resistance. It can be employed in various applications including, but not particularly limited to, a sealant such as an architectural elastic sealant and a sealant for double glass, a material for electrical and electronic parts such as a back sealer of a solar battery, an electrical insulating material such as an insulating coating material for electric wires and cables, a tackifier, an adhesive, an elastic adhesive, a paint, a powder paint, a coating material, a foam, an electrical and electronic potting agent, a film, a gasket, a casting material, various molding materials, and a rust proofing and waterproofing sealer for the edge (cut edge) of a wire glass or shatterproof glass, and a sealant for automotive parts, electronic parts, and various mechanical parts.

A polymer having a hydrolyzable silicon group formed by two hydrolyzable groups per silicon atom bound together is often used as the poly(meth)acrylate having the above crosslinkable silyl group. However, especially when a very fast curing rate is required, for example in an application for a sealant or an adhesive, or when using at a low temperature, the curing rate is not sufficient. In addition, if the crosslinking density is decreased to make the cured product flexible, there is a problem that stickiness (surface tack) occurs because the crosslinking density will not be sufficient. When such a polymer is employed in an application such as a sealant, an adhesive, a paint, and a potting agent, it is not preferred because a problem occurs that dust or sand attaches, or the base materials adhere to each other.

Accordingly, surface tack has conventionally been improved by adding an air-curable material and/or a light-curing resin to an organic polymer having at least one crosslinkable silyl group (see for example Patent Document 1). For further improvement of surface tack, a fluorine-containing copolymer comprising a photocurable functional group is added in some cases (see for example Patent Document 2). In other cases, improvement of surface tack is provided by adding a liquid hydrocarbon to a urethane prepolymer and a modified polysulfide polymer to be used as the polymer having a crosslinkable functional group (see for example Patent Document 3).
[Patent Document 1]
Japanese Patent Laid-Open No. 2000-273439, Japanese Patent Laid-Open No. 3-294361, and Japanese Patent Laid-Open No. 2-117954
[Patent Document 2]
Japanese Patent Laid-Open No. 2001-81329 and Japanese Patent Laid-Open No. 9-291184
[Patent Document 3]
Japanese Patent Laid-Open No. 2001-354946 and Japanese Patent Laid-Open No. 7-228862

### Disclosure of the Invention

However, all of the above additives necessary to improve surface tack are liquid, and when the curable composition (formulation) is stored for a long time before being cured, the polymer and the additive may separate. When such separated formulation is cured, a homogeneous cured product may not be obtained, and there may also be a problem that the effect of improving the surface tack is not sufficient and mechanical properties are impaired.

The present invention is therefore aimed to solve the aforementioned problems. In other words, an object of the present invention is to provide a curable composition (formulation) which is not substantially separated into components when stored for a long time before being cured, which provides a homogeneous cured product with improved surface tack, and which can be employed in for example a sealant, an adhesive, a paint, and a potting agent.

As a result of intensive studies to solve these problems, the present inventors have found that the above problems can be solved by using a curable composition according to appended claim 1 comprising 100 parts by weight of a poly(meth)acrylate produced by living radical polymerization, having at least one crosslinkable functional group, and from 0.1 to 10 parts by weight of a surface tack modifier having a melting point of between 30°C and 200°C at 1 atm, and thereby completed the present invention.

In other words, the present invention relates to a curable composition according to appended claim 1 comprising from 0.1 to 10 parts by weight of a surface tack modifier (II) having a melting point of between 30°C and 200°C at 1 atm, relative to 100 parts by weight of a poly(meth)acrylate (I) produced by living radical polymerization, having at least one crosslinkable functional group.

The poly(meth)acrylate (I) is not particularly limited. It is preferred that the molecular weight distribution, i.e. the ratio of the weight average molecular weight (Mw) and the number average molecular weight (Mn) (Mw/Mn) as measured by gel permeation chromatography, is less than 1.8.

Preferred examples of the crosslinkable functional group of the poly(meth)acrylate (I) include, but are not limited to, a crosslinkable silyl group, an alkenyl group, a hydroxyl group, an amino group, a polymerizable carbon-carbon double bond, or an epoxy group.

The position of the crosslinkable functional group of the poly(meth)acrylate (I) is preferably at the terminal of polymer (I), but it is not limited to this. The main chain of the polymer (I) may have a similar functional group, although when the crosslinked cured product expected to have, for example, rubber elasticity, it is preferred that the functional group is only at the terminal.

The number of crosslinkable functional groups of the poly(meth)acrylate (I) is not particularly limited. When a cured product with more crosslinks is to be obtained, the number is generally one or more on average, preferably 1.2 or more, more preferably 1.5 or more.

The poly(meth)acrylate (I) is produced by living radical polymerization. In particular, the polymer is preferably produced by atom transfer radical polymerization. Atom transfer radical polymerization preferably uses a complex of a metal selected from an element from the 7th, 8th, 9th, 10th, and 11th groups of the periodic table as a catalyst, more preferably a complex of a metal selected from the group consisting of a copper complex, nickel complex, ruthenium complex, and iron complex, particularly preferably a copper complex. However, the catalyst is not limited thereto.

The melting point of the surface tack modifier (II) of the present invention having a melting point of between 30°C and 200°C at 1 atm is not particularly limited. In view of for example workability and mechanical properties of the cured product, it is preferably between 40°C and 150°C.

The molecular structure of the surface tack modifier is selected from the group consisting of an aliphatic hydrocarbon compound, an aliphatic carboxylic acid, an aliphatic alcohol, an aliphatic carboxylic acid ester obtained from an aliphatic carboxylic acid and an aliphatic alcohol having 13 or more carbon atoms, a natural wax, an aliphatic carboxylic acid amide, polyethylene and polypropylene.

### Best Mode for Carrying Out the Invention

The present invention relates to a curable composition. Specifically, the present invention relates to a curable composition according to appended claim 1 comprising 100 parts by weight of a poly(meth)acrylate (I) produced by living radical polymerization, having at least one crosslinkable functional group, and from 0.1 to 10 parts by weight of a surface tack modifier (II) having a melting point of between 30°C and 200°C at 1 atm.

The curable composition of the present invention will be described in detail below.

### «Poly(meth)acrylate (I) »

### <Main Chain>

The poly(meth)acrylate of the present invention may be a polymer composed of a (meth)acrylic monomer, or a polymer composed of a (meth)acrylic monomer and other monomers. When it is a polymer composed of a (meth)acrylic monomer and other monomers, it is preferred that the other monomer units are incorporated to the extent that the effect of the present invention is not impaired. The amount of the other monomer units incorporated is specifically in the range of generally 50% by weight or less, preferably 30% by weight or less, further preferably 20% by weight or less relative to the total polymer. Examples of the (meth)acrylic monomer of the present invention include a monomer having a (meth)acrylic group such as a (meth)acrylic ester.

The (meth)acrylic monomer constituting the main chain of the poly(meth)acrylate is not particularly limited, and various monomers can be used. Examples of the monomer include: a (meth)acrylic monomer such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl) trimethoxysilane, an ethylene oxide adduct of (meth)acrylic acid, trifluoromethylmethyl (meth)acrylate, 2-trifluoromethylethyl (meth)acrylate, perfluoroethylmethyl (meth)acrylate, 2-perfluoroethylethyl (meth)acrylate, perfluoroethylperfluorobutylmethyl (meth)acrylate, 2-perfluoroethyl-2-perfluorobutylethyl (meth)acrylate, perfluoroethyl (meth)acrylate, perfluoromethyl (meth)acrylate, diperfluoromethylmethyl (meth)acrylate, 2,2-diperfluoromethylethyl (meth)acrylate, perfluoromethylperfluoroethylmethyl (meth)acrylate, 2-perfluoromethyl-2-perfluoroethylethyl (meth)acrylate, 2-perfluorohexylmethyl (meth)acrylate, 2-perfluorohexylethyl (meth)acrylate, 2-perfluorodecylmethyl (meth)acrylate, 2-perfluorodecylethyl (meth)acrylate, 2-perfluorohexadecylmethyl (meth)acrylate, and 2-perfluorohexadecylethyl (meth)acrylate. These may be used alone, or two or more may be copolymerized. "(Meth)acrylic" means acrylic and/or "methacrylic".

In an application to general construction, since low viscosity of the formulation and physical property of the cured product such as low modulus, high elongation, weather resistance, and heat resistance are desired, butyl acrylate monomer is further preferred. On the other hand, in an application to for example automobiles where oil resistance etc. is desired, a copolymer having ethyl acrylate as the main component is further preferred. This copolymer having ethyl acrylate as the main component is superior in oil resistance but has a tendency to be a little inferior in low-temperature properties (cold resistance). It is therefore possible to substitute a part of the ethyl acrylate with butyl acrylate to improve low-temperature properties. However, because increase in the percentage of butyl acrylate is accompanied by loss of its good oil resistance, in an application where oil resistance is desired, it is preferred to keep the percentage at 40% by weight (hereinafter sometimes shown simply as %) or less, more preferably 30% by weight or less. To improve for example low-temperature properties without losing oil resistance, it is also preferable to use for example 2-methoxyethyl acrylate or 2-ethoxyethyl acrylate having an oxygen atom introduced into the alkyl group of the side chain. However, because introduction of an alkoxy group having an ether bond into the side chain may lead to impairing of heat resistance, when heat resistance is desired, it is preferred that this is used in the percentage or 40% or less. Depending on the various applications and the objectives desired, it is possible to obtain a suitable polymer by taking into account physical property necessary such as oil resistance, heat resistance, and low-temperature properties, to modify the percentage. An example of those superior in the balance of physical properties such as oil resistance, heat resistance, and low-temperature properties include, but is not limited to, a copolymer of ethyl acrylate/butyl acrylate/2-methoxyethyl acrylate at a molar ratio of 40 to 50/20 to 30/40 to 20.

The molecular weight distribution of the poly(meth)acrylate of the present invention, i.e. the ratio of the weight average molecular weight (Mw) to the number average molecular weight (Mn) (Mw/Mn) measured using gel permeation chromatography (GPC), is not particularly limited. It is preferably less than 1.8, more preferably 1.7 or less, further preferably 1.6 or less, more preferably 1.5 or less, particularly preferably 1.4 or less, and most preferably 1.3 or less. Measurement of GPC in the present invention typically uses chloroform as the mobile phase, the measurement is carried out on a polystyrene gel column, and the number average molecular weight etc. can be calculated on the basis of a polystyrene standard sample.

The number average molecular weight of the poly(meth)acrylate of the present invention is not particularly limited. When being measured by gel permeation chromatography, it is preferably in the range of from 500 to 1,000,000, more preferably from 1,000 to 100,000, and further preferably from 5,000 to 50,000.

### <Method for Synthesizing the Main Chain>

The method for synthesizing the poly(meth)acrylate according to the present invention is living radical polymerization, more preferably atom transfer radical polymerization. These will be described below.

### Control Radical Polymerization

The radical polymerization can be categorized into "general radical polymerization" in which a monomer having a particular functional group and a vinyl monomer are simply copolymerized using for example an azo compound or a peroxide as the polymerization initiator, and "control radical polymerization" in which it is possible to introduce a particular functional group at a controlled site such as the terminal.

Although "general radical polymerization" is a simple method, when employing this method, a monomer having a particular functional group is introduced into the polymer only at a certain probability. When a polymer with high functionalization ratio is to be obtained, the monomer must be used at a considerably large amount. On the other hand, when only a small amount of the monomer is used, there exists a problem that the percentage of the polymer into which this particular functional group is not introduced increases. In addition, since this is a free radical polymerization, there also exists a problem that only a polymer having wide molecular weight distribution and high viscosity can be obtained.

"Control radical polymerization" can further be categorized into "chain transfer agent method" in which a vinyl polymer having a functional group at the terminal can be obtained by polymerization using a chain transfer agent having a particular functional group and "living radical polymerization" in which a polymer having the molecular weight almost as designed can be obtained by extension without for example termination reaction at the polymerization growth terminal.

A polymer with high functionalization ratio can be obtained by "chain transfer agent method," although a considerably large amount of a chain transfer agent having a particular functional group relative to the initiator is required, and thus leads to financial problems including disposal. In addition, as with the aforementioned "general radical polymerization," this is a free radical polymerization and therefore there also exists a problem that only a polymer having wide molecular weight distribution and high viscosity can be obtained.

Radical polymerization is thought to be difficult to control due to high polymerization velocity and tendency of the reaction to terminate by for example coupling among radicals. Unlike this polymerization, although "living radical polymerization" is a radical polymerization, termination reaction does not tend to occur, a polymer with a narrow molecular weight distribution (Mw/Mn of about 1.1 to 1.5) can be obtained, and molecular weight can be freely controlled by controlling the charge ratio between the monomer and the initiator.

Accordingly, "living radical polymerization" allows for obtaining a polymer with narrow molecular weight distribution and low viscosity. In addition, since a monomer having a particular functional group can be introduced into virtually any site within the polymer, this production method is more preferred for producing a vinyl polymer having the above particular functional group.

Living polymerization in a narrow sense means a polymerization in which the termini remains constantly active and the molecular chain keeps growing, although generally, pseudo-living polymerization in which inactive and active termini are in an equilibrium state but still grow is also included. Its definition in the present invention is the latter.

In recent years, the "living radical polymerization" has actively been studied by various study groups. Examples of such studies include, for example, a method using cobalt-porphyrin complex as described in Journal of American Chemical Society (J. Am. Chem. Soc.), 1994, vol. 116, p. 7943; a method using a radical scavenger such as a nitroxide compound as described in Macromolecules, 1994, vol. 27, p. 7228; and "atom transfer radical polymerization" in which an organic halide etc. is used as an initiator and a transition metal complex is used as a catalyst (Atom Transfer Radical Polymerization: ATRP).

Among the "living radical polymerizations," "atom transfer radical polymerization," in which a vinyl monomer is polymerized using for example an organic halide or a halogenated sulfonyl compound as the initiator and a transition metal complex as a catalyst, is further preferred as the method for producing a poly(meth)acrylate having a particular functional group. The reasons for this are as follows: the above characteristics of the "living radical polymerization"; a halogen etc. which is relatively useful for conversion reaction of the functional group is present at the terminal; and there is a high degree of flexibility in designing of the initiator and catalyst. Examples of this atom transfer radical polymerization include those described in Matyjaszewski et al., Journal of American Chemical Society (J. Am. Chem. Soc.), 1995, vol. 117, p. 5614; Macromolecules, 1995, vol. 28, p. 7901; Science, 1996, vol. 272, p. 866; WO96/30421, WO97/18247, WO98/01480, WO98/40415; or Sawamoto et al., Macromolecules, 1995, vol. 28, pp. 1721; Japanese Patent Laid-Open No. 9-208616, and Japanese Patent Laid-Open No. 8-41117.

It is not particularly limited which of these living radical polymerizations is used in the present invention. However, atom transfer radical polymerization is preferred.

Details on the living radical polymerization will be described below, following the description on the control radical polymerization, i.e. polymerization using a chain transfer agent.

Japanese Patent Laid-Open No. 4-132706 describes a method for obtaining a polymer having a halogen terminal by using a halogenated hydrocarbon as the chain transfer agent. Japanese Patent Laid-Open No. 61-271306, Japanese Patent No. 2594402, and Japanese Patent Laid-Open No. 54-47782 describes a method for obtaining a polymer having a hydroxyl group terminal by using for example a hydroxyl group-containing mercaptan or a hydroxyl group-containing polysulfide as the chain transfer agent.

Living radical polymerization will be described below.

Among living radical polymerization, a method using a radical scavenger such as a nitroxide compound will be described first. This polymerization generally uses a stable nitroxy free radical (=N-O•) as a radical scavenger. Preferred compounds include, but are not limited to, a nitroxy free radical from a cyclic hydroxyamine such as 2,2,6,6-substituted-1-piperidinyloxy radical or 2,2,5,5-substituted-1-pyrrolidinyloxy radical. A suitable substituent includes an alkyl group having 4 or less carbon atoms such as methyl and ethyl groups. A particular nitroxy free radical compound includes, but is not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-t-butylamineoxy radical. A stable free radical such as galvinoxyl free radical may be used instead of the nitroxy free radical.

The above radical scavenger is used together with a radical generator. It is thought that the reaction product of the radical scavenger and the radical generator serves as the polymerization initiator to allow the polymerization of addition polymer monomers to progress. The ratio of the radical scavenger and generator is not particularly limited. One mol of the radical capping agent to 0.1 to 10 mols of the radical generator is suitable. Various compounds can be used as a radical generator. A peroxide which can generate a radical under polymerization temperature condition is preferred. Examples of this peroxide include, but are not limited to, a dialkyl peroxide such as benzoyl peroxide and lauroyl peroxide; a diacyl peroxide such as dicumyl peroxide and di-t-butyl peroxide; a peroxy carbonate such as diisopropyl peroxydicarbonate and bis(4-t-butylcyclohexyl)peroxydicarbonate; and an alkyl perester such as t-butylperoxy octoate and t-butylperoxybenzoate. Benzoyl peroxide is particularly preferred. In addition, a radical generator, for example a radical-generating azo compound such as azobisisobutylonitrile may be used instead of a peroxide.

As reported in Macromolecules, 1995, 28, P. 2993, an alkoxyamine compound of the following formula may be used as the initiator instead of using the radical scavenger and generator together:

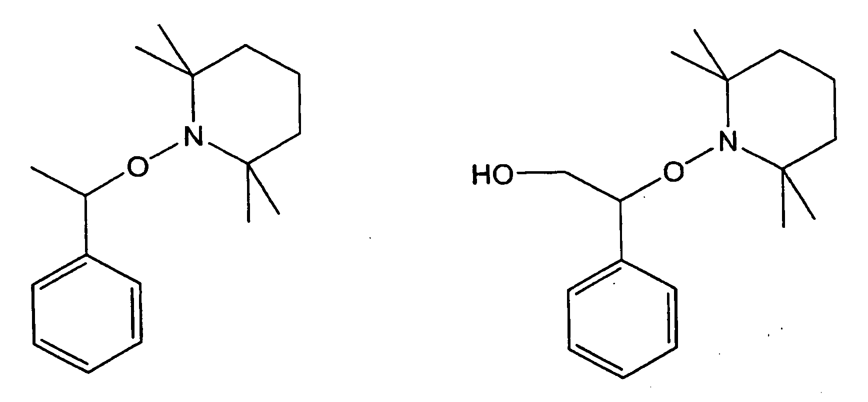

When using the alkoxyamine compound as an initiator, a polymer having a functional group at the terminal can be obtained by using a compound such as those represented by the above formula having a functional group such as a hydroxyl group. A polymer having a functional group at the terminal can be obtained by employing this step in the method of the present invention.

The monomer, the solvent, and the polymerization condition such as polymerization temperature employed in the polymerization using the above radical scavenger such as a nitroxide compound are not limited. Those used in atom transfer radical polymerization as described below may be used.

### Atom Transfer Radical Polymerization

Atom transfer radical polymerization, which is more preferred as the living radical polymerization of the present invention, will be described next.

In atom transfer radical polymerization, an organic halide, in particular an organic halide having a highly reactive carbon-halogen bond (for example, a carbonyl compound having a halogen at the α-position, or a compound having a halogen at the benzyl position), or a halogenated sulfonyl compound etc. are used as the initiator.

Specific examples of this compound include:
C₆H₅-CH₂X, C₆H₅-C(H) (X)CH₃, and C₆H₅-C(X) (CH₃)₂ wherein C₆H₅ is a phenyl group, and X is chlorine, bromine, or iodine;
R¹-C(H)(X)-CO₂R², R¹-C(CH₃)(X)-CO₂R², R¹-C(H)(X)-C(O)R², and R¹-C(CH₃)(X)-C(O)R²,
wherein R¹ and R² are a hydrogen atom or an alkyl, aryl, or aralkyl group having 1 to 20 carbon atoms, and X is chlorine, bromine, or iodine; and

   R¹-C₆H₄-SO₂X

   wherein R¹ is a hydrogen atom or an alkyl, aryl, or aralkyl group having 1 to 20 carbon atoms, and X is chlorine, bromine, or iodine.

An organic halide or a halogenated sulfonyl compound having a functional group other than those that initiate polymerization can be used as the initiator for atom transfer radical polymerization. In such a case, a poly(meth)acrylate having a functional group at one of the main chain terminals, and a growth terminal structure of the atom transfer radical polymerization at the other main chain terminal, is produced. Examples of this functional group include alkenyl, crosslinkable silyl, hydroxyl, epoxy, amino, and amide groups.

An organic halide having an alkenyl group is not limited. Examples are those having a structure represented by the general formula (1):

R⁴R⁵C(X)-R⁶-R⁷-C(R³)=CH₂ (1)

wherein R³ is a hydrogen atom or a methyl group, R⁴ and R⁵ are a hydrogen atom, or a monovalent alkyl, aryl, or aralkyl group having 1 to 20 carbon atoms, or are linked to one another at the other terminal, R⁶ is -C(O)O- (ester group), -C(O)- (keto group), or o-, m-, p-phenylene group, R⁷ is a direct bond, or a divalent organic group having 1 to 20 carbon atoms which may comprise one or more ether bond(s), and X is chlorine, bromine, or iodine.

Specific examples of substituents R⁴ and R⁵ include a hydrogen atom, methyl, ethyl, n-propyl, isopropyl, butyl, pentyl, and hexyl groups. R⁴ and R⁵ may be linked at the other terminal to form a cyclic skeleton.

Specific Examples of the organic halide having an alkenyl group represented by the general formula (1) include:
XCH₂C(O)O(CH₂)ₙCH=CH₂, H₃CC(H)(X)C(O)O(CH₂)ₙCH=CH₂,
(H₃C)₂C(X)C(O)O(CH₂)ₙCH=CH₂, and
CH₃CH₂C(H)(X)C(O)O(CH₂)ₙCH=CH₂, 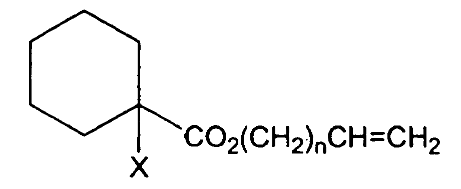 wherein X is chlorine, bromine, or iodine, and n is an integer from 0 to 20;
XCH₂C(O)O(CH₂)ₙO(CH₂)ₘCH=CH₂,
H₃CC(H)(X)C(O)O(CH₂)ₙO(CH₂)ₘCH=CH₂,
(H₃C)₂C(X)C(O)O(CH₂)ₙO(CH₂)ₘCH=CH₂, and
CH₃CH₂C(H)(X)C(O)O(CH₂)ₙO(CH₂)ₘCH=CH₂, 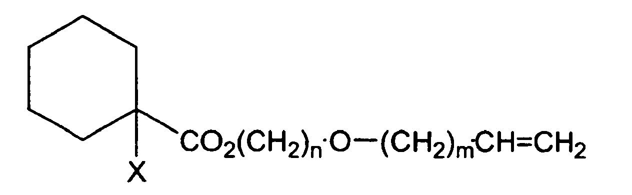 wherein X is chlorine, bromine, or iodine, n is an integer from 1 to 20, and m is an integer from 0 to 20;
o, m, p-XCH₂-C₆H₄-(CH₂)ₙ-CH=CH₂, o, m, p-CH₃C(H)(X)-C₆H₄-(CH₂)ₙ-CH=CH₂, and o, m, p-CH₃CH₂C(H)(X)-C₆H₄-(CH₂)ₙ-CH=CH₂, wherein X is chlorine, bromine, or iodine, and n is an integer from 0 to 20; and
o, m, p-XCH₂-C₆H₄-(CH₂)ₙ-O-(CH₂)ₘ-CH=CH₂,
o, m, p-CH₃C(H)(X)-C₆H₄-(CH₂)ₙ-O-(CH₂)ₘ-CH=CH₂, and o, m,
p-CH₃CH₂C(H)(X)-C₆H₄-(CH₂)ₙ-O-(CH₂)ₘCH=CH₂,
wherein X is chlorine, bromine, or iodine, n is an integer from 1 to 20, and m is an integer from 0 to 20;
o, m, p-XCH₂-C₆H₄-O-(CH₂)ₙ-CH=CH₂, o, m, p-CH₃C(H)(X)-C₆H₄-O-(CH₂)ₙ-CH=CH₂, and o, m, p-CH₃CH₂C(H)(X)-C₆H₄-O-(CH₂)ₙ-CH=CH₂,
wherein X is chlorine, bromine, or iodine, and n is an integer from 0 to 20;
o, m, p-XCH₂-C₆H₄-O-(CH₂)ₙ-O-(CH₂)ₘ-CH=CH₂, O, m, p-CH₃C(H)(X)-C₆H₄-O-(CH₂)ₙ-O- (CH₂)ₘ-CH=CH₂, and o, m, p-CH₃CH₂C(H) (X)-C₆H₄-O-(CH₂)ₙ-O-(CH₂)ₘ-CH=CH₂,
wherein X is chlorine, bromine, or iodine, n is an integer from 1 to 20, and m is an integer from 0 to 20.

Examples of the organic halide having an alkenyl group further include compounds represented by the general formula (2):

H₂C=C(R³)-R⁷-C(R⁴) (X)-R⁸-R⁵ (2)

wherein R³, R⁴, R⁵, R⁷, and X are as described above, and R⁸ represents a direct bond, -C(O)O- (ester group),-C(O)- (keto group), or o-, m-, p-phenylene group.

R⁷ is a direct bond, or a divalent organic group having 1 to 20 carbon atoms (which may comprise one or more ether bond(s)). When it is a direct bond, a vinyl group is bound to the carbon atom to which a halogen is bound, and this becomes a halogenated allyl compound. In this case, since the carbon-halogen bond is activated by the adjacent vinyl group, it is not necessary to have a C(O)O group or a phenylene group as R⁸, and this may be a direct bond. When R⁷ is not a direct bond, it is preferred to have C(O)O, C(O), or phenylene group as R⁸ for activating the carbon-halogen bond.

Specific examples of the compound of the general formula (2) include:
CH₂=CHCH₂X, CH₂=C(CH₃)CH₂X, CH₂=CHC(H)(X)CH₃,
CH₂=C(CH₃)C(H)(X)CH₃, CH₂=CHC(X)(CH₃)₂, CH₂=CHC(H)(X)C₂H₅,
CH₂=CHC(H)(X)CH(CH₃)₂, CH₂=CHC(H)(X)C₆H₅,
CH₂=CHC(H)(X)CH₂C₆H₅, CH₂=CHCH₂C(H)(X)-CO₂R,
CH₂=CH(CH₂)₂C(H)(X)-CO₂R, CH₂=CH(CH₂)₃C(H)(X)-CO₂R,
CH₂=CH(CH₂)₈C(H)(X)-CO₂R, CH₂=CHCH₂C(H)(X)-C₆H₅, and
CH₂=CH(CH₂)₂C(H)(X)-C₆H₅, CH₂=CH(CH₂)₃C(H)(X)-C₆H₅,
wherein X is chlorine, bromine, or iodine, and R is an alkyl, aryl, or aralkyl group having 1 to 20 carbon atoms.

Specific examples of the halogenated sulfonyl compound having an alkenyl group include:
o-, m-, p-CH₂=CH-(CH₂)ₙ-C₆H₄-SO₂X, and o-, m-, p-CH₂=CH-(CH₂)ₙ-O-C₆H₄-SO₂X,
wherein X is chlorine, bromine, or iodine, and n is an integer from 0 to 20.

An organic halide having the above crosslinkable silyl group is not particularly limited. Examples are those having a structure represented by the general formula (3):

R⁴R⁵C(X)-R⁶-R⁷-C(H)(R³)CH₂-[Si(R⁹)_{2-b}(Y)_{b}O]ₘ-Si(R¹⁰)₃₋ₐ (Y)ₐ (3)

wherein R³, R⁴, R⁵, R⁶, R⁷, and X are as described above, R⁹ and R¹⁰ both represent an alkyl, aryl, or aralkyl group having 1 to 20 carbon atoms, or represent a triorganosiloxy group (R')₃SiO-, wherein R' is a monovalent hydrocarbon group having 1 to 20 carbon atoms, in which the three R' may be the same or different, when two or more of R⁹ or R¹⁰ are present, these may be the same or different, Y is a hydroxyl group or a hydrolyzable group, in which when two or more of Y exist, these may be the same or different, a is 0, 1, 2, or 3, b is 0, 1, or 2, and m is an integer from 0 to 19, provided that a + mb ≥ 1.

Specific examples of the compound of the general formula (3) include:
XCH₂C(O)O(CH₂)ₙSi(OCH₃)₃, CH₃C(H)(X)C(O)O(CH₂)ₙSi(OCH₃)₃,
(CH₃)₂C(X)C(O)O(CH₂)ₙSi(OCH₃)₃, XCH₂C(O)O(CH₂)ₙSi(CH₃)(OCH₃)₂,
CH₃C(H)(X)C(O)O(CH₂)ₙSi(CH₃)(OCH₃)₂, and
(CH₃)₂C(X)C(O)O(CH₂)ₙSi(CH₃)(OCH₃)₂,
wherein X is chlorine, bromine, iodine, and n is an integer from 0 to 20;
XCH₂C(O)O(CH₂)ₙO(CH₂)ₘSi(OCH₃)₃,
H₃CC(H)(X)C(O)O(CH₂)ₙO(CH₂)ₘSi(OCH₃)₃,
(H₃C)₂C(X)C(O)O(CH₂)ₙO(CH₂)ₘSi(OCH₃)₃,
CH₃CH₂C(H)(X)C(O)O(CH₂)ₙO(CH₂)ₘSi(OCH₃)₃,
XCH₂C(O)O(CH₂)ₙO(CH₂)ₘSi(CH₃)(OCH₃)₂,
H₃CC(H)(X)C(O)O(CH₂)ₙO(CH₂)ₘ-Si(CH₃)(OCH₃)₂,
(H₃C)₂C(X)C(O)O(CH₂)ₙO(CH₂)ₘ-Si(CH₃)(OCH₃)₂, and
CH₃CH₂C(H)(X)C(O)O(CH₂)ₙO(CH₂)ₘ-Si(CH₃)(OCH₃)₂,
wherein X is chlorine, bromine, iodine, n is an integer from 1 to 20, and m is an integer from 0 to 20; and
o, m, p-XCH₂-C₆H₄-(CH₂)₂Si(OCH₃)₃,
o, m, p-CH₃C(H)(X)-C₆H₄-(CH₂)₂Si(OCH₃)₃, o, m, p-CH₃CH₂C(H)(X)-C₆H₄-(CH₂)₂Si(OCH₃) ₃, o, m, p-XCH₂-C₆H₄-(CH₂)₃Si(OCH₃)₃, o, m, p-CH₃C(H)(X)-C₆H₄-(CH₂)₃Si(OCH₃)₃, o, m, p-CH₃CH₂C(H)(X)-C₆H₄-(CH₂)₃Si(OCH₃)₃, o, m, p-XCH₂-C₆H₄-(CH₂)₂-O-(CH₂)₃Si(OCH₃)₃, o, m, p-CH₃C(H)(X)-C₆H₄-(CH₂)₂-O-(CH₂)₃Si(OCH₃)₃, o, m, p-CH₃CH₂C(H)(X)-C₆H₄-(CH₂)₂-O-(CH₂)₃Si(OCH₃)₃, o, m, p-XCH₂-C₆H₄-O-(CH₂)₃Si (OCH₃)₃, o, m, p-CH₃C(H)(X)-C₆H₄-O-(CH₂)₃Si(OCH₃)₃, o, m, p-CH₃CH₂C(H)(X)-C₆H₄-O-(CH₂)₃-Si(OCH₃)₃, o, m, p-XCH₂-C₆H₄-O-(CH₂)₂-O-(CH₂)₃-Si(OCH₃)₃, o, m, p-CH₃C(H)(X)-C₆H₄-O-(CH₂)₂-O-(CH₂)₃Si(OCH₃)₃, and o, m, p-CH₃CH₂C(H)(X)-C₆H₄-O-(CH₂)₂-O-(CH₂)₃Si(OCH₃)₃,
wherein X is chlorine, bromine, or iodine.

Examples of the organic halide having the above crosslinkable silyl group further include those having the structure represented by the general formula (4):

(R¹⁰)₃₋ₐ(Y)ₐSi-[OSi(R⁹)_{2-b}(Y)_{b}]ₘ-CH₂-C(H)(R³)-R⁷-C(R⁴)(X)-R⁸-R⁵ (4)

wherein R³, R⁴, R⁵, R⁷, R⁸, R⁹, R¹⁰, a, b, m, X, and Y are as described above.

Specific examples of this compound include:
(CH₃O)₃SiCH₂CH₂C(H)(X)C₆H₅,(CH₃O)₂(CH₃)SiCH₂CH₂C(H)(X)C₆H₅,
(CH₃O)₃Si(CH₂)₂C(H)(X)-CO₂R, (CH₃O)₂(CH₃)Si(CH₂)₂C(H)(X)-CO₂R, (CH₃O)₃Si(CH₂)₃C(H)(X)-CO₂R,
(CH₃O)₂(CH₃)Si(CH₂)₃C(H)(X)-CO₂R, CH₃O)₃Si(CH₂)₄C(H)(X)-CO₂R, (CH₃O)₂(CH₃)Si(CH₂)₄C(H)(X)-CO₂R,
(CH₃O)₃Si(CH₂)₉C(H)(X)-CO₂R, CH₃O)₂(CH₃)Si(CH₂)₉C(H)(X)-CO₂R, (CH₃O)₃Si(CH₂)₃C(H)(X)-C₆H₅,
(CH₃O)₂(CH₃)Si(CH₂)₃C(H)(X)-C₆H₅, CH₃O)₃Si(CH₂)₄C(H)(X)-C₆H₅, and (CH₃O)₂(CH₃)Si(CH₂)₄C(H)(X)-C₆H₅,
wherein X is chlorine, bromine, or iodine, and R is an alkyl, aryl, or aralkyl group having 1 to 20 carbon atoms.

Examples of the organic halide or halogenated sulfonyl compound having the above hydroxyl group include, but are not particularly limited to:

HO-(CH₂)ₙ-OC(O)C(H)(R)(X)

wherein X is chlorine, bromine, or iodine, R is a hydrogen atom or an alkyl, aryl, or aralkyl group having 1 to 20 carbon atoms, and n is an integer from 1 to 20.

Examples of the organic halide or halogenated sulfonyl compound having an amino group include, but are not particularly limited to:

H₂N-(CH₂)ₙOC(O)C(H)(R)(X)

wherein X is chlorine, bromine, or iodine, R is a hydrogen atom or an alkyl, aryl, or aralkyl group having 1 to 20 carbon atoms, and n is an integer from 1 to 20.

Examples of the organic halide or halogenated sulfonyl compound having an epoxy group include, but are not particularly limited to: 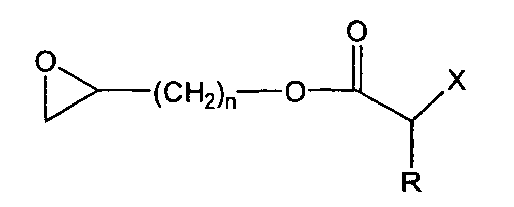 wherein X is chlorine, bromine, or iodine, R is a hydrogen atom or an alkyl, aryl, or aralkyl group having 1 to 20 carbon atoms, and n is an integer from 1 to 20.

In order to obtain a polymer having two or more growth terminal structures per molecule, it is preferred to use an organic halide or a halogenated sulfonyl compound having two or more initiation points as the initiator. Specific examples include:
o,m,p- X- CH₂-C₆H₄-CH₂-X 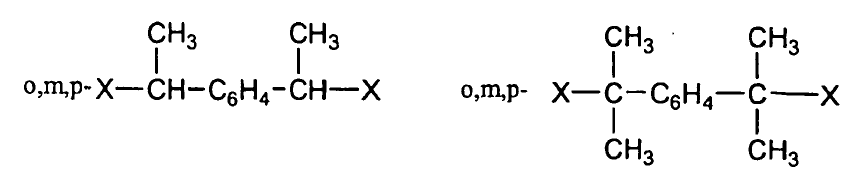 wherein C₆H₄ represents a phenylene group, and X is chlorine, bromine, or iodine; 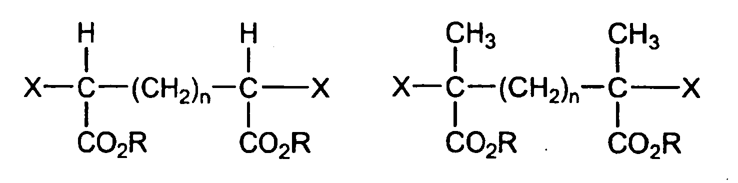 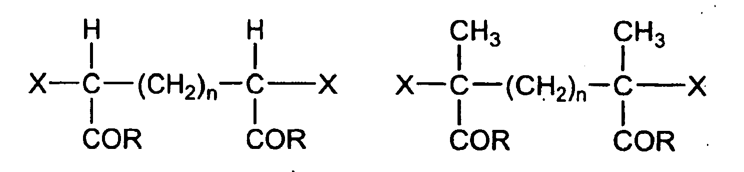 wherein R is an alkyl, aryl, or aralkyl group having 1 to 20 carbon atoms, n is an integer from 0 to 20, and X is chlorine, bromine, or iodine; 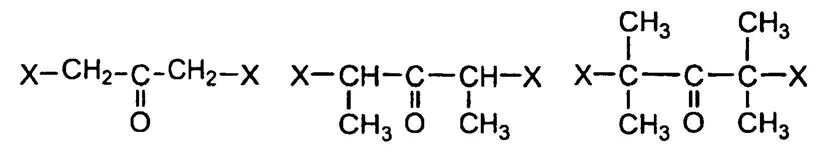 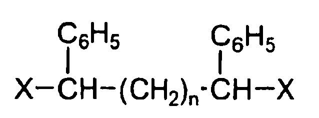 wherein X is chlorine, bromine, or iodine, and n is an integer from 0 to 20. 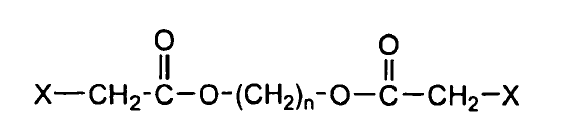 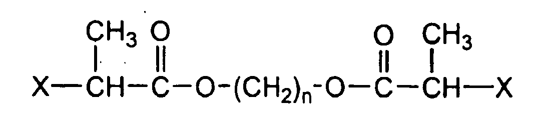 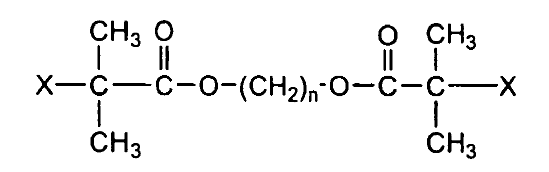 wherein n is an integer from 1 to 20, and X is chlorine, bromine, or iodine; 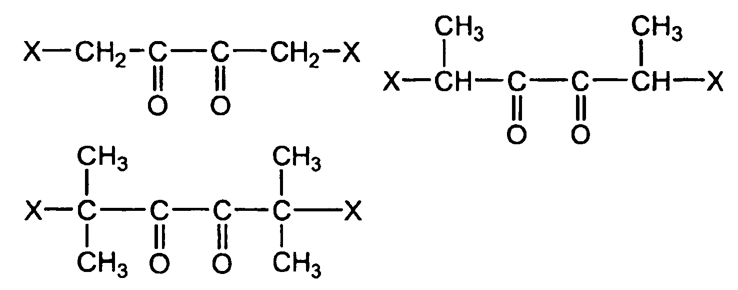 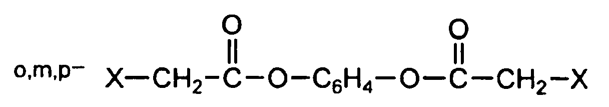 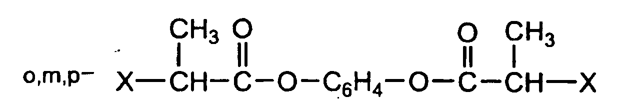 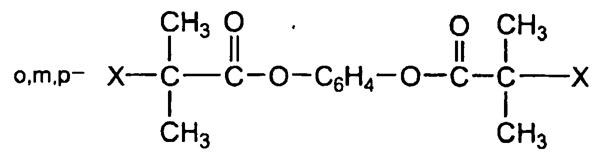 o,m,p⁻ X-SO₂-C₆H₄-SO₂-X

The (meth)acrylic monomer used in this polymerization is not particularly limited, and any of those already exemplified can be suitably used.

The transition metal complex used as a polymerization catalyst is not particularly limited. A metal complex having an element from the 7th, 8th, 9th, 10th, or 11th group of the periodic table as the central metal is preferred. A complex of zero-valent copper, monovalent copper, divalent ruthenium, divalent iron or divalent nickel is further preferred, and a copper complex is particularly preferred. Specific examples of the monovalent copper compound include, cuprous chloride, cuprous bromide, cuprous iodide, cuprous cyanide, cuprous oxide, and cuprous perchlorate. When using a copper compound, a ligand including 2,2'-bipyridyl and a derivative thereof, 1,10-phenanthroline and a derivative thereof, or a polyamine such as tetramethylethylenediamine, pentamethyldiethylenetriamine, and hexamethyltris(2-aminoethyl)amine is added to enhance catalytic activity. A preferred ligand is a nitrogen-containing compound, more preferably a chelating nitrogen-containing compound, further preferably N,N,N',N",N"-pentamethyldiethylenetriamine. Tris-triphenylphosphine complex of ruthenium dichloride (RuCl₂(PPh₃)₃) is also a suitable catalyst. When using a ruthenium compound as the catalyst, aluminum alkoxide is added as an activator. In addition, bistriphenylphosphine complex of divalent iron (FeCl₂(PPh₃)₂), bistriphenylphosphine complex of divalent nickel (NiCl₂(PPh₃)₂), and bistributylphosphine complex of divalent nickel (NiBr₂(PBu₃)₂) are also suitable as a catalyst.

Polymerization can be carried out in the absence of solvents or in various solvents. A solvent which can be used includes a hydrocarbon solvent such as benzene and toluene; an ether solvent such as diethyl ether and tetrahydrofuran; a halogenated hydrocarbon solvent such as methylene chloride and chloroform; a ketone solvent such as acetone, methylethyl ketone and methylisobutyl ketone; an alcohol solvent such as methanol, ethanol, propanol, isopropanol, n-butyl alcohol, and tert-butyl alcohol; a nitrile solvent such as acetonitrile, propionitrile, and benzonitrile; an ester solvent such as ethyl acetate and butyl acetate; a carbonate solvent such as ethylene carbonate and propylene carbonate. These can be used alone, or two or more can be mixed.

Further, although it is not limited, polymerization can be carried out at a temperature in the range of 0°C to 200°C, preferably from 50 to 150°C.

The atom transfer radical polymerization of the present invention includes the so-called reverse atom transfer radical polymerization. Reverse atom transfer radical polymerization is a method in which as opposed to the high oxidization state when a radical is generated by the atom transfer radical polymerization catalyst, e.g. Cu (II') generated when using Cu (I) as the catalyst, a general radical initiator such as a peroxide is allowed to act, and as a result an equilibrium state that is the same as in the atom transfer radical polymerization is brought about (see Macromolecules, 1999, 32, 2872).

### <Functional Group>

The crosslinkable functional group according to the present invention is a functional group which binds polymers together by forming a chemical bond and thus is involved in crosslinking.

### The Number of Crosslinkable Functional Group

The number of the crosslinkable functional group of the poly(meth)acrylate (I) is not particularly limited. In view of curability of the composition and physical properties of the cured product, it is preferred to have one or more crosslinkable functional groups on average, more preferably between 1.1 or more and 4.0 or less, and further preferably between 1.2 or more and 3.5 or less.

### The Position of Crosslinkable Functional Group

In the curable composition of the present invention, at least one of the crosslinkable functional group is at the molecular chain terminal, since large molecular weight between crosslinks that significantly affects rubber elasticity is allowed. It is more preferred that all of the crosslinkable functional groups are at the molecular chain terminal.

A method for producing a poly(meth)acrylate having at least one of the above crosslinkable functional groups at the molecular terminal is disclosed in for example Japanese Patent Publication No. 3-14068, Japanese Patent Publication No. 4-55444, and Japanese Patent Laid-Open No. 6-211922. However, because these methods are free radical polymerizations that use the above "chain transfer agent method", the polymer obtained has a relatively high percentage of crosslinkable functional groups at the molecular chain terminal, as well as molecular weight distribution represented by Mw/Mn at a generally high value of 2 or more. This causes a problem of high viscosity. Accordingly, when obtaining a poly(meth)acrylate with narrow molecular weight distribution and low viscosity having crosslinkable functional groups at the molecular chain terminal in a high percentage, it is preferred to use the above "living radical polymerization".

The functional groups will be described below.

### Crosslinkable Silyl Group

The crosslinkable silyl group of the present invention includes a group represented by the general formula (5):

-[Si(R⁹)_{2-b}(Y)_{b}O]ₘ-Si(R¹⁰)₃₋ₐ(Y)ₐ (5)

wherein R⁹ and R¹⁰ both represent an alkyl group having 1 to 20 carbon atoms, an aryl group having 6 to 20 carbon atoms, an aralkyl group having 7 to 20 carbon atoms, or represent a triorganosiloxy group (R')₃SiO-, wherein R' is a monovalent hydrocarbon group having 1 to 20 carbon atoms, in which the three R' may be the same or different, when two or more of R⁹ or R¹⁰ are present, these may be the same or different, Y is a hydroxyl group or a hydrolyzable group, in which when two or more of Y exist, these may be the same or different, a is 0, 1, 2, or 3, b is 0, 1, or 2, and m is an integer from 0 to 19, provided that a + mb ≥ 1.

A hydrolyzable group includes, for example, commonly used groups such as a hydrogen atom, alkoxy, acyloxy, ketoximate, amino, amide, aminooxy, mercapto, and alkenyloxy groups. Among these, alkoxy, amide, and aminooxy groups are preferred, and an alkoxy group is particularly preferred because hydrolysis will be mild and easy to handle. Among the alkoxy groups, those with fewer carbon atoms have higher reactivity. The reactivity decreases in the order of methoxy group > ethoxy group > propoxy group etc., and it can be selected according to the objective or application.

One to three hydrolyzable or hydroxyl groups can be bound to one silicon atom, and (a + Σb) is preferably in the range of from 1 to 5. When two or more of hydrolyzable or hydroxyl groups are bound to the crosslinkable silyl group, these may be the same or different. The number of silicon atoms forming the crosslinkable silyl group is one or more. When this is a silicon atom bound by for example a siloxane bond, the number is preferably 20 or less. In particular, a crosslinkable silyl group represented by the general formula (6):

-Si(R¹⁰)₃₋ₐ(Y)ₐ (6)

wherein R¹⁰, Y, a are as described above, is preferred due to its availability.

Although it is not particularly limited, taking in account curability, a is preferably 2 or more.

The poly(meth)acrylate having the above crosslinkable silyl group often uses a polymer having a hydrolyzable silicon group formed by two hydrolyzable groups per silicon atom bound together, but especially when very fast curing rate is desired, for example for adhesive applications or when using at a low temperature, the curing rate will not be sufficient. In addition, when flexibility of the cured product is desired, it is necessary to decrease the crosslinking density. This sometimes resulted in insufficient crosslinking density and therefore stickiness (surface tack). In such a case, the crosslinkable silyl group used is preferably a group where a is 3 (e.g. trimethoxy functional group).

Moreover, a group where a is 3 (e.g. trimethoxy functional group) has a faster curing property than a group where a is 2 (e.g. dimethoxy functional group), but a group where a is 2 may be superior in terms of storage stability and dynamic physical property (e.g. elongation). In order to balance out curability and the physical property, a group where a is 2 (e.g. dimethoxy functional group) and a group where a is 3 (e.g. trimethoxy functional group) may be used in combination.

For example, when Y is the same, the reactivity of Y rises as a increases. It is therefore possible to control for example curability or the mechanical properties of the cured product by selecting various Y and a. They can be selected according to the objective or application.

### Alkenyl Group

Although it is not limited, the alkenyl group according to the present invention is preferably those represented by the general formula (7):

H₂C=C(R¹¹)- (7)

wherein R¹¹ is a hydrogen atom or a hydrocarbon group having 1 to 20 carbon atoms.

In the general formula (7), R¹¹ is a hydrogen atom or a hydrocarbon group having 1 to 20 carbon atoms, in particular for example the following groups:
-(CH₂)ₙ-CH₃, -CH(CH₃)-(CH₂)ₙ-CH₃, -CH(CH₂CH₃)-(CH₂)n-CH₃, -CH(CH₂CH₃)₂, -C(CH₃)₂-(CH₂)ₙ-CH₃, -C(CH₃)(CH₂CH₃)-(CH₂)ₙ-CH₃, -C₆H₅, -C₆H₅(CH₃), -C₆H₅(CH₃)₂, -(CH₂)ₙ-C₆H₅, -(CH₂)ₙ-C₆H₅(CH₃), and -(CH₂)ₙ-C₆H₅(CH₃)₂
wherein n is an integer of 0 or more, and the total number of carbon atoms for all the groups is 20 or less.

Among these, a hydrogen atom is preferred.

In addition, although it is not limited, the alkenyl group of the polymer (I) is preferably not activated by the carbonyl group, alkenyl group, or aromatic ring coupled to the carbon-carbon double bond of the alkenyl group.

The type of bond between the alkenyl group and the main chain of the polymer is not particularly limited. It is preferred that they are bound though for example a carbon-carbon bond, ester bond, ether bond, carbonate bond, amide bond, or urethane bond.

### Amino Group

The amino group according to the present invention includes, but is not limited to:

-NR¹²₂

wherein R¹² is a hydrogen atom or a monovalent organic group having 1 to 20 carbon atoms, and the two R¹² may be the same or different from each other, or may be linked to each other at the other terminal to form a cyclic structure. Without causing any problems, it may also be an ammonium salt as shown below:

-(NR¹²₃)⁺X⁻

wherein R¹² is as described above, and X⁻ is a counter anion.

In the above formula, R¹² is a hydrogen atom or a monovalent organic group having 1 to 20 carbon atoms, for example, a hydrogen atom, an alkyl group having 1 to 20 carbon atoms, an aryl group having 6 to 20 carbon atoms, and an aralkyl group having 7 to 20 carbon atoms. The three R¹² may be the same or different from each other, or may be linked to each other at the other terminal to form a cyclic structure.

### Group Having a Polymerizable Carbon-Carbon Double Bond

A group having a polymerizable carbon-carbon double bond is preferably a group represented by the general formula (8):

-OC(O)C(R¹³)=CH₂ (8)

wherein R¹³ represents a hydrogen atom, or a monovalent organic group having 1 to 20 carbon atoms;
further preferably a group wherein R¹³ is a hydrogen atom or methyl group.

In the general formula (8), specific examples of R¹³ include, but is not particularly limited to, -H, -CH₃, -CH₂CH₃, -(CH₂)ₙCH₃ (n represents an integer from 2 to 19), -C₆H₅, -CH₂OH, and -CN, preferably -H, and -CH₃.

### Method for Introducing Crosslinkable Functional Group

A method for introducing a crosslinkable functional group into the poly(meth)acrylate (I) of the present invention will be described below. The methods will not be limited to these.

A method for introducing a crosslinkable silyl group, alkenyl group, and hydroxyl group by conversion of the terminal functional group will be described first. Since these functional groups may be a precursor to one another, it will be described in the order going back from crosslinkable silyl group.

Examples of the method for synthesizing a poly(meth)acrylate having at least one crosslinkable silyl group include the following:
(A) A method of adding a hydrosilane compound having a crosslinkable silyl group to a poly(meth)acrylate having at least one alkenyl group, in the presence of a hydrosilylating catalyst;
(B) A method of reacting a poly(meth)acrylate having at least one hydroxyl group with a compound having a group that may react with a hydroxyl group such as a compound having both a crosslinkable silyl group and an isocyanate group within one molecule;
(C) A method of reacting a compound having both a polymerizable alkenyl group and a crosslinkable silyl group within one molecule when synthesizing a poly(meth)acrylate by radical polymerization;
(D) A method of using a chain transfer agent having a crosslinkable silyl group when synthesizing a poly(meth)acrylate by radical polymerization;
(E) A method of reacting a poly(meth)acrylate having at least one highly reactive carbon-halogen bond with a compound having both a crosslinkable silyl group and a stable carbanion within one molecule.

The poly(meth)acrylate having at least one alkenyl group used in method (A) is obtained by various methods. Methods for synthesis thereof will be exemplified below, but will not be limited to these.

(A-a) A method in which when synthesizing a poly(meth)acrylate by radical polymerization, a compound having both a polymerizable alkenyl group and a low-polymerizable alkenyl group within one molecule such as a compound represented by the following general formula (9) is allowed to be reacted as the second monomer:

H₂C=C(R¹⁴)-R¹⁵-R¹⁶-C(R¹⁷)=CH₂ (9)

wherein R¹⁴ represents a hydrogen atom or a methyl group, R¹⁵ represents -C(O)O- or o-, m-, p-phenylene group, R¹⁶ represents a direct bond, or a divalent organic group having 1 to 20 carbon atoms which may comprise one or more ether bond(s), and R¹⁷ represents a hydrogen atom, or an alkyl group having 1 to 20 carbon atoms, an aryl group having 6 to 20 carbon atoms or an aralkyl group having 7 to 20 carbon atoms.

The timing for reacting the compound having both a polymerizable alkenyl group and a low-polymerizable alkenyl group within one molecule is not limited, although especially in a living radical polymerization, when a rubber-like property is anticipated, it is preferred to allow the reaction of the compound as the second monomer to be carried out towards the end of the polymerization reaction or after the reaction of the first monomer.

(A-b) A method in which when synthesizing a poly(meth)acrylate by living radical polymerization, a compound having at least two low-polymerizable alkenyl groups such as for example 1,5-hexadiene, 1,7-octadiene, and 1,9-decadiene is allowed to react towards the end of the polymerization reaction or after the reaction of the first monomer.

(A-c) A method in which a poly(meth)acrylate having at least one highly reactive carbon-halogen bond is reacted with various organic metal compounds having an alkenyl group including for example an organic tin such as allyltributyltin, allyltrioctyl tin and the halogen is substituted.

(A-d) A method in which a poly(meth)acrylate having at least one highly reactive carbon-halogen bond is reacted with a stabilized carbanion having an alkenyl group represented by the general formula (10), and the halogen is substituted:

M⁺C⁻(R¹⁸)(R¹⁹)-R²⁰-C(R¹⁷)=CH₂ (10)

wherein R¹⁷ is as described above, R¹⁸ and R¹⁹ are both electron withdrawing groups which stabilize the carbanion C⁻, or one is the electron withdrawing group and the other is a hydrogen atom or an alkyl group having 1 to 10 carbon atoms, or a phenyl group, R²⁰ is a direct bond, or a divalent organic group having 1 to 10 carbon atoms which may comprise one or more ether bond(s), and M⁺ is an alkali metal ion or a quaternary ammonium ion.

Particularly preferred electron withdrawing groups of R¹⁸ and R¹⁹ are those having the structures -CO₂R, - C(O)R and -CN.

(A-e) A method in which a metal elemental such as zinc or an organic metal compound is allowed to act on a poly(meth)acrylate having at least one highly reactive carbon-halogen bond to prepare an enolate anion, and then reacting with an electrophilic compound having an alkenyl group such as an alkenyl group-containing compound having a leaving group including a halogen or an acetyl group, a carbonyl compound having an alkenyl group, an isocyanate compound having an alkenyl group, and an acid halide having an alkenyl group.

(A-f) A method in which a poly(meth)acrylate having at least one highly reactive carbon-halogen bond is reacted with an oxyanion or a carboxylate anion having an alkenyl group represented by for example the general formula (11) or (12), and the halogen is substituted:

H₂C=C(R¹⁷)-R²¹-O-M⁺ (11)

wherein R¹⁷ and M⁺ are as described above, and R²¹ is a divalent organic group having 1 to 20 carbon atoms which may comprise one or more ether bond(s);

H₂C=C(R¹⁷)-R²²-C(O)O-M⁺ (12)

wherein R¹⁷ and M⁺ are as described above, and R²² is a direct bond, or a divalent organic group having 1 to 20 carbon atoms which may comprise one or more ether bond(s).

The method for synthesizing the aforementioned poly(meth)acrylate having at least one highly reactive carbon-halogen bond includes, but is not limited to, atom transfer radical polymerization using the above organic halide etc. as the initiator and a transition metal complex as the catalyst.

Furthermore, the poly(meth)acrylate having at least one alkenyl group can be obtained from the poly(meth)acrylate having at least one hydroxyl group, using the methods exemplified below. These include, but are not limited to, for example:
(A-g) A method of allowing a base such as sodium methoxide to act on the hydroxyl group of the poly(meth)acrylate having at least one hydroxyl group, followed by reaction with an alkenyl group-containing halide such as allyl chloride.
(A-h) A method of allowing the hydroxyl group of the poly(meth)acrylate having at least one hydroxyl group to react with an alkenyl group-containing isocyanate compound such as an allyl isocyanate.
(A-i) A method of allowing the hydroxyl group of the poly(meth)acrylate having at least one hydroxyl group to react with an alkenyl group-containing acid halide such as (meth)acrylyl chloride in the presence of a base such as pyridine.
(A-j) A method of allowing the hydroxyl group of the poly(meth)acrylate having at least one hydroxyl group to react with an alkenyl group-containing carboxylic acid such as acrylic acid in the presence of an acid catalyst.

According to the present invention, when the halogen does not directly participate in the method for introducing an alkenyl group such as (A-a) and (A-b), it is preferred to synthesize the poly(meth)acrylate using living radical polymerization. Method (A-b) is further preferred because it can be controlled more easily.

When an alkenyl group is introduced by converting the halogen of the poly(meth)acrylate having at least one highly reactive carbon-halogen bond, it is preferred to use the poly(meth)acrylate having at least one highly reactive carbon-halogen bond at the terminal, obtained by radical polymerizing a vinyl monomer (atom transfer radical polymerization) using an organic halide having at least one highly reactive carbon-halogen bond or a halogenated sulfonyl compound as the initiator and a transition metal complex as the catalyst. Method (A-f) is further preferred because it can be controlled more easily.

A hydrosilane compound having a crosslinkable silyl group is not particularly limited. Representative examples include a compound represented by the general formula (13):

H-[Si(R⁹)_{2-b}(Y)_{b}O]ₘ-Si(R¹⁰)₃₋ₐ(Y)ₐ (13)

wherein R⁹ and R¹⁰ both represent an alkyl group having 1 to 20 carbon atoms, an aryl group having 6 to 20 carbon atoms, an aralkyl group having 7 to 20 carbon atoms, or represent a triorganosiloxy group (R')₃SiO-, wherein R' is a monovalent hydrocarbon group having 1 to 20 carbon atoms, in which the three R' may be the same or different, when two or more of R⁹ or R¹⁰ are present, these may be the same or different, Y is a hydroxyl group or a hydrolyzable group, in which when two or more of Y exist, these may be the same or different, a is 0, 1, 2, or 3, b is 0, 1, or 2, and m is an integer from 0 to 19, provided that a + mb ≥ 1.

Among these hydrosilane compounds, a compound having a crosslinkable group represented by the general formula (14) :

H-Si(R¹⁰)₃₋ₐ(Y)ₐ (14)

wherein R¹⁰, Y, a are as described above;
is preferred due to its availability.

When adding the above hydrosilane compound having a crosslinkable silyl group to an alkenyl group, a transition metal catalyst is typically used. A transition metal catalyst includes, for example, platinum elemental, those where solid platinum is scattered onto a support such as alumina, silica, and carbon black, chloroplatinic acid or chloroplatinic acid complex with for example an alcohol, aldehyde, or ketone, platinum-olefin complex, and platinum(0)-divinyltetramethyldisiloxane. Examples of the catalyst other than platinum compounds include, for example, RhCl(PPh₃)₃, RhCl₃, RuCl₃, IrCl₃, FeCl₃, AlCl₃, PdCl₂•H₂O, NiCl₂, and TiCl₄.

Examples of the method for producing the poly(meth)acrylate having at least one hydroxyl group used in methods (B) and (A-g) to (A-j) include, but is not limited to the following.

(B-a) A method in which when synthesizing a poly(meth)acrylate by radical polymerization, a compound having both an polymerizable alkenyl group and a hydroxyl group within one molecule, such as a compound represented by the following general formula (15) allowed to be reacted as the second monomer:

H₂C=C(R¹⁴)-R¹⁵-R¹⁶-OH (15)

wherein R¹⁴, R¹⁵, R¹⁶ are as described above.

The timing for reacting the compound having both an polymerizable alkenyl group and a hydroxyl group within one molecule is not limited, although especially in living radical polymerization, when a rubber-like property is anticipated, it is preferred to allow the reaction of the compound as the second monomer to be carried out towards the end of the polymerization reaction or after the reaction of the first monomer.

(B-b) A method in which when synthesizing a poly(meth)acrylate by living radical polymerization, an alkenyl alcohol such as for example 10-undecenol, 5-hexenol, and allyl alcohol is allowed to react towards the end of the polymerization reaction or after the reaction of the first monomer.

(B-c) A method in which a large amount of a hydroxyl group-containing chain transfer agent such as a hydroxyl group-containing polysulfide is used for radical polymerizing a vinyl monomer as shown in for example Japanese Patent Laid-Open No. 5-262808.

(B-d) A method for radical polymerizing a vinyl monomer using hydrogen peroxide or a hydroxyl group-containing initiator as shown in for example Japanese Patent Laid-Open No. 6-239912 and Japanese Patent Laid-Open No. 8-283310.

(B-e) A method for radical polymerizing a vinyl monomer using an excess amount of an alcohol as shown in for example Japanese Patent Laid-Open No. 6-116312.

(B-f) A method of introducing a hydroxyl group at the terminal, in which the halogen of the poly(meth)acrylate having at least one highly reactive carbon-halogen bond is hydrolyzed or reacted with a compound containing a hydroxyl group, as shown in the method of for example Japanese Patent Laid-Open No. 4-132706.

(B-g) A method in which a poly(meth)acrylate having at least one highly reactive carbon-halogen bond is reacted with a stabilized carbanion having a hydroxyl group represented by the general formula (16):

M⁺C⁻(R¹⁸)(R¹⁹)-R²⁰-OH (16)

wherein R¹⁸, R¹⁹, and R²⁰ are as described above, and the halogen is substituted.

Particularly preferred electron withdrawing groups of R¹⁸ and R¹⁹ are those having the structures -CO₂R, - C(O)R and -CN.

(B-h) A method in which a metal elemental such as zinc or an organic metal compound is allowed to act on a poly(meth)acrylate having at least one highly reactive carbon-halogen bond to prepare an enolate anion, and then reacting with an aldehyde or ketone.

(B-i) A method in which a poly(meth)acrylate having at least one highly reactive carbon-halogen bond is reacted with an oxyanion or a carboxylate anion having a hydroxyl group represented by for example the general formula (17) or (18), and the halogen is substituted:

HO-R²¹-O⁻M⁺ (17)

wherein R²¹ and M⁺ are as described above;

HO-R²²-C(O)O⁻M⁺ (18)

wherein R²² and M⁺ are as described above.

(B-j) A method in which when synthesizing a poly(meth)acrylate by living radical polymerization, a compound having a low-polymerizable alkenyl group and a hydroxyl group in one molecule allowed to be reacted as the second monomer towards the end of the polymerization reaction or after the reaction of the first monomer.

Examples of such a compound include, but are not particularly limited to, a compound represented by the general formula (19) :

H₂C=C(R¹⁴)-R²¹-OH (19)

wherein R¹⁴ and R²¹ are as described above.

The compound represented by the above general formula (19) is not particularly limited. An alkenyl alcohol such as 10-undecenol, 5-hexenol, and an allyl alcohol are preferred due to their availability.

According to the present invention, when the halogen does not directly participate in the methods of introducing a hydroxyl group such as methods (B-a) to (Be) and (B-j), it is preferred to synthesize the poly(meth)acrylate using living radical polymerization. Method (B-b) is further preferred because it can be controlled more easily.

When a hydroxyl group is introduced by converting the halogen of the poly(meth)acrylate having at least one highly reactive carbon-halogen bond, it is preferred to use a poly(meth)acrylate having at least one highly reactive carbon-halogen bond at the terminal, obtained by radical polymerizing a vinyl monomer (atom transfer radical polymerization) using an organic halide or a halogenated sulfonyl compound as the initiator and a transition metal complex as the catalyst. Method (B-i) is further preferred because it can be controlled more easily.

Examples of the compound having a group that may react with a hydroxyl group such as a compound having both a crosslinkable silyl group and an isocyanate group within one molecule include γ-isocyanatepropyltrimethoxysilane, γ-isocyanatepropylmethyldimethoxysilane, and γ-isocyanatepropyltriethoxysilane. A commonly known catalyst of urethane reaction can be used as necessary.

Examples of the compound having both a polymerizable alkenyl group and a crosslinkable silyl group within one molecule used in method (C) include, for example, those represented by the following general formula (20) such as trimethoxysilylpropyl (meth)acrylate and methyldimethoxysilylpropyl (meth)acrylate:

H₂C=C(R¹⁴)-R¹⁵-R²³-[Si(R⁹)_{2-b}(Y)_{b}O]ₘ-Si(R¹⁰)₃₋ₐ(Y)ₐ (20)

wherein R⁹, R¹⁰, R¹⁹, R¹⁵, Y, a, b, and m are as described above, and R²³ is a direct bond, or a divalent organic group having 1 to 20 carbon atoms which may comprise one or more ether bond(s).

The timing for reacting the compound having both a polymerizable alkenyl group and a crosslinkable silyl group within one molecule is not limited, although especially in a living radical polymerization, when a rubber-like property is anticipated, it is preferred to allow the reaction of the compound as the second monomer to be carried out towards the end of the polymerization reaction or after the reaction of the first monomer.

Examples of the chain transfer agent having a crosslinkable silyl group used in the chain transfer agent method (D) include, for example, a mercaptan having a crosslinkable silyl group or a hydrosilane having a crosslinkable silyl group shown in Japanese Patent Publication No. 3-14068 and Japanese Patent Publication No. 4-55444.

A method for synthesizing the aforementioned poly(meth)acrylate having at least one highly reactive carbon-halogen bond used in method (E) includes, but is not limited to, atom transfer radical polymerization using the above organic halide etc. as the initiator and a transition metal complex as the catalyst. Examples of the compound having both a crosslinkable silyl group and a stabilized carbanion within one molecule include those represented by the general formula (21):

M⁺C⁻(R¹⁸)(R¹⁹)-R²⁴-C(H)(R²⁵)-CH₂-[Si(R⁹)_{2-b}(Y)_{b}O]ₘ-Si(R¹⁰)₃₋ₐ(Y)ₐ (21)

wherein R⁹, R¹⁰, R¹⁸, R¹⁹, Y, a, b, and m are as described above, R²⁴ is a direct bond, or a divalent organic group having 1 to 10 carbon atoms which may comprise one or more ether bond(s), R²⁵ is a hydrogen atom, or an alkyl group having 1 to 10 carbon atoms, an aryl group having 6 to 10 carbon atoms or an aralkyl group having 7 to 10 carbon atoms.

Particularly preferred electron withdrawing groups of R¹⁸ and R¹⁹ are those having the structures -CO₂R, - C(O)R and -CN.

### Epoxy Group

Although it is not limited, a poly(meth)acrylate having a reactive functional group at the terminal according to the present invention is produced by the following steps of:
(1) producing a poly(meth)acrylate by polymerizing a vinyl monomer by living radical polymerization;
(2) followed by reacting a compound having both a reactive functional group and an ethylenically unsaturated group.

Moreover, in atom transfer radical polymerization, a method can be used in which an allyl alcohol is allowed to react towards the end of polymerization, and then forms an epoxy ring using hydroxyl and halogen groups.

### Amino Group

An example of a method for producing a poly(meth)acrylate having at least one amino group in the main chain terminal includes the steps of:
(1) producing a poly(meth)acrylate having at least one halogen group at the main chain terminal, and
(2) converting the terminal halogen to a substituent having an amino group using an amino group-containing compound.

Examples of the substituent having an amino group include, but are not particularly limited to, the group represented by the general formula (22):

-O-R²⁶-NR¹²₂ (22)

wherein R²⁶ represents a divalent organic group having 1 to 20 carbon atoms which may comprise one or more ether or ester bond(s), R¹² is a hydrogen atom or a monovalent organic group having 1 to 20 carbon atoms, and the two R¹² may be the same or different from each other, or may be linked to each other at the other terminal to form a cyclic structure.

In the above general formula (22), R²⁶ is a divalent organic group having 1 to 20 carbon atoms which may comprise one or more ether or ester bond(s), for example an alkylene group having 1 to 20 carbon atoms, an arylene group having 6 to 20 carbon atoms, and an aralkylene group having 7 to 20 carbon atoms, but is preferably,

-C₆H₄-R²⁷-

wherein C₆H₄ represents a phenylene group, and R²⁷ represents a direct bond, or a divalent organic group having 1 to 14 carbon atoms which may comprise one or more ether or ester bond(s);
or

-C(O)-R²⁸-

wherein R²⁸ represents a direct bond, or a divalent organic group having 1 to 19 carbon atoms which may comprise one or more ether or ester bond(s).

An amino group can be introduced into a polymer terminal by converting the terminal halogen of a poly(meth)acrylate. Although it is not particularly limited, a preferred method of substitution is nucleophilic substitution reaction using an amino group-containing compound as a nucleophilic reagent because the reaction can be controlled easily. Examples of such a nucleophilic reagent include a compound having both a hydroxyl group and an amino group represented by the general formula (23):

HO-R²⁶-NR¹²₂ (23)

wherein R²⁶ represents a divalent organic group having 1 to 20 carbon atoms which may comprise one or more ether or ester bond(s), R¹² is a hydrogen atom or a monovalent organic group having 1 to 20 carbon atoms, and the two R¹² may be the same or different from each other, or may be linked to each other at the other terminal to form a cyclic structure.

In the above general formula (23), R²⁶ is a divalent organic group having 1 to 20 carbon atoms which may comprise one or more ether or ester bond(s), for example an alkylene group having 1 to 20 carbon atoms, an arylene group having 6 to 20 carbon atoms, and an aralkylene group having 7 to 20 carbon atoms. Among these compounds having both a hydroxyl group and an amino group, those in which R²⁶ is an aminophenol of the following formula:

-C₆H₄-R²⁷-

wherein C₆H₄ represents a phenylene group, and R²⁷ represents a direct bond, or a divalent organic group having 1 to 14 carbon atoms which may comprise one or more ether or ester bond(s);
or an amino acid of the following formula:

-C(O)-R²⁸-

wherein R²⁸ is a direct bond, or a divalent organic group having 1 to 19 carbon atoms which may comprise one or more ether or ester bond(s);
are preferred.

Specific examples of the compound include ethanolamine; o, m, p-aminophenol; o, m, p-NH₂-C₆H₄-CO₂H; glycine, alanine, and aminobutanoic acid.

A compound having both an amino group and an oxyanion can also be used as the nucleophilic reagent. Examples of these compounds include, but are not particularly limited to, a compound represented by the general formula (24):

M⁺O⁻-R²⁶-NR¹²₂ (24)

wherein R²⁶ represents a divalent organic group having 1 to 20 carbon atoms which may comprise one or more ether or ester bond(s), R¹² is a hydrogen atom or a monovalent organic group having 1 to 20 carbon atoms, the two R¹² may be the same or different from each other, or may be linked to each other at the other terminal to form a cyclic structure, and M⁺ represents an alkali metal ion or a quaternary ammonium ion.

In the above general formula (24), M⁺ is a counter cation to the oxyanion, and represents an alkali metal ion or a quaternary ammonium ion. The above alkali metal ion includes lithium, sodium, and potassium ions, preferably sodium or potassium ion. The above quaternary ammonium ion includes, for example, tetramethyl ammonium ion, tetraethyl ammonium ion, trimethylbenzyl ammonium ion, trimethyl dodecyl ammonium ion, tetrabutyl ammonium ion, and dimethylpiperidinium ion.

Among the above compounds having both an amino group and an oxyanion, a salt of an aminophenol represented by the general formula (25), or a salt of an amino acid represented by the general formula (26) are preferred, because the substitution reaction can be controlled easily and they are readily available:

M⁺O⁻-C₆H₄-R²⁷-NR¹²₂ (25)

m+O⁻-C(O)-R²⁸-NR¹²₂ (26)

wherein C₆H₄ represents a phenylene group, R²⁷ represents a direct bond, or a divalent organic group having 1 to 14 carbon atoms which may comprise one or more ether or ester bond(s), R²⁸ represents a direct bond, or a divalent organic group having 1 to 19 carbon atoms which may comprise one or more ether or ester bond(s), R¹² is a hydrogen atom or a monovalent organic group having 1 to 20 carbon atoms, the two R¹² may be the same or different from each other, or may be linked to each other at the other terminal to form a cyclic structure, and M⁺ is as described above.

A compound having an oxyanion represented by the general formulae (24) to (26) can be easily obtained by reacting a compound represented by the general formula (23) with a basic compound.

Various compounds can be used as the basic compound. Examples include sodium methoxide, potassium methoxide, lithium methoxide, sodium ethoxide, potassium ethoxide, lithium ethoxide, sodium tert-butoxide, potassium tert-butoxide, sodium carbonate, potassium carbonate, lithium carbonate, sodium bicarbonate, sodium hydroxide, potassium hydroxide, sodium hydride, potassium hydride, methyllithium, ethyllithium, n-butyllithium, tert-butyllithium, lithium diisopropylamide, and lithium hexamethyldisilazide. The amount of the above base used is not particularly limited, but is from 0.5 to 5 equivalents, preferably from 0.8 to 1.2 equivalents relative to the above precursor.

Examples of the solvent used when reacting the above precursor and the above base include a hydrocarbon solvent such as benzene and toluene; an ether solvent such as diethyl ether and tetrahydrofuran; a halogenated hydrocarbon solvent such as methylene chloride and chloroform; a ketone solvent such as acetone, methylethyl ketone, and methylisobutyl ketone; an alcohol solvent such as methanol, ethanol, propanol, isopropanol, n-butyl alcohol, and tert-butyl alcohol; a nitrile solvent such as acetonitrile, propionitrile, and benzonitrile; an ester solvent such as ethyl acetate and butyl acetate; a carbonate solvent such as ethylene carbonate and propylene carbonate; an amide solvent such as dimethylformamide and dimethylacetamide; a sulfoxide solvent such as dimethyl sulfoxide. These may be used alone, or two or more may be blended and used.

A compound having an oxyanion wherein M⁺ is a quaternary ammonium ion can be obtained by first preparing a compound wherein M⁺ is an alkali metal ion, and then allowing a quaternary ammonium halide to act on this. Examples of the above quaternary ammonium halide include tetramethylammonium halide, tetraethylammonium halide, trimethylbenzylammonium halide, trimethyldodecylammonium halide, and tetrabutylammonium halide.

Various solvents may be used in the substitution reaction of the halogen at the polymer terminal. Examples include a hydrocarbon solvent such as benzene and toluene; an ether solvent such as diethyl ether and tetrahydrofuran; a halogenated hydrocarbon solvent such as methylene chloride and chloroform; a ketone solvent such as acetone, methylethyl ketone, and methylisobutyl ketone; an alcohol solvent such as methanol, ethanol, propanol, isopropanol, n-butyl alcohol, and tert-butyl alcohol; a nitrile solvent such as acetonitrile, propionitrile, and benzonitrile; an ester solvent such as ethyl acetate and butyl acetate; a carbonate solvent such as ethylene carbonate and propylene carbonate; an amide solvent such as dimethylformamide and dimethylacetamide; a sulfoxide solvent such as dimethyl sulfoxide. These may be used alone, or two or more may be blended and used.

The reaction temperature may be from 0 to 150°C. The amount of the amino group-containing compound is not particularly limited, but is from 1 to 5 equivalents, preferably from 1 to 1.2 equivalents relative to the halogen at the polymer terminal.

A basic compound may be added to the reaction mixture to accelerate nucleophilic substitution reaction. Examples of such a basic compound include those previously described, as well as an alkylamine such as trimethylamine, triethylamine and tributylamine; a polyamine such as tetramethylethylenediamine and pentamethyldiethylenetriamine; and a pyridine compound such as pyridine and picoline.

If the amino group of the amino group-containing compound used in the nucleophilic substitution reaction affects the nucleophilic substitution reaction, it is preferably protected with a suitable substituent. Examples of such a substituent include a benzyloxycarbonyl group, a tert-butoxycarbonyl group, and a 9-fluorenylmethoxycarbonyl group.

Another method that can be mentioned is substituting the halogen terminal of the poly(meth)acrylate with an azide anion, followed by reduction with for example LAH.

### Group Having a Polymerizable Carbon-Carbon Double Bond

A method for introducing a group having a polymerizable carbon-carbon double bond into the polymer (I) of the present invention is not limited. Examples include the following methods.
(i) A method in which the compound is produced by substituting the halogen group of the poly(meth)acrylate with a compound having a radical polymerizable carbon-carbon double bond. A specific example is a method in which a poly(meth)acrylate having the structure represented by the general formula (27) is reacted with a compound represented by the general formula (28):

   -CR²⁹R³⁰X (27)

   wherein R²⁹ and R³⁰ represent groups bound to an ethylenically unsaturated group of a vinyl monomer, and X represents chlorine, bromine, or iodine;

   M⁺⁻OC (O) C (R¹³)=CH₂ (28)

   wherein R¹³ represents a hydrogen atom, or an organic group having 1 to 20 carbon atoms, and M⁺ represents an alkali metal or a quaternary ammonium ion.
(ii) A method in which a poly(meth)acrylate having a hydroxyl group is reacted with a compound represented by the general formula (29):

   XC(O)C(R¹³)=CH₂ (29)

   wherein R¹³ represents a hydrogen atom, or an organic group having 1 to 20 carbon atoms, and X represents chlorine, bromine, or a hydroxyl group.
(iii) A method in which a poly(meth)acrylate having a hydroxyl group is reacted with a diisocyanate compound, and the remaining isocyanate groups are reacted with a compound represented by the general formula (30):

   HO-R³¹-OC(O)C(R¹³)=CH₂ (30)

   wherein R¹³ represents a hydrogen atom, or an organic group having 1 to 20 carbon atoms, and R³¹ represents a divalent organic group having 2 to 20 carbon atoms.

Each of these methods will be described in detail below.

The above method (i) will be described.
(i) A method in which a poly(meth)acrylate having the terminal structure represented by the general formula (27) is reacted with a compound represented by the general formula (28):

   -CR²⁹R³⁰X (27)

   wherein R²⁹ and R³⁰ represent groups bound to an ethylenically unsaturated group of a vinyl monomer, and X represents chlorine, bromine, or iodine;

   M⁺⁻OC (O) C (R¹³) =CH₂ (28)

   wherein R¹³ represents a hydrogen atom, or an organic group having 1 to 20 carbon atoms, and M⁺ represents an alkali metal or a quaternary ammonium ion.
   The poly(meth)acrylate having the terminal structure represented by the general formula (27) is produced either by the aforementioned method of polymerizing a vinyl monomer using an organic halide or a halogenated sulfonyl compound as the initiator and a transition metal complex as the catalyst, or by the method of polymerizing a vinyl monomer using a halogen compound as the chain transfer agent, preferably by the former.
   The compound represented by the general formula (28) is not particularly limited. Specific examples of R¹³ include -H, -CH₃, -CH₂CH₃, -(CH₂)ₙCH₃, wherein n represents an integer from 2 to 19, -C₆H₅, -CH₂OH, and -CN, preferably -H and -CH₃. M⁺ is a counter cation to the oxyanion. Types of M⁺ include an alkali metal ion, in particular lithium, sodium, potassium, and quaternary ammonium ions. Quaternary ammonium ion includes tetramethyl ammonium, tetraethyl ammonium, tetrabenzyl ammonium, trimethyl dodecyl ammonium, tetrabutyl ammonium and dimethylpiperidinium ions, preferably sodium and potassium ions. The amount of the oxyanion of the general formula (28) used is preferably from 1 to 5 equivalents, further preferably from 1.0 to 1.2 equivalents, relative to the halogen groups of the general formula (27). A preferred solvent in which to carry out this reaction is a polar solvent since this is a nucleophilic substitution reaction, although this is not particularly limited. Examples of those used include tetrahydrofuran, dioxane, diethyl ether, acetone, dimethyl sulfoxide, dimethylformamide, dimethylacetamide, hexamethyl phosphoric triamide, and acetonitrile. The temperature at which the reaction is carried out is not limited, although it is generally from 0 to 150°C. When the polymerizable terminal group is to be retained, it is preferably carried out at from room temperature to 100°C.
   The above method (ii) will be described.
(ii) A method in which a poly(meth)acrylate having a hydroxyl group is reacted with a compound represented by the general formula (29):

   XC(O)C(R¹³)=CH₂ (29)

   wherein R¹³ represents a hydrogen atom, or an organic group having 1 to 20 carbon atoms, and X represents chlorine, bromine, or a hydroxyl group.
   The compound represented by the general formula (29) is not particularly limited. Specific examples of R¹³ include -H, -CH₃, -CH₂CH₃, -(CH₂)ₙCH₃, wherein n represents an integer from 2 to 19, -C₆H₅, -CH₂OH, and -CN, preferably -H and -CH₃.
   A poly(meth)acrylate having a hydroxyl group at the terminal suitable for the present invention is provided by the aforementioned method of polymerizing a vinyl monomer using an organic halide or a halogenated sulfonyl compound as the initiator and a transition metal complex as the catalyst, or by the method of polymerizing a vinyl monomer using a compound having a hydroxyl group as the chain transfer agent, preferably by the former. A method of producing a poly(meth)acrylate having a hydroxyl group by these methods is not limited. Examples include the following methods.
   (a) A method of synthesizing a poly(meth)acrylate by living radical polymerization, in which a compound having both of polymerizable alkenyl and hydroxyl groups in one molecule such as those represented by the following general formula (31) is allowed to be reacted as the second monomer:

      H₂C=C(R³²)-R³³-R³⁴-OH (31)

      wherein R³² is an organic group having 1 to 20 carbon atoms, preferably a hydrogen atom or methyl group, which may be the same or different, R³³ represents -C(O)O-(ester group), or o-, m- or p-phenylene group, R³⁴ represents a direct bond, or a divalent organic group having 1 to 20 carbon atoms which may comprise one or more ether bond(s), when R³³ is an ester group, the compound is a (meth)acrylate compound, and when R³³ is a phenylene group, the compound is a styrene compound.
      The timing for reacting a compound having both of polymerizable alkenyl and hydroxyl groups in one molecule is not limited. Especially when a rubber-like property is anticipated, it is preferred to allow the reaction of the compound as the second monomer to be carried out towards the end of the polymerization reaction or after the reaction of the first monomer.
   (b) A method of synthesizing a poly(meth)acrylate by living radical polymerization, in which a compound having a low-polymerizable alkenyl group and a hydroxyl group in one molecule is allowed to be reacted as the second monomer towards the end of the polymerization reaction or after the reaction of the first monomer.
      These compounds are not particularly limited. Examples include a compound represented by the general formula (32):

      H2C=C (R³²) -R³⁵-OH (32)

      wherein R³² is as described above, and R³⁵ represents a divalent organic group having 1 to 20 carbon atoms which may comprise one or more ether bond(s).
      The compound represented by the above general formula (32) is not particularly limited. An alkenyl alcohol such as 10-undecenol, 5-hexenol, and an allyl alcohol are preferred due to their availability.
   (c) A method of introducing a hydroxyl group at the terminal, in which the halogen from a poly(meth)acrylate having at least one carbon-halogen bond represented by the general formula (27) obtainable by atom transfer radical polymerization is hydrolyzed or reacted with a compound containing a hydroxyl group, using the method as disclosed in for example Japanese Patent Laid-Open No. 4-132706.
   (d) A method of substituting a halogen by reacting a poly(meth)acrylate having at least one carbon-halogen bond represented by the general formula (27) obtainable by atom transfer radical polymerization with a stabilized carbanion having a hydroxyl group such as those represented by the general formula (33):

      M⁺C⁻(R³⁶) (R³⁷)-R³⁵-OH (33)

      wherein R³⁵ is as described above, R³⁶ and R³⁷ are both electron withdrawing groups which stabilizes the carbanion C⁻, or one is the above electron withdrawing group and the other is a hydrogen atom, or an alkyl group having 1 to 10 carbon atoms or a phenyl group, examples of the electron withdrawing group of R³⁶ and R³⁷ include -CO₂R (ester group), -C (O) R (keto group), -CON(R₂) (amide group), -COSR (thio ester group), -CN (nitrile group), and -NO₂ (nitro group), substituent R is an alkyl group having 1 to 20 carbon atoms, an aryl group having 6 to 20 carbon atoms or an aralkyl group having 7 to 20 carbon atoms, preferably an alkyl group having 1 to 10 carbon atoms or a phenyl group, particularly preferred R³⁶ and R³⁷ are -CO₂R -C(O)R and -CN.
   (e) A method in which a metal elemental such as zinc or an organic metal compound is allowed to be acted on a poly(meth)acrylate having at least one carbon-halogen bond represented by the general formula (27) obtainable by atom transfer radical polymerization to prepare an enolate anion, and then reacting with an aldehyde or ketone.
   (f) A method of substituting a halogen with a substituent comprising a hydroxyl group, in which a halogen at the polymer terminal, preferably a poly(meth)acrylate having at least one halogen represented by the general formula (27) is reacted with a hydroxyl group-containing oxyanion represented by for example the following general formula (34) or with a hydroxyl group-containing carboxylate anion represented by for example the following general formula (35):

      HO-R³⁵-O⁻M⁺ (34)

      wherein R³⁵ and M⁺ are as described above;

      HO-R³⁵-C (O) O⁻M⁺ (35)

      wherein R³⁵ and M⁺ are as described above.

   According to the present invention, when a halogen is not directly involved in the method of introducing a hydroxyl group, for example as in methods (a) and (b), method (b) is further preferred because it can be controlled more easily.
   In addition, as in methods (c) to (f), when a hydroxyl group is introduced by converting the halogen from a poly(meth)acrylate having at least one carbon-halogen bond, method (f) is further preferred because it can be controlled more easily.
   The above method (iii) will be described.
(iii) A method in which a poly(meth)acrylate having a hydroxyl group is reacted with a diisocyanate compound, and the remaining isocyanate groups are reacted with a compound represented by the general formula (36):

   HO-R³¹-OC (O) C (R¹³)=CH₂ (36)

   wherein R¹³ represents a hydrogen atom, or an organic group having 1 to 20 carbon atoms, and R³¹ represents a divalent organic group having 2 to 20 carbon atoms.

The compound represented by the general formula (36) is not particularly limited. Specific examples of R¹³ include -H, -CH₃, -CH₂CH₃, -(CH₂)ₙCH₃, wherein n represents an integer from 2 to 19), -C₆H₅, -CH₂OH, and -CN, preferably -H and -CH₃. A particular compound includes 2-hydroxypropyl methacrylate.

The poly(meth)acrylate having a hydroxyl group at the terminal is as described above.

The diisocyanate compound is not particularly limited. Any of those well known in the art can be used, including, for example, an isocyanate compound such as tolylene diisocyanate, 4,4'-diphenylmethane diisocyanate, hexamethyl diisocyanate, xylene diisocyanate, metaxylene diisocyanate, 1,5-naphthalene diisocyanate, hydrogenated diphenylmethane diisocyanate, hydrogenated tolylene diisocyanate, hydrogenated xylene diisocyanate, and isophorone diisocyanate. These may be used alone, or two or more can be used in combination. A block isocyanate may also be used.

In order to exploit a more superior weather resistance, it is preferred to use for example a diisocyanate compound without any aromatic ring such as hexamethylene diisocyanate and hydrogenated diphenylmethane diisocyanate.

### <<Surface Tack Modifier (II)>>

In order to keep the curable composition (formulation) in storage before being cured for a long time without substantial separation, it is preferred that a surface tack modifier (II) is homogeneously dispersed in the curable composition as a solid while in storage at room temperature. It is further desirable that upon heating and curing, the surface tack modifier melts and seeps out to the surface of the cured product to modify surface tack. For this purpose, according to the present invention, a surface tack modifier (II) having a melting point of between 30°C and 200°C at 1 atm is used. Those having a melting point of between 40°C and 150°C at 1 atm is further preferred in view of for example workability.

The value of the melting point is a value measured according to JIS K 0064. Specifically, the sample is filled into a capillary tube, melted in a heating liquid, and the temperature measured when the sample is melted within the capillary tube and no solid can be visually recognized is determined to be the melting point.

The amount of the surface tack modifier (II) used is from 0.1 to 10 parts by weight relative to 100 parts by weight of the poly(meth)acrylate (I). When the amount is less than 0.1 parts by weight, the effect of improving tackiness will be insufficient, and when the amount is greater than 10 parts by weight, a problem such as impaired mechanical properties occurs.

The surface tack modifier (II) is selected from the group consisting of: an aliphatic hydrocarbon compound, an aliphatic carboxylic acid, an aliphatic alcohol, an aliphatic carboxylic acid ester obtained from an aliphatic carboxylic acid and an aliphatic alcohol having 13 or more carbon atoms, a natural wax, an aliphatic carboxylic acid amide, polyethylene and polypropylene.

Preferred examples of the aliphatic hydrocarbon compound include, but are not limited to, a petroleum wax stated in JIS K 2235. Specifically, it is paraffin wax, which is a solid wax at room temperature that is separated and refined from the distillate oil of distillation under reduced pressure; microcrystalline wax, which is a solid wax at room temperature that is separated and refined from the residual oil or the heavy oil distillate of distillation under reduced pressure; and petrolatum, which is a semi-solid wax at room temperature that is separated and refined from the residual oil of distillation under reduced pressure.

Preferred examples of the aliphatic carboxylic acid include, but are not limited to, an aliphatic carboxylic acid having 10 or more carbon atoms. Specific examples include, but are not limited to, a saturated linear aliphatic carboxylic acid such as capric acid, undecylenic acid, lauric acid, tridecylenic acid, myristic acid, pentadecylenic acid, palmitic acid, margaric acid, stearic acid, nonadecylenic acid, arachidic acid, heneicosanic acid, behenic acid, tricosanic acid, lignoceric acid, pentacosanic acid, cerotic acid, and heptaosanoic acid; an unsaturated aliphatic carboxylic acid having a carbon-carbon double bond such as petroselic acid, elaidic acid, erucic acid, brassidic acid, selacholeic acid, eleostearic acid, and valinarinic acid; and an oxide of the above petroleum waxes.

Preferred examples of the aliphatic alcohol include, but are not limited to, an aliphatic alcohol acid having 13 or more carbon atoms. Specific examples include, but are not limited to, tridecanol, tetradecanol, pentadecanol, hexadecanol, heptadecanol, octadecanol, nonadecanol, eicosanol, docosanol, tetracosanol, hexacosanol, octacosanol, triacontanol, and dotriacontanol.

The aliphatic carboxylic acid ester compound is obtained from an aliphatic carboxylic acid and an aliphatic alcohol having 13 or more carbon atoms. Examples of the aliphatic carboxylic acid include, but are not limited to, a monovalent aliphatic carboxylic acid such as acetic acid; and a polyvalent aliphatic carboxylic acid such as adipic acid. When it is a polyvalent aliphatic carboxylic acid, a partially esterified product thereof may be included. Any of those already exemplified can be suitably used as an aliphatic alcohol having 13 or more carbon atoms. An esterified product of the above petroleum wax is also preferred as an aliphatic carboxylic acid ester. Stearyl stearate are particularly preferred as an aliphatic carboxylic acid ester.

Preferred examples of the natural wax include, but are not limited to, a natural wax selected from the group consisting of carnauba wax, candelilla wax, beeswax, spermaceti wax, privet wax, and montan wax.

Preferred examples of the aliphatic carboxylic acid amide include, but are not limited to, an amide compound (aliphatic carboxylic acid amide) obtained from reacting an aliphatic carboxylic acid having 6 or more carbon atoms with one or more amine selected from the group consisting of ammonia, methylenediamine, 1,2-ethylenediamine, m-xylylenediamine, or p-phenylenediamine. Specific examples include, but are not limited to, a saturated aliphatic carboxylic acid amide such as caproic acid amide, caprylic acid amide, capric acid amide, lauric acid amide, myristic acid amide, palmitic acid amide, and stearic acid amide; an unsaturated aliphatic carboxylic acid amide such as oleic acid amide, eicosenic acid amide, erucic acid amide, linoleic acid amide, and linolenic acid amide; a N,N'-methylene bis amide compound such as N,N'-methylene bis lauric acid amide, N,N'-methylene bis stearic acid amide, and N,N'-methylene bis oleic acid amide; a N,N'-ethylene bis amide compound such as N,N'-ethylene bis lauric acid amide, N,N'-ethylene bis stearic acid amide, and N,N'-ethylene bis oleic acid amide; m-xylylene bis stearic acid amide, and p-phenylene bis stearic acid amide.

As organic polymer polyethylene and polypropylene can be used.

These surface tack modifiers (II) may be used alone, or two or more may be used in combination.

### «Curable Composition»

According to the curable composition of the present invention, a curing catalyst or a curing agent may be necessary. Moreover, various formulating agents may be added depending on the physical property anticipated.

### <Curing Catalyst and Curing Agent>

### Crosslinkable Silyl Group

A polymer having a crosslinkable silyl group is crosslinked and cured by forming a siloxane bond with or without the presence of a conventionally well known various condensation catalysts. The aspects of the cured product that can be produced are in a wide range depending on the molecular weight of the polymer and the main chain skeleton, including a rubber form and a resin form.

Examples of such a condensation catalyst include, for example, a tetravalent tin compound such as dibutyltin dilaurate, dibutyltin diacetate, dibutyltin diethylhexanolate, dibutyltin dioctate, dibutyltin dimethylmalate, dibutyltin diethylmalate, dibutyltin dibutylmalate, dibutyltin diisooctylmalate, dibutyltin ditridecylmalate, dibutyltin dibenzylmalate, dibutyltin maleate, dioctyltin diacetate, dioctyltin distearate

dioctyltin dilaurate, dioctyltin diethylmalate, and dioctyltin diisooctylmalate; a divalent tin compound such as tin 2-ethylhexanoate, tin naphthenate, and tin stearate; a monoalkyltin such as a monobutyltin compound including monobutyltin trisoctoate and monobutyltin triisopropoxide, and monooctyltin; a titanate (meth)acrylate ester such as tetrabutyl titanate and tetrapropyl titanate; an organic aluminum compound such as aluminum trisacetylacetonate, aluminum trisethylacetoacetate, and diisopropoxy aluminum ethyl acetoacetate; a carboxylic acid (such as 2-ethylhexanoic acid, neodecanoic acid, versatic acid, oleic acid, and naphthenic acid) metal salt such as bismuth carboxylate, iron carboxylate, titanium carboxylate, lead carboxylate, vanadium carboxylate, zirconium carboxylate, calcium carboxylate, potassium carboxylate, barium carboxylate, manganese carboxylate, cerium carboxylate, nickel carboxylate, cobalt carboxylate, zinc carboxylate, and aluminum carboxylate, or a reaction product of these with an amine compound such as lauryl amine as described below, and a mixture thereof; a chelate compound such as zirconium tetraacetylacetonate, titanium tetraacetylacetonate; an aliphatic primary amine such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; an aliphatic secondary amine such as dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methylstearylamine, ethylstearylamine, and butylstearylamine; an aliphatic tertiary amine such as triamylamine, trihexylamine, and trioctylamine; an aliphatic unsaturated amine such as triallylamine and oleylamine; an aromatic amine such as lauryl aniline, stearyl aniline, and triphenylamine; and other amines including an amine compound such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo(5,4,0)undecene-7 (DBU), or a salt of these amine compounds and a carboxylic acid; a reaction product of an amine compound with an organic tin compound and a mixture thereof such as a reaction product of laurylamine with tin 2-ethylhexanoate or a mixture thereof; a low molecular weight polyamide resin obtained from an excess amount of a polyamine and a polybasic acid; a reaction product of an excess amount of a polyamine with an epoxy compound; and for example γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(β-aminoethyl)aminopropyltrimethoxysilane, N-(β-aminoethyl)aminopropylmethyldimethoxysilane, N-(β-aminoethyl)aminopropyltriethoxysilane, N-(β-aminoethyl)aminopropylmethyldiethoxysilane, N-(β-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane. In addition, a silanol condensation catalyst such as a silane coupling agent containing an amino group such as a modified derivative of the above, i.e. an amino-modified silyl polymer, a silylated amino polymer, an unsaturated amino silane complex, a phenylamino long chain alkyl silane, and an aminosilylated silicon; as well as well known silanol condensation catalysts such as other acidic catalysts, and basic catalysts can be exemplified.

These catalysts may be used alone, or two or may used in combination. The amount of the condensation catalyst incorporated is preferably from about 0.1 to 20 parts, further preferably from 1 to 10 parts, relative to 100 parts (herein after has the same meaning as parts by weight) of the poly(meth)acrylate having at least one crosslinkable silyl group. When the amount of the silanol condensation catalyst incorporated is lower than this range, the curing rate may become slow, and the curing reaction may not progress sufficiently. On the other hand, when the amount of the silanol condensation catalyst incorporated is greater than this range, localized generation of heat and foaming will occur upon curing and a good cured product may not be obtained, and the pot life will become too short. This is not preferred also in view of workability. Although it is not particularly limited, it is preferred to use a tin curing catalyst to control curing property.

According to the curable composition of the present invention, as with the amine compounds, the above amino group-containing silane coupling agent can be used as a co-catalyst in order to enhance the activity of the condensation catalyst. This amino group-containing silane coupling agent is a compound comprising a group containing a silicon atom bound to a hydrolyzable group (hereinafter referred to as a "hydrolyzable silicon group") and an amino group. Examples include a group previously exemplified as this hydrolyzable group. Methoxy and ethoxy groups e.g. are preferable in view of rate of hydrolysis. The preferred number of hydrolyzable groups is 2 or more, in particular 3 or more.

The amount of these amine compounds incorporated is preferably from about 0.01 to 50 parts by weight, more preferably from 0.1 to 20 parts by weight, relative to 100 parts by weight of the organic polymer of the poly(meth)acrylate (I). When the amount of the amine compound incorporated is less than 0.01 parts by weight, the curing rate may become slow, and the curing reaction may not progress sufficiently. On the other hand, when the amount of the amine compound incorporated is greater than 50 parts by weight, the pot life will become too short. This is not preferred also in view of workability.

These amine compounds may be used alone, or two or more may be blended and used.

In addition, a silicon compound without any amino or silanol groups represented by the following general formula (37) may be added as a co-catalyst:

R⁴⁹ₐSi(OR⁵⁰)₄₋ₐ (37)

wherein R⁴⁹ and R⁵⁰ are each independently a substituted or unsubstituted hydrocarbon group having from 1 to 20 carbon atoms, and a is any one of 0, 1, 2, and 3.

A preferred silicon compound as stated above include, but is not limited to, a compound of the general formula (37) wherein R⁴⁹ is an aryl group having 6 to 20 carbon atoms, such as phenyltrimethoxysilane, phenylmethyldimethoxysilane, phenyldimethylmethoxysilane, diphenyldimethoxysilane, diphenyldiethoxysilane, and triphenylmethoxysilane, because these have a great effect of accelerating the curing reaction of the composition. In particular, diphenyldimethoxysilane or diphenyldiethoxysilane is most preferred because it is low cost and readily available.

The amount of the silicon compound incorporated is preferably from about 0.01 to 20 parts, further preferably from 0.1 to 10 parts, relative to 100 parts of the poly(meth)acrylate. When the amount of the silicon compound incorporated is lower than this range, the effect of accelerating the curing reaction may decrease. On the other hand, when the amount of the silicon compound incorporated is greater than this range, the hardness or tensile strength of the cured product may decrease.

It is also possible to select the type of the curing catalyst and curing agent and the amount added according to the type of Y and the number of a of the poly(meth)acrylate of the present invention represented by the general formulae (1) or (6). It is also possible to control for example curability or the mechanical properties of the present invention according to the objective or application. When Y is an alkoxy group, the reactivity is higher if the number of carbon atoms is lower. When a is higher, it is possible to sufficiently carry out curing with a small amount because the reactivity will be higher.

### Alkenyl Group

Although it is not limited, when an alkenyl group is used for crosslinking, it is preferred that a hydrosilyl group-containing compound is used as a curing agent, and the crosslinking is carried out by a hydrosylating reaction using a hydrosilylating catalyst.

The hydrosilyl group-containing compound is not particularly limited provided that it is a hydrosilyl group-containing compound capable of being cured by crosslinking with a polymer having an alkenyl group. Various hydrosilyl group-containing compounds can be used, including compounds such as a chain polysiloxane represented by the general formula (38) or (39):

R⁵¹₃SiO-[Si(R⁵¹)₂O]ₐ-[Si(H) (R⁵²)O]_{b-}[Si(R⁵²) (R⁵³)O]_{c}-SiR⁵¹₃ (38)

HR⁵¹₂SiO-[Si(R⁵¹)₂O]ₐ-[Si(H) (R⁵²)O]_{b-}[Si(R⁵²) (R⁵³)O]_{c}-SiR⁵¹₂H (39)

wherein R⁵¹ and R⁵² are an alkyl group having 1 to 6 carbon atoms or a phenyl group, R⁵³ is an alkyl group having 1 to 10 carbon atoms or an aralkyl group, and a, b, and c are each an integer that are 0 ≤ a ≤ 100, 2 ≤ b ≤ 100, and 0 ≤ c ≤ 100; and a cyclic siloxane represented by the general formula (40) : 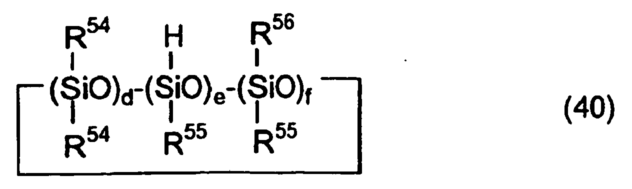 wherein R⁵⁴ and R⁵⁵ are an alkyl group having 1 to 6 carbon atoms or a phenyl group, R⁵⁶ is an alkyl group having 1 to 10 carbon atoms or an aralkyl group, and d, e, and f are each an integer that are 0 ≤ d ≤ 8, 2 ≤ e ≤ 10, and 0 ≤ f ≤ 8, and 3 ≤ d + e + f ≤ 10.

These may be used alone, or two or more may be blended and used. Among these siloxanes, a chain siloxane having a phenyl group represented by the following general formulae (41) and (42):

(CH₃)₃SiO-[Si(H) (CH₃)O]_{g}-[Si(C₆H₅)₂O]ₕ-Si(CH₃)₃ (41)

(CH₃)₃SiO-[Si (H) (CH₃)O]_{g}-[Si(CH₃) {CH₂C(H) (R⁵⁷)C₆H₅}O]ₕ-Si (CH₃)₃ (42)

wherein R⁵⁷ is a hydrogen atom or a methyl group, g and h are each an integer that are 2 ≤ g ≤ 100 and 0 ≤ h ≤ 100, and C₆H₅ is a phenyl group; and a cyclic siloxane represented by the general formulae (43) and (44): 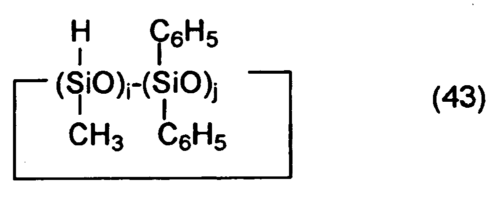 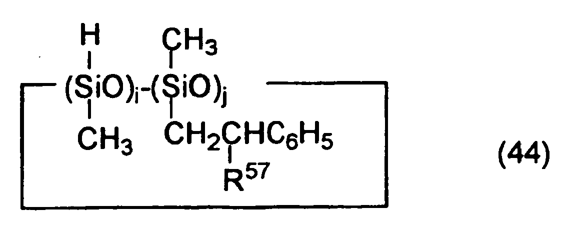 wherein R⁵⁷ is a hydrogen atom or a methyl group, i and j are each an integer that are 2 ≤ i ≤ 10 and 0 ≤ j ≤ 8, and 3 ≤ i + j ≤ 10, and C₆H₅ is a phenyl group, are preferred in view of compatibility with a poly(meth)acrylate.

A compound obtained by allowing addition reaction of a low molecular compound having two or more alkenyl groups in the molecule with a hydrosilyl group-containing compound represented by the general formulae (38) to (44) to be carried out so that a part of the hydrosilyl groups will remain after the reaction, can also be used as the hydrosilyl group-containing compound. Various compounds can be used as the compound having two or more alkenyl groups in the molecule. Examples of the compound include a hydrocarbon compound such as 1,4-pentadiene, 1,5-hexadiene, 1,6-heptadiene, 1,7-octadiene, 1,8-nonadiene, and 1,9-decadiene; an ether compound such as O,O'-diallyl bisphenol-A, and 3,3'-diallyl bisphenol-A; an ester compound such as diallyl phthalate, diallyl isophthalate, triallyl trimeritate, and tetraallyl pyromeritate; a carbonate compound such as diethylene glycoldiallyl carbonate.

The compound can be obtained by slowly adding dropwise the alkenyl group-containing compound as above to an excess amount of the hydrosilyl group-containing compound represented by the above general formulae (38) to (44) in the presence of a hydrosilylating catalyst. Among these compounds, those shown below are preferred in view of the availability of the raw materials, ease of removal of the siloxane used in an excess amount, as well as the compatibility to the polymer component (A): 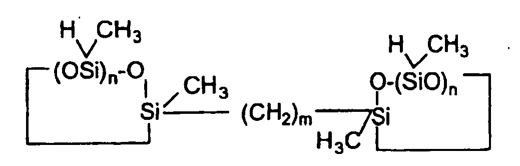 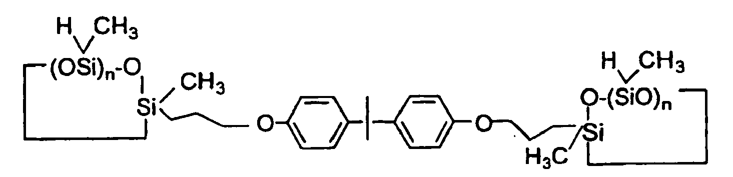 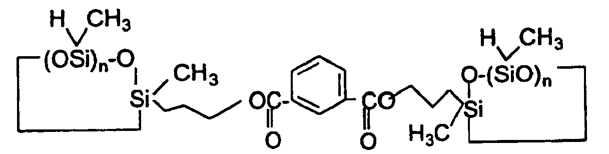 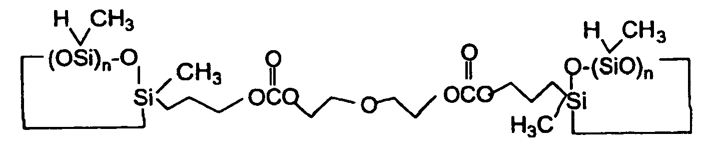 wherein n is an integer from 2 to 4, and m is an integer from 5 to 10.

The polymer and the curing agent can be blended at any ratio. In view of curability, the molar ratio of the alkenyl group and the hydrosilyl group is preferably in the range of from 5 to 0.2, particularly preferably from 2.5 to 0.4. When the molar ratio is 5 or more, only an insufficiently cured product with stickiness and weak strength can be obtained, and when the ratio is lower than 0.2, a large amount of active hydrosilyl groups remains in the cured product after curing, which leads to cracks and void product, and a homogeneous cured product that has strength cannot be obtained.

The curing reaction of the polymer and the curing agent proceeds by blending the 2 components and then heating. In order to allow the reaction to proceed more rapidly, a hydrosilylating catalyst can be added. Examples of such a hydrosilylating catalyst are not particularly limited, and include a radical initiator such as an organic peroxide or an azo compound, and a transition metal catalyst.

Examples of the radical initiator include, but are not particularly limited to, a dialkyl peroxide such as di-t-butyl peroxide, 2,5-dimethyl-2,5-di(t-butylperoxy)hexane, 2,5-dimethyl-2,5-di(t-butylperoxy)-3-hexyne, dicumyl peroxide, t-butylcumyl peroxide, and α,α'-bis(t-butylperoxy)isopropylbenzene; a diacyl peroxide such as benzoyl peroxide, p-chlorobenzoyl peroxide, m-chlorobenzoyl peroxide, 2,4-dichlorobenzoyl peroxide, and lauroyl peroxide; a perester such as t-butyl perbenzoate; a peroxydicarbonate such as diisopropyl peroxydicarbonate, di-2-ethylhexyl peroxydicarbonate; a peroxyketal such as 1,1-di(t-butylperoxy)cyclohexane and 1,1-di(t-butylperoxy)-3,3,5-trimethyl cyclohexane.

Examples of the transition metal catalyst are also not particularly limited, and include platinum elemental, those where solid platinum is scattered onto a support such as alumina, silica, and carbon black, chloroplatinic acid or chloroplatinic acid complex with for example an alcohol, aldehyde, or ketone, platinum-olefin complex, and platinum(0)-divinyltetramethyldisiloxane. Examples of the catalyst other than platinum compounds include, for example, RhCl(PPh₃)₃, RhCl₃, RuCl₃, IrCl₃, FeCl₃, AlCl₃, PdCl₂●H₂O, NiCl₂, and TiCl₄. These catalysts may be used alone, or two or more may be used in combination. The amount of the catalyst is not particularly limited, and it may be used in the range of from 10⁻¹ to 10⁻⁸ mol , preferably in the range of from 10⁻³ to 10⁻⁶ mol, relative to 1 mol of the alkenyl group of the poly(meth)acrylate (I). When the amount is less than 10⁻⁸ mol, the curing does not proceed sufficiently. In addition, because hydrosilylating catalysts are expensive, it is preferred not to use 10⁻¹ mol or more.

A curing regulator may be incorporated to balance
out the storage stability and curability. A curing regulator that can be incorporated includes a compound comprising an aliphatic unsaturated bond. Examples of this include an acetylene alcohol, and examples of the acetylene alcohol that has good balance between the storage stability and curability include 2-phenyl-3-butyne-2-ol, 1-ethynyl-1-cyclohexanol, 3,5-dimethyl-1-hexyne-3-ol, 3-methyl-1-hexyne-3-ol, 3-ethyl-1-pentyne-3-ol, 2-methyl-3-butyne-2-ol, and 3-methyl-1-pentyne-3-ol.

Examples of the compound other than acetylene alcohols comprising an aliphatic unsaturated bond that modifies the storage stability at a high temperature include an aliphatic carboxylic acid ester of an olefin alcohol such as an ene-yne compound, a silane compound, a polysiloxane compound, an olefin compound, and vinyl acetate; a nitrile comprising an aliphatic unsaturated bond such as tetravinyl siloxane cyclic compound and 2-pentene nitrile; alkyl acetylene dicarboxylate, maleic acid ester, and diorgano fumarate.

The amount of the hardness regulator used can be substantially any amount provided that the poly(meth)acrylate (I) and the surface tack modifier (II) are homogeneously dispersed. It is preferably used in the range of from 2 to 10000 molar equivalents relative to the above hydrosilylating catalyst. The hardness regulator may be used alone, or two or more may be used in combination.

The curing temperature is not particularly limited, but it is generally cured at from 0°C to 200°C, preferably from 30°C to 150°C, further preferably from 80°C to 150°C.

### Hydroxyl Group

The polymer of the present invention having a hydroxyl group is homogeneously cured by using a compound having two or more functional group that may react with a hydroxyl group as a curing agent. Specific examples of the curing agent include polyvalent isocyanate compound having two or more isocyanate groups within one molecule, an aminoplast resin such as a methylolated melamine and an alkyl etherized product or a low condensation product thereof, a multifunctional carboxylic acid and a halide thereof. When a cured product is produced using these curing agents, a suitable curing catalyst can be used for each.

### Amino Group

The polymer of the present invention having an amino group is homogeneously cured by using a compound having two or more functional groups that may react with an amino group as a curing agent. Specific examples of the curing agent include polyvalent isocyanate compound having two or more isocyanate groups within one molecule, an aminoplast resin such as a methylolated melamine and an alkyl etherized product or a low condensation product thereof, a multifunctional carboxylic acid and a halide thereof. When a cured product is produced using these curing agents, a suitable curing catalyst can be used for each.

### Epoxy Group

Examples of the curing agent for the polymer of the present invention having an epoxy group include, but is not particularly limited to, an aliphatic amine, an alicyclic amine, an aromatic amine; an acid anhydride; a polyamide; an imidazole; an amine imide; an urea; a melamine and a derivative thereof; a salt of a polyamine; a phenol resin; a polymercaptan, a polysulfide; a light or ultraviolet curing agent such as an aromatic diazonium salt, a diallyl iodonium salt, a triallyl sulfonium salt, and a triallyl selenium salt.

### Polymerizable Carbon-Carbon Double Bond

A polymer having a polymerizable carbon-carbon double bond can be crosslinked by a polymerization reaction of its polymerizable carbon-carbon double bond.

Examples of the method for crosslinking include curing by an active energy beam or curing by heat. When employing an active energy beam-curable composition, it is preferred to use a radical photopolymerization initiator or an anion photopolymerization initiator as the photopolymerization initiator. When employing a heat-curable composition, the thermal polymerization initiator is preferably selected from the group consisting of an azo initiator, a peroxide, a persulfate, and a redox initiator.

These crosslinking reactions will be described in detail below.

When a polymer having a polymerizable carbon-carbon double bond is crosslinked, a polymerizable monomer and/or oligomer and various additives may be used in combination according to the purpose. A monomer and/or oligomer having a radical polymerizable group, or a monomer and/or oligomer having an anionic polymerizable group are preferred as the polymerizable monomer and/or oligomer. Examples of the radical polymerizable group include an acrylic functional group such as (meth)acrylic group, a styrene group, an acrylonitrile group, a vinyl ester group, an N-vinyl pyrrolidone group, an acrylamide group, a conjugated diene group, a vinyl ketone group, and a vinyl chloride group. Among these, those having a (meth)acrylic group similar to that of the polymer of the present invention are preferred. Examples of the anionic polymerizable group include a (meth)acrylic group, a styrene group, an acrylonitrile group, an N-vinyl pyrrolidone group, an acrylamide group, a conjugated diene group, and a vinyl ketone group. Among these, those having an acrylic functional group are preferred.

Specific examples of the above monomer include a (meth)acrylate monomer, a cyclic acrylate, an N-vinyl pyrrolidone, a styrene monomer, an acrylonitrile, an N-vinyl pyrrolidone, an acrylamide monomer, a conjugated diene monomer, and a vinyl ketone monomer. Examples of the (meth)acrylate monomer include n-butyl (meth)acrylate, 2-ethylhexyl (meth)acrylate, isooctyl (meth)acrylate, isononyl (meth)acrylate and compounds of the following formulae: 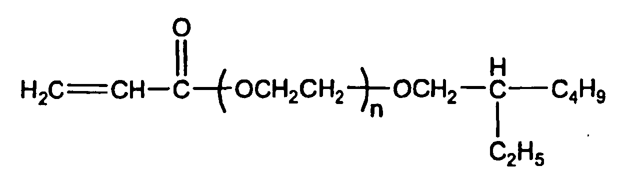 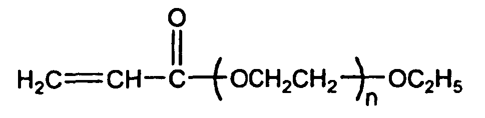 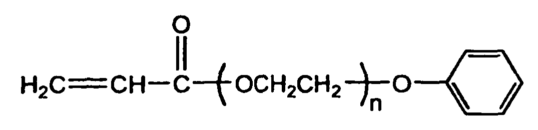 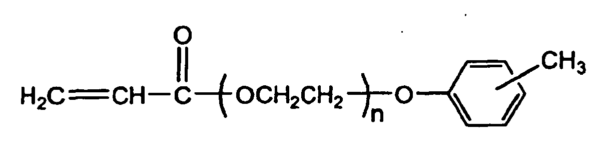 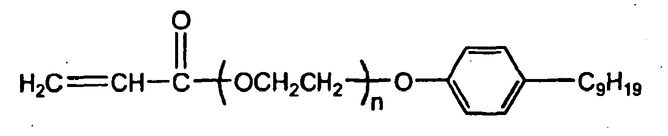 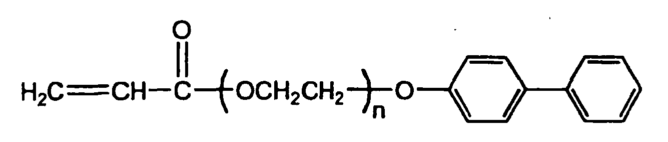 wherein n is an integer from 1 to 50; 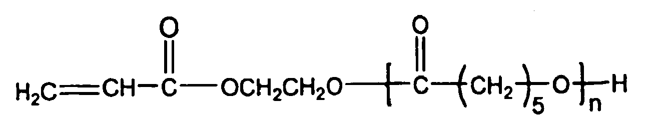 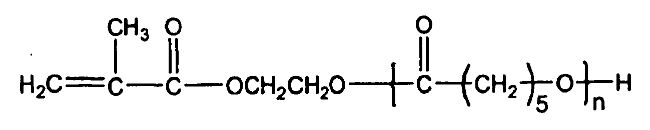 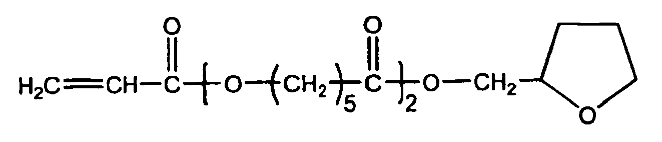 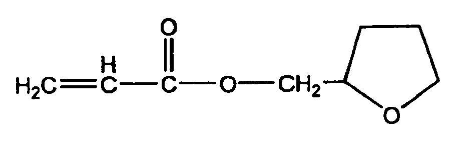 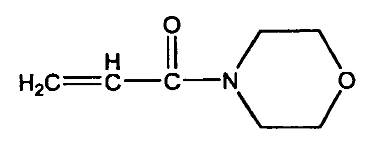 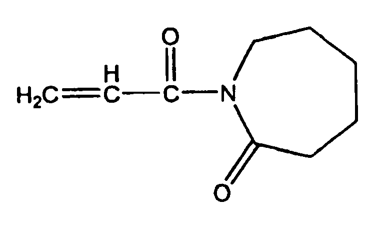 wherein n is an integer from 1 to 50; 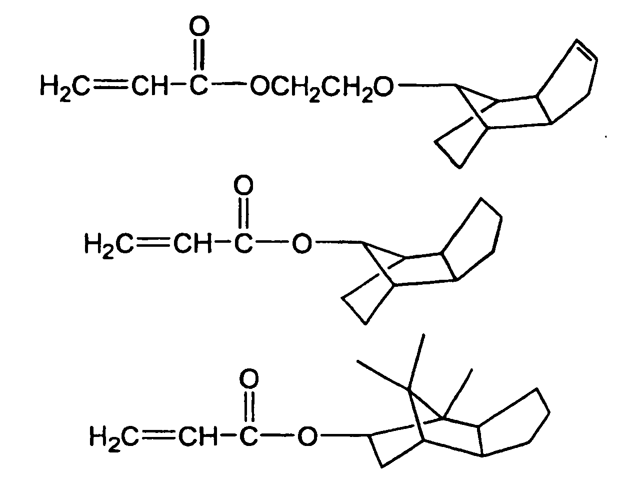 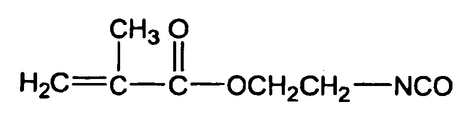 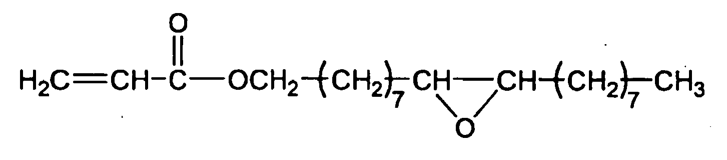 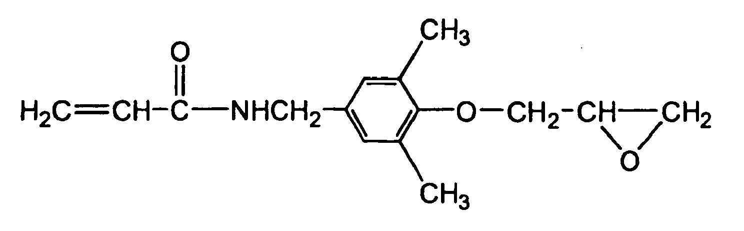 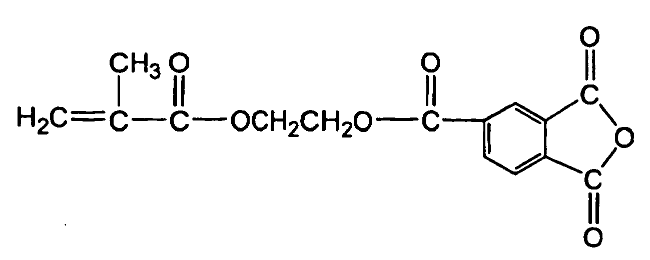 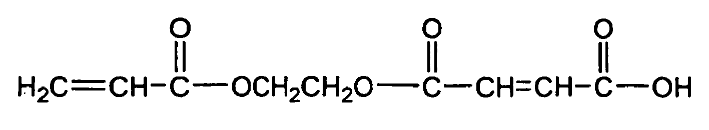 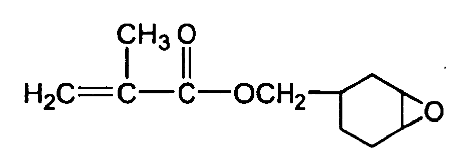 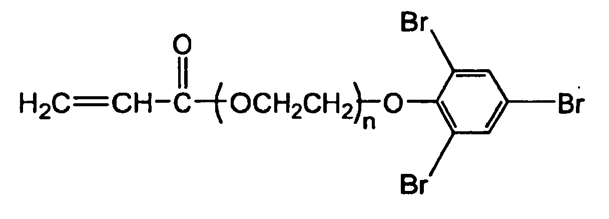 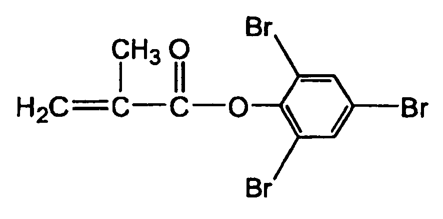 wherein n is an integer from 1 to 50; and 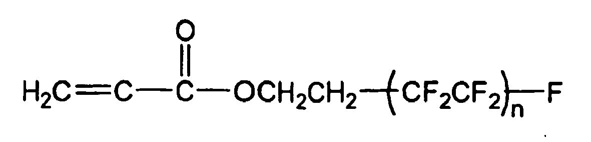 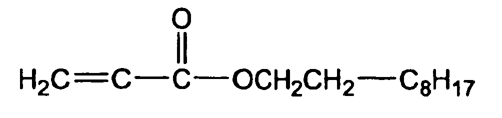 wherein n is an integer from 1 to 50.

Examples of the styrene monomer include styrene and α-methylstyrene, examples of the acrylamide monomer include acrylamide and N,N-dimethyl acrylamide, examples of the conjugated diene monomer include butadiene and isoprene, and example of a vinyl ketone monomer include methyl vinyl ketone.

Examples of the multifunctional monomer include neopentyl glycolpolypropoxy diacrylate, trimethylolpropane polyethoxy triacrylate, bisphenol-F polyethoxy diacrylate, bisphenol-A polyethoxy diacrylate, dipentaerythritol polyhexanolide hexacrylate, tris(hydroxyethyl)isocyanuratepolyhexanolide triacrylate, tricyclodecane dimethylol diacrylate2-(2-acryloyloxy-1,1-dimethyl)-5-ethyl-5-acryloyloxymethyl-1,3-dioxane, tetrabromobisphenol-A diethoxy diacrylate, 4,4-dimercaptodiphenylsulfide di(meth)acrylate, polytetraethylene glycoldiacrylate, 1,9-nonanediol diacrylate, and ditrimethylolpropane tetraacrylate.

Examples of the oligomer include an epoxy acrylate resin such as a bisphenol-A type epoxy acrylate resin, a phenol novolac type epoxy acrylate resin, and a cresol novolac type epoxy acrylate resin; a COOH group-modified epoxy acrylate resin; an urethane acrylate resin obtained from reacting an urethane resin obtained from a polyol (such as a polyester diol of polytetramethylene glycol and ethylene glycol with adipic acid, a ε-caprolactone-modified polyester diol, a polypropylene glycol, a polyethylene glycol, a polycarbonate diol, a hydrogenated polyisoprene having a hydroxyl group at the terminal, a polybutadiene having a hydroxyl group at the terminal, and a polyisobutylene having a hydroxyl group at the terminal) and an organic isocyanate (such as tolylene diisocyanate, isophorone diisocyanate, diphenylmethane diisocyanate, hexamethylene diisocyanate, and xylene diisocyanate) with a hydroxyl group-containing (meth)acrylate {such as hydroxyethyl (meth)acrylate, hydroxypropyl (meth)acrylate, hydroxybutyl (meth)acrylate, and pentaerythritol triacrylate}; a resin wherein a (meth)acrylic group was introduced into the above polyol through an ester bond; and a polyester acrylate resin.

These monomers and oligomers are selected by the initiator and the curing condition.

The number average molecular weight of the monomer and/or oligomer having an acrylic functional group is preferably 2000 or less, further preferably 1000 or less, because the compatibility will be good.

The preferred method of crosslinking a polymer having a polymerizable carbon-carbon double bond is by an active energy beam such as UV and electron beam.

When the method of crosslinking is by an active energy beam, it is preferred that a photopolymerization initiator is incorporated.

The photopolymerization initiator is not particularly limited, although radical or anion photopolymerization initiators are preferred, and a radical photopolymerization initiator is particularly preferred. Examples include acetophenone, propiophenone, benzophenone, xanthol, fluorein, benzaldehyde, anthraquinone, triphenylamine, carbazole, 3-methylacetophenone, 4-methylacetophenone, 3-pentylacetophenone, 4-methoxyacetophene, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoyl, benzoin methyl ether, benzoin butyl ether, bis(4-dimethylaminophenyl)ketone, benzyl methoxy ketal, and 2-chlorothioxanthone. These initiators may be used alone or in combination with another compound. In particular, the combination includes a combination with an amine such as diethanolmethylamine, dimethylethanolamine, and triethanolamine, as well as a combination in which an iodonium salt such as diphenyliodonium chloride is added to the above combination, and a combination with a dye such as Methylene Blue and an amine.

A near-infrared light absorptive cation dye may be used as the near-infrared photopolymerization initiator. As a near-infrared light absorptive cation dye, those excited by photoenergy in the range of from 650 to 1500 nm, for example a near-infrared light absorptive cation dye-borate anion complex disclosed in for example Japanese Patent Laid-Open No. 3-111402 and Japanese Patent Laid-Open No. 5-194619 are preferably used. It is further preferred to use the dye in combination with a boric sensitizer.

The amount of the photopolymerization initiator added is not particularly limited because it only needs to be enough to slightly photofunctionalize the system. The preferred amount is from 0.001 to 10 parts by weight relative to 100 parts of the polymer of this composition.

The method of curing the curable composition when incorporating a photopolymerization initiator into the curable composition of the present invention is not particularly limited. Depending on the properties of the photopolymerization initiator, the method includes irradiation of photo and electron beams by for example a high pressure mercury lamp, a low pressure mercury lamp, an electron beam irradiation equipment, a halogen lamp, a light emitting diode, and a semiconductor laser.

The preferred method of crosslinking a polymer having a polymerizable carbon-carbon double bond is by heat.

When the crosslinking is carried out by an active energy beam, it is preferred to incorporate a thermal polymerization initiator.

The thermal polymerization initiator is not particularly limited, and includes an azo initiator, a peroxide, a persulfate, and a redox initiator.

A suitable azo initiator includes, but is not limited to, 2,2'-azobis(4-methoxy-2,4-dimethylvaleronitrile) (VAZO 33), 2,2'-azobis(2-amidinopropane) dihydrochloride (VAZO 50), 2,2'-azobis(2,4-dimethylvaleronitrile) (VAZO 52), 2,2'-azobis(isobutyronitrile) (VAZO 64), 2,2'-azobis-2-methylbutyronitrile (VAZO 67), 1,1-azobis(1-cyclohexanecarbonitrile) (VAZO 88) (all of which are available from DuPont Chemical), 2,2'-azobis(2-cyclopropylpropionitrile), and 2,2'-azobis(methyl isobutyrate) (V-601) (available from WAKO PURE CHEMICAL INDUSTRIES, LTD.).

A suitable peroxide initiator includes, but is not limited to, benzoyl peroxide, acetyl peroxide, lauroyl peroxide, decanoyl peroxide, dicetyl peroxydicarbonate, di(4-t-butylcyclohexyl)peroxydicarbonate (Perkadox 16S) (available from Akzo Nobel), di(2-ethylhexyl)peroxydicarbonate, t-butyl peroxypivalate (Lupersol 11) (available from Elf Atochem), t-butyl peroxy-2-ethylhexanoate (Trigonox 21-C50) (available from Akzo Nobel), and dicumyl peroxide.

A suitable persulfate initiator includes, but is not limited to, potassium persulfate, sodium persulfate, and ammonium persulfate.

A suitable redox (oxidation-reduction) initiator include, but is not limited to, a combination of a sodium metahydrogensulfite of the above persulfate initiator and a reducing agent such as sodium hydrogensulfite; a system based on an organic peroxide and a tertiary amine, for example a system based on benzoyl peroxide and dimethylaniline; and a system based on an organic hydroperoxide and a transition metal, for example a system based on cumene hydroperoxide and cobalt naphthate.

Other initiators include, but are not limited to, a pinacol such as tetraphenyl 1,1,2,2-ethanediol.

A preferred heat radical initiator is selected from the group consisting of an azo initiator and a peroxide initiator. 2,2'-azobis(methylisobutyrate), t-butyl peroxypivalate, and di(4-t-butylcyclohexyl)peroxydicarbonate, and a mixture thereof are further preferred.

The heat radical initiator is present in an amount effective as a catalyst. The amount is not limited, and for example when the total amount of the poly(meth)acrylate (I) having at least one group having a polymerizable carbon-carbon double bond and other monomer and oligomer mixtures added is 100 parts by weight, the amount of the initiator is from about 0.01 to 5 parts by weight, more preferably from about 0.025 to 2 parts by weight. When a mixture of heat radical initiators is used, the total amount of the heat radical initiator mixture is an amount as though only one heat radical initiator was use.

When a heat radical initiator is incorporated into the curable composition of the present invention, the method for curing the curable composition is not particularly limited. The temperature depends varies depending on the heat initiator used, the poly(meth)acrylate (I), and the type of the compound etc. added, and it is generally in the range of from 50°C to 250°C, more preferably in the range of from 70°C to 200°C. The time for curing will vary depending on for example the polymerization initiator, the monomer, and the solvent used and the reaction temperature, but it is generally in the range of from 1 minute to 10 hours.

### <Agent for Imparting Adhesion>

A silane coupling agent or an agent for imparting adhesion other than a silane coupling agent may be added to the composition of the present invention. When an agent for imparting adhesion is added, the risk of the sealant to peel off from the adherend such as a siding board can be reduced because the width of joint etc. will vary due to external force. In addition, a primer used for improving adhesion may become unnecessary in some cases, and simplification of the laying operation is anticipated. Specific examples of the silane coupling agent include a silane coupling agent having a functional group such as an amino group, mercapto group, epoxy group, carboxyl group, vinyl group, isocyanate group, isocyanurate, and halogen. Specific examples of these include an isocyanate group-containing silane such as γ-isocyanatepropyltrimethoxysilane, γ-isocyanatepropyltriethoxysilane, γ-isocyanatepropylmethyldiethoxysilane, and γ-isocyanatepropylmethyldimethoxysilane; an amino group-containing silane such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane; a mercapto group-containing silane such as γ-mercaptopropyltrimethoxysilane, γ-mercaptopropyltriethoxysilane, γ-mercaptopropylmethyldimethoxysilane, and γ-mercaptopropylmethyldiethoxysilane; an epoxy group-containing silane such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; a carboxysilane such as β-carboxyethyltriethoxysilane, β-carboxyethylphenylbis(2-methoxyethoxy)silane, and N-β-(carboxymethyl)aminoethyl-γ-aminopropyltrimethoxysilane; a vinyl unsaturated group-containing silane such as vinyltrimethoxysilane, vinyltriethoxysilane, γ-methacryloyloxypropylmethyldimethoxysilane, and γ-acroyloxypropylmethyltriethoxysilane; a halogen-containing silane such as γ-chloropropyltrimethoxysilane; an isocyanurate silane such as tris(trimethoxysilyl)isocyanurate. A modified derivative thereof, i.e. an amino-modified silyl polymer, a silylated amino polymer, an unsaturated amino silane complex, a phenylamino long chain alkyl silane, an aminosilylated silicon, a block isocyanate silane, and a silylated polyester etc. can also be used as a silane coupling agent.

The silane coupling agent is generally preferably used in the range of from 0.1 to 20 parts by weight relative to 100 parts by weight of the crosslinkable functional group-containing poly(meth)acrylate. In particular, it is preferably used in the range of from 0.5 to 10 parts. When a silane coupling agent is added to the curable composition of the present invention, if it is used on various adherends, i.e. an inorganic base material such as glass, aluminum, stainless steel, zinc, copper, and mortar, or an organic base material such as polyvinyl chloride, polyacrylate, polyester, polyethylene, polypropylene, and polycarbonate, it shows significant effect on improvement in adhesion in a non-primer condition or a primer-treated condition. The effect of improving adhesion to various adherends is particularly significant when used in a non-primer condition.

Specific examples other than silane coupling agents include, but are not limited to, for example, an epoxy resin, a phenol resin, sulfur, an alkyl titanate, and an aromatic polyisocyanate.

The above agent for imparting adhesion may be used alone, or two or more may be used in combination. Adhesion to the adherend can be improved by adding these agents for imparting.adhesion. Although it is not particularly limited, in order to improve adhesion, especially adhesion to a metal adherend surface such as an oil pan, among the above agents for imparting adhesion it is preferred to use the silane coupling agents at from 0.1 to 20 parts by weight.

It is possible to select the type and the amount of the agent for imparting adhesion added according to the type of Y and the number of a of the poly(meth)acrylate (I) of the present invention represented by the general formula (1) or (6). It is also possible to control for example curability or the mechanical properties of the present invention according to the objective or application. Careful selection is necessary because it especially affects curability and elongation.

### <Plasticizer>

Various plasticizers may be used as necessary in the curable composition of the present invention. When a plasticizer is used in combination with a filler as described below, it may become more advantageous because elongation of the cured product can be increased and a large amount of a filler can be blended, but it is not always necessary to add a plasticizer. The plasticizer used is not particularly limited. Examples include, depending on the objective such as regulation of a physical property or adjustment of a characteristic, a phthalate ester such as dibutyl phthalate, diheptyl phthalate, di(2-ethylhexyl)phthalate, and butyl benzyl phthalate; a non-aromatic dibasic acid ester such as dioctyl adipate, dioctyl sebacate, dibutyl sebacate, and isodecyl succinate; an aliphatic ester such as butyl oleate and methyl acetyl ricinolate; an ester of polyalkylene glycol such as diethylene glycol dibenzoate, triethylene glycol dibenzoate, and pentaerythritol ester; a phosphoric ester such as tricresyl phosphate and tributyl phosphate; a trimellitic ester; a polystyrene such as polystyrene and poly-α-methylstyrene; polybutadiene, polybutene, polyisobutylene, butadiene-acrylonitrile, and polychloroprene; a chlorinated paraffin; a hydrocarbon oil such as alkyl diphenyl and partially hydrogenated terphenyl; a process oil; a polyether, for example a polyether polyol such as polyethylene glycol, polypropylene glycol, and polytetramethylene glycol, and a derivative thereof wherein a hydroxyl group from these polyether polyols is converted into for example an ester or ether group; an epoxy plasticizer such as epoxidated soybean oil and benzyl epoxystearate; a polyester plasticizer obtained from a dibasic acid such as sebacic acid, adipic acid, azelaic acid, and phthalic acid, and a dihydric alcohol such as ethylene glycol, diethylene glycol, triethylene glycol, propylene glycol, and dipropylene glycol; a poly(meth)acrylate obtained by polymerizing a vinyl monomer including an acrylic plasticizer by various methods.

By adding a polymeric plasticizer, which is a polymer having a number average molecular weight of from 500 to 15000, viscosity and slump property of the curable composition, and mechanical properties of the cured product obtained by curing the composition such as tensile strength and elongation can be regulated. In addition, as compared to using a low molecular weight plasticizer which is a plasticizer that do not contain any polymer component in the molecule, the initial physical property can be retained for a longer period of time, and drying properties (also called coatability) upon coating of an alkyd paint to the cured product can be improved. Although it is not limited, this polymeric plasticizer may be with or without a functional group.

The polymeric plasticizer has a number average molecular weight of from 500 to 15000 as stated above, preferably from 800 to 10000, and more preferably from 1000 to 8000. When the molecular weight is too low, the plasticizer will run off over time by heat or rain. When this happens, the initial physical property cannot be retained for a long period of time, and alkyd coatability may not improve. When the molecular weight is too high, viscosity rises and workability is impaired.

Among these polymeric plasticizers, those compatible with the poly (meth) acrylate (I) are preferred. Among these, a poly(meth)acrylate is preferred in view of compatibility and weather and heat resistance. Among the poly(meth)acrylates, an polyacrylate is further preferred. Examples of the method for synthesizing this polyacrylate include, those obtained by conventional solution polymerization and solventless polyacrylates. The latter acrylic plasticizer is more preferred for the objective of the present invention, because it does not use any solvents or chain transfer agents, but is produced by continuous high temperature polymerization (USP 4414370, Japanese Patent Laid-Open No. 59-6207, Japanese Patent Publication No. 5-58005, Japanese Patent Laid-Open No. 1-313522, and USP 5010166). Examples of these include, but are not limited to, a series of UP products from TOAGOSEI CO., LTD. (see Industrial Materials (Kougyou Zairyou), October, 1999). Needless to say, living radical polymerization can also be mentioned as another method for synthesis. According to this method, this method is preferred because the molecular weight distribution of the polymer thereof is narrow and it is possible to lower the viscosity. Moreover, although it is not limiting, atom transfer radical polymerization is more preferred.

The molecular weight distribution of the polymeric plasticizer is not particularly limited. However, it is preferred that the distribution is narrow, preferably less than 1.8, more preferably 1.7 or less, more preferably 1.6 or less, further preferably 1.5 or less, particularly preferably 1.4 or less, and most preferably 1.3 or less.

A plasticizer comprising the above polymeric plasticizer may be used alone or in combination of two or more, but it is not always necessary. When necessary, a polymeric plasticizer may be used, and a low molecular weight plasticizer may also be used in combination so long as it is in the range that it does not have an adverse effect on the physical property.

These plasticizers can also be incorporated at the time of polymer production.

The amount of the plasticizer used is not limited. It is from 5 to 150 parts by weight, preferably from 10 to 120 parts by weight, further preferably from 20 to 100 parts by weight, relative to 100 parts by weight of the poly(meth)acrylate (I). When the amount is less than 5 parts by weight, its effect as a plasticizer will not be expressed, and when the amount is greater than 150 parts by weight, mechanical strength of the cured product will be insufficient.

### <Filler>

Various fillers may used as necessary in the curable composition of the present invention. Examples of the filler include, but are not limited to, a reinforcing filler such as wood flour, pulp, cotton chip, asbestos, glass fiber, carbon fiber, mica, walnut coat powder, chaff powder, graphite, diatomaceous earth, clay, silica (such as fumed silica, precipitated silica, crystalline silica, fused silica, dolomite, silicic acid anhydride, and hydrous silicic acid), and carbon black; a filler such as heavy calcium carbonate, colloidal calcium carbonate, magnesium carbonate, diatomaceous earth, calcined clay, clay, talc, titanium oxide, bentonite, organic bentonite, ferric oxide, colcothar, fine aluminum powder, flint powder, zinc oxide, active zinc oxide, zinc powder, zinc carbonate and Shirasu balloon; a fiber filler such as asbestos, glass fiber and glass filament, carbon fiber, Kevler fiber, and polyethylene fiber.

Among these fillers, precipitated silica, fumed silica, crystalline silica, fused silica, dolomite, carbon black, calcium carbonate, titanium oxide, and talc are examples of those preferred.

In particular, when a cured product with high strength is to be obtained using these fillers, a filler selected from mainly for example fumed silica, precipitated silica, silicic acid anhydride, hydrous silicic acid, carbon black, surface-treated fine calcium carbonate, crystalline silica, fused silica, calcined clay, clay and active zinc oxide can be added. Among these, an ultrafine silica powder having a specific surface area (by BET adsorption) of 50 m²/g or more, typically from 50 to 400 m²/g, and preferably from about 100 to 300 m²/g is preferred. In addition, a silica of which the surface is hydrophobically treated in advance with an organic silicon compound such as organosilane, organosilazane, and diorganocyclopolysiloxane is further preferred.

More specific examples of the silica filler with high reinforcing property include, but are not particularly limited to, a fumed silica, e.g. AEROSIL from NIPPON AEROSIL CO., LTD., and a precipitated silica, e.g. NIPSIL from NIPPON SILICA INDUSTRIAL CO., LTD.

Moreover, when a cured product with low strength and high elongation is to be obtained, a filler selected mainly from for example titanium oxide, calcium carbonate, talc, ferric oxide, zinc oxide and Shirasu balloon can be added. In general, when the specific surface area of calcium carbonate is small, the effect of improving the breaking strength, breaking elongation, adhesion and weather-resistant adhesion of the cured product may not be sufficient. As the value of specific surface area increases, the effect of improving the breaking strength, breaking elongation, adhesion and weather-resistant adhesion of the cured product will increase.

In addition, it is preferred that calcium carbonate is surface-treated with a surface-treating agent. When a surface-treated calcium carbonate is used, it seems that the workability of the composition of the present invention is improved, and the effect of improving the adhesion and weather-resistant adhesion of the curable composition is greater as compared to using calcium carbonate without surface treatment. Examples of the surface-treating agent used include an organic compound such as a fatty acid, a fatty acid soap, a fatty acid ester or various surfactants, and various coupling agents such as a silane coupling agent and a titanate coupling agent. Specific examples include, but are not limited to, a fatty acid such as caproic acid, caprylic acid, pelargonic acid, capric acid, undecanoic acid, lauric acid, myristic acid, palmitic acid, stearic acid, behenic acid, and oleic acid; a salt of these fatty acids such as sodium and potassium salts; and an alkyl ester of these fatty acids. Specific examples of the surfactant include a sulfate ester anionic surfactant such as for example polyoxyethylene alkyl ether sulfate ester, long chain alcohol sulfate ester, and sodium and potassium salts thereof; and a sulfonate anionic surfactant such as for example alkylbenzene sulfonate, alkyl naphthalene sulfonate, paraffin sulfonate, α-olefin sulfonate, alkyl sulfosuccinate, and sodium and potassium salts thereof. The amount of the surface-treating agent used for treatment is preferably in the range of from 0.1 to 20% by weight, more preferably in the range of from 1 to 5% by weight of calcium carbonate. When the amount is less than 0.1% by weight, the effect of improving the workability, adhesion and weather-resistant adhesion may not be sufficient, and when the amount is greater than 20% by weight, the storage stability of the curable composition may decrease.

Although it is not particularly limited, when using calcium carbonate, if the effect of improving for example the thixotropy of the formulation or the breaking strength, breaking elongation, adhesion and weather-resistant adhesion of the cured product is particularly expected, it is preferred to use a colloidal calcium carbonate.

On the other hand, heavy calcium carbonate may be added with the intent to for example viscosity-reducing or expanding the formulation and cost reduction. When heavy calcium carbonate is used, those shown below can be used as necessary.

Heavy calcium carbonate is a mechanically ground and processed natural chalk (chalk), marble, limestone, etc. There are dry and wet methods for grinding. The product from a wet grinding method is often not preferred, because it often impairs the storage stability of the curable composition of the present invention. Heavy calcium carbonate is made into products of various average particle sizes through sorting. Although it is not particularly limited, if the effect of improving the breaking strength, breaking elongation, adhesion and weather-resistant adhesion of the cured product is expected, it is preferred to use those having a specific surface area of between 1.5 m²/g or more and 50 m²/g or less, further preferably 2 m²/g or more and 50 m²/g or less, more preferably 2.4 m²/g or more and 50 m²/g or less, and particularly preferably 3 m²/g or more and 50 m²/g or less. When the specific surface area is less than 1.5 m²/g, its effect of improving may not be sufficient. Needless to say, this is not always the case when the objective is merely to for example lower the viscosity or to expand the formulation.

The value of specific surface area is a value measured by the air permeability method according to JIS K 5101 (a method of calculating the specific surface area from permeability of air against packed powder layer).

It is preferred to use the specific surface area measurement instrument SS-100 from Shimadzu Corporation as the measuring device.

These fillers may be used alone or two or more may be used, according to the objective or as necessary. Although it is not particularly limited, for example, if heavy calcium carbonate having a specific surface area of 1.5 m²/g or more and a colloidal calcium carbonate are used in combination as necessary, the rise in the viscosity of the formulation can be suppressed at a moderate level, and the effect of improving the breaking strength, breaking elongation, adhesion and weather-resistant adhesion of the cured product can be greatly anticipated.

When a filler is used, the amount added is so that the filler is preferably used in the range of from 5 to 1000 parts by weight, more preferably in the range of from 20 to 500 parts by weight, particularly preferably in the range of from 40 to 300 parts by weight, relative to 100 parts by weight of the poly(meth)acrylate (I). When the amount incorporated is less than 5 parts by weight, the effect of improving the breaking strength, breaking elongation, adhesion and weather-resistant adhesion of the cured product may not be sufficient, and when the amount is greater than 1000 parts by weight, the workability of the curable composition may decrease. The filler may be used alone or in combination of two or more.

### <Microballoon>

In addition, a microballoon may also be used in combination with these reinforcing fillers with the objective of providing lightening and cost reduction without great deterioration in physical property.

Examples of such a microballoon (hereinafter referred to as balloon) include, but are not particularly limited to, a hollow body composed of a material of an inorganic or organic matter having a diameter of 1 mm or less, preferably 500 µm or less, further preferably 200 µm or less, as described in "Latest functional filler technology" (CMC). In particular, it is preferred to use a micro-hollow body having an absolute specific gravity of 1.0 g/cm³ or less, and it is further preferred to use a micro-hollow body of 0.5 g/cm³ or less.

Examples of the inorganic balloon include silicate and non-silicate balloons. A silicate balloon includes for example Shirasu balloon, perlite, glass balloon, silica balloon, and fly ash balloon, and a non-silicate balloon includes for example alumina balloon, zirconia balloon, and carbon balloon. Specific examples of these inorganic balloons include WINLITE from THE IDICHI CHEMICAL COMPANY OF JAPAN and SANKILITE from SANKI ENGINEERING CO., LTD. as a Shirasu balloon; CALLOON from NIPPON SHEET GLASS CO., LTD., SELSTAR Z-28 from SUMITOMO 3M LTD., MICRO BALLOON from EMERSON & CUMING, CELAMIC GLASSMODULES from PITTSBURGE CORNING, and GLASS BUBBLES from 3M as a glass balloon; Q-CEL from ASAHI GLASS CO., LTD. and E-SPHERES from TAIHEIYO CEMENT CORPORATION as a silica balloon; CEROSPHERES from PFAMARKETING and FILLITE from FILLITE U.S.A. as a fly ash balloon; BW from SHOWA DENKO K. K. as an alumina balloon; HOLLOW ZIRCONIUM SPHEES from ZIRCOA as a zirconia balloon; KUREKASPHERE from KUREHA CHEMICAL INDUSTRIES CO., LTD. and CARBOSPHERE from GENERAL TECHNOLOGIES as a carbon balloon; all of which are commercially available.

Examples of the organic balloon can include a thermosetting resin balloon and a thermoplastic resin balloon. A thermosetting balloon includes phenol balloon, epoxy balloon, and urea balloon, and a thermoplastic balloon includes saran balloon, polystyrene balloon, polymethacrylate balloon, polyvinyl alcohol balloon, and styrene-acrylic balloon. Crosslinked thermoplastic resin balloon can also be used. A balloon herein may also be a foamed balloon, or mixtures containing foaming agent may be foamed to form balloons after compounding.

Specific examples of these organic balloons include UCAR and PHENOLIC MICROBALLOONS from UNION CARBIDE CORPORATION as a phenol balloon; ECCOSPHERES from EMERSON & CUMING as an epoxy balloon; ECCOSPHERES VF-0 from EMERSON & CUMING as an urea balloon; SARAN MICROSPHERES from DOW CHEMICAL, EXPANCEL from NIPPON FILAMENT, and MATSUMOTO MICROSPHERE from MATSUMOTO YUSHI-SEIYAKU CO., LTD. as a saran balloon; DYLITE EXPANDABLE POLYSTYRENE from ARCO POLYMERS and EXPANDABLE POLYSTYRENE BEADS from BASF WYANDOTE as a polystyrene balloon; SX863 (P) from JAPAN SYNTHETIC RUBBER CO., LTD. as a crosslinked styrene-acrylate balloon; all of which are commercially available.

The above balloons may be used alone, or two or more may be used in combination. In addition, these balloons that were surface-treated with for example a fatty acid, a fatty acid ester, a rosin, a rosin acid lignin, a silane coupling agent, a titanium coupling agent, an aluminum coupling agent, or a polypropylene glycol to improve the dispersibility and workability of the formulation can also be used. These balloons are used for lightening and cost reduction without losing the physical properties of the cured formulation such as flexibility, elongation and strength.

The amount of the balloon incorporated is not particularly limited, but it can be used in the range of preferably from 0.1 to 50 parts by weight, further preferably from 0.1 to 30 parts by weight, relative to 100 parts by weight of the poly(meth)acrylate. When this amount is less than 0.1 parts by weight, the effect of lightening is small, and when the amount is 50 parts by weight or more, deterioration in mechanical properties of the cured formulation such as tensile strength may be observed. In addition, when the specific gravity of the balloon is 0.1 or more, the amount is preferably from 3 to 50 parts by weight, further preferably from 5 to 30 parts by weight.

### <Agent for Regulating Physical Properties>

An agent for regulating physical properties to regulate the tensile property of the cured product produced may be added as necessary to the curable composition of the present invention.

An agent for regulating physical properties is not particularly limited. Examples include an alkylalkoxysilane such as methyltrimethoxysilane, dimethyldimethoxysilane, trimethylmethoxysilane, and n-propyltrimethoxysilane; an alkylisopropenoxysilane such as dimethyldiisopropenoxysilane, methyltriisopropenoxysilane, and γ-glycidoxypropylmethyldiisopropenoxysilane; a functional group-containing alkoxysilane such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, and γ-mercaptopropylmethyldimethoxysilane; a silicon varnish; and a polysiloxane. By using the agent for regulating physical properties, the hardness of the cured composition of the present invention may be increased, or the hardness may be decreased and elongation is increased. The above agent for regulating physical properties may be used alone, or two or more may be used in combination.

### <Silanol-Containing Compound>

A silanol-containing compound may be added to the curable composition of the present invention as necessary for example to change physical properties of the cured product. A silanol-containing compound is a compound having one silanol group per molecule, and/or a compound capable of producing a compound having one silanol group per molecule by reacting with water. Only one of these may be used, or both compounds may be used together.

Examples of the compound having one silanol group per molecule, which is a silanol-containing compound, are not particularly limited. Examples include the following compounds such as: (CH₃)₃SiOH, (CH₃CH₂)₃SiOH, (CH₃CH₂CH₂)₃SiOH, (n-Bu)₃SiOH, (sec-Bu)₃SiOH, (t-Bu) ₃SiOH, (t-Bu)Si(CH₃)₂OH, (C₅H₁₁)₃SiOH, (C₆H₁₃)₃SiOH, (C₆H₅)₃SiOH, (C₆H₅)₂Si(CH₃)OH, (C₆H₅)Si(CH₃)₂OH, (C₆H₅)₂Si(C₂H₅)OH, C₆H₅Si(C₂H₅)₂OH, C₆H₅CH₂Si(C₂H₅)₂OH, and C₁₀H₇Si(CH₃)₂OH wherein C₆H₅ represents a phenyl group, and C₁₀H₇ represents a naphthyl group; in which the compound is represented by (R'')₃SiOH, wherein R" is a homogeneously or heterogeneously substituted or unsubstituted alkyl or aryl group; a cyclic polysiloxane compound comprising a silanol group such as: 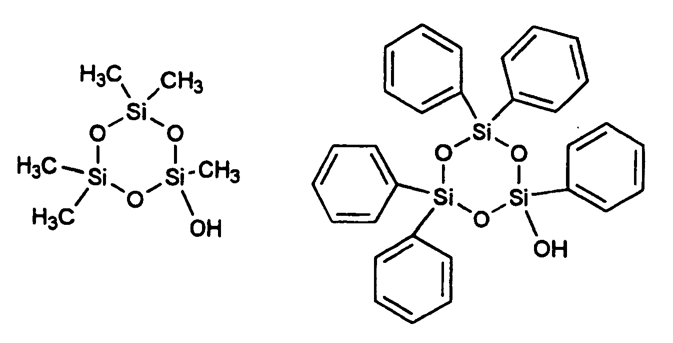 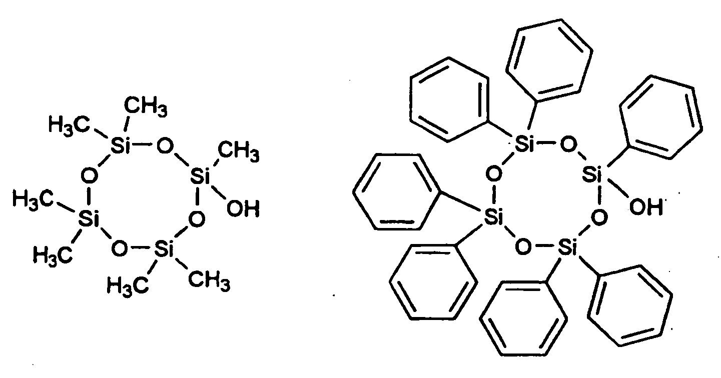 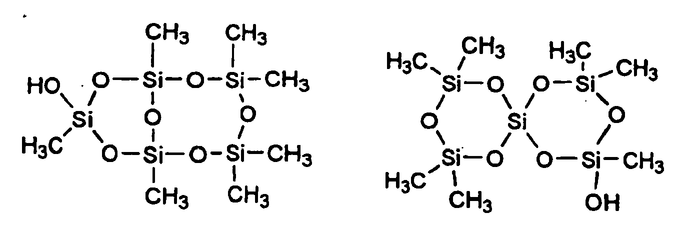 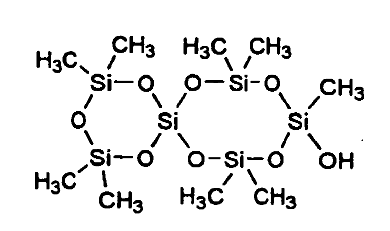 a chain polysiloxane compound comprising a silanol group: 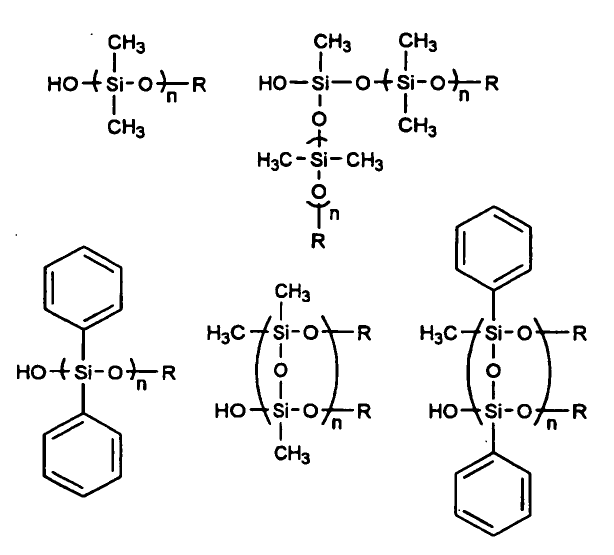 wherein n is an integer from 1 to 50, and R is a hydrogen atom or an alkyl group;
a compound where a silanol group is bound to the polymer terminal in which the main chain consists of silicon and carbon atoms: 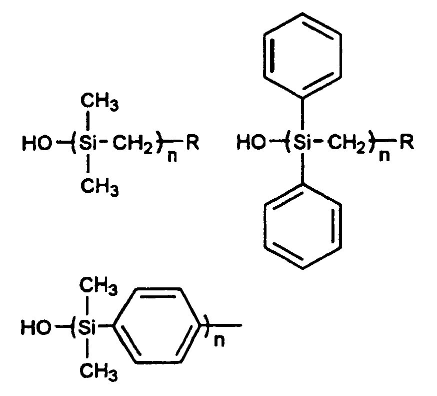 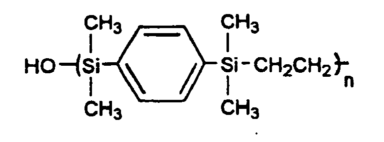 wherein n is an integer from 1 to 50, and R is a hydrogen atom or an alkyl group;
a compound where a silanol group is bound to a polysilane main chain terminal: 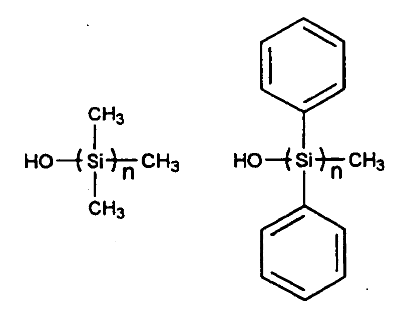 wherein n is an integer from 1 to 50;
and a compound where a silanol group is bound to the polymer terminal and the main chain is composed of silicon, carbon, and oxygen atoms: 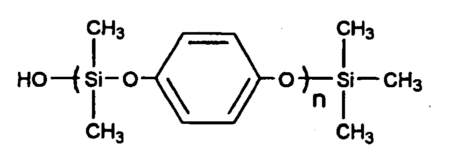 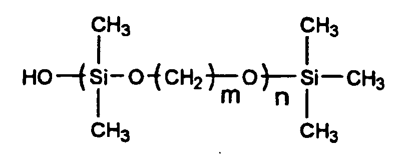 wherein m is an integer from 1 to 10, and n is an integer from 1 to 50. Among these, a compound represented by the following general formula (45) is preferred:

(R⁵⁸)₃SiOH (45)

wherein R⁵⁸ is a monovalent hydrocarbon group having 1 to 20 carbon atoms, and the multiple R⁵⁸ may be identical or may be different.

R⁵⁸ is preferably a methyl group, ethyl group, vinyl group, t-butyl group, or phenyl group, further preferably a methyl group.

Among these, (CH₃)₃SiOH etc. having a small molecular weight is preferred in view of availability and effect.

The above compound having one silanol group per molecule is thought to reduce the number of crosslinking points and impart flexibility to the cured product by reacting with the crosslinkable silyl group of the poly(meth)acrylate or with a siloxane bond produced by crosslinking.

A compound capable of producing a compound having one silanol group per molecule by reacting with water is not particularly limited. A compound that reacts with the water content to produce a compound having one silanol group per molecule (a product of hydrolysis), i.e. a compound represented by the above general formula (45) is preferred. Other than the compound represented by the general formula (46), examples include, but are not particularly limited to, those described below.

N,0-bis(trimethylsilyl)acetamide, N-(trimethylsilyl)acetamide, bis(trimethylsilyl)trifluoroacetamide, N-methyl-N-trimethylsilyl trifluoroacetamide, bis trimethylsilyl urea, N-(t-butyldimethylsilyl)N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyl trifluoromethanesulfonate, trimethylsilylphenoxide, trimethylsilylate of n-octanol, trimethylsilylate of 2-ethylhexanol, tris(trimethylsilyl)ate of glycerol, tris(trimethylsilyl)ate of trimethylolpropane, tris(trimethylsilyl)ate of pentaerythritol, tetra(trimethylsilyl)ate of pentaerythritol, (CH₃) ₃SiNHSi (CH₃)₃, (CH₃)₃SiNSi(CH₃)₂, 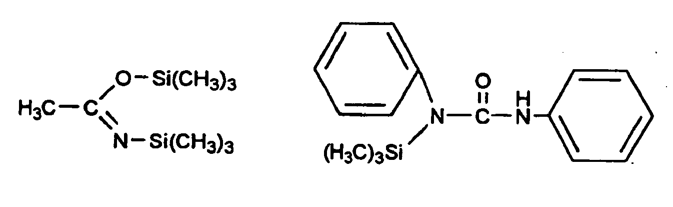 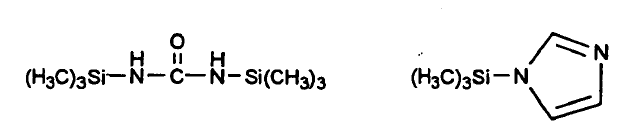 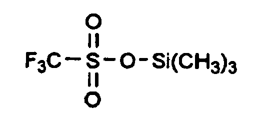 can be suitably used. In view of the amount of the silanol group comprised in the hydrolysis product, (CH₃)₃SiNHSi(CH₃)₃ is particularly preferred.

A compound capable of producing a compound having one silanol group per molecule by reacting with water is not particularly limited. Other than the above compounds, a compound represented by the following general formula (46) is preferred:

((R⁵⁸)₃SiO)ₙR⁵⁹ (46)

wherein R⁵⁸ is as described above, n is a positive number, and R⁵⁹ is a group in which a part of or all of the active hydrogens have been removed from a compound comprising an active hydrogen.

R⁵⁸ is preferably a methyl, ethyl, vinyl, t-butyl, or phenyl group, further preferably a methyl group.

(R⁵⁸)₃Si group is particularly preferably a trimethyl silyl group in which the 3 R⁵⁸ are all methyl groups. In addition, n is preferably from 1 to 5.

The compound comprising an active hydrogen from which the above R⁵⁹ originates is not particularly limited. Examples include an alcohol such as methanol, ethanol, n-butanol, i-butanol, t-butanol, n-octanol, 2-ethylhexanol, benzyl alcohol, ethylene glycol, diethylene glycol, polyethylene glycol, propylene glycol, dipropylene glycol, polypropylene glycol, propanediol, tetramethylene glycol, polytetramethylene glycol, glycerol, trimethylolpropane, pentaerythritol; a phenol such as phenol, cresol, bisphenol-A, and hydroquinone; a carboxylic acid such as formic acid, acetic acid, propionic acid, lauric acid, palmitic acid, stearic acid, behenic acid, acrylic acid, methacrylic acid, oleic acid, linoleic acid, linolenic acid, sorbic acid, oxalic acid, malonic acid, succinic acid, adipic acid, maleic acid, benzoic acid, phthalic acid, terephthalic acid, and trimellitic acid; ammonia; an amine such as methylamine, dimethylamine, ethylamine, diethylamine, n-butylamine, and imidazole; an acid amide such as acetamide and benzamide; an urea such as urea and N,N'-diphenyl urea; a ketone such as acetone, acetyl acetone, and 2,4-heptadione.

The compound represented by the above general formula (46) capable of producing a compound having one silanol group per molecule by reacting with water can be obtained by reacting for example the aforementioned compound comprising an active hydrogen etc. with a compound having a group that may react with an active halogen such as a halogen group along with a (R⁵⁸)₃Si group that is also referred to as a silylating agent such as trimethylsilyl chloride and dimethyl (t-butyl)chloride, but it not limited to these, provided that R⁵⁸ is as described above.

Specific examples of the compound represented by the above general formula (46) include, but are not limited to, allyloxytrimethylsilane, N,O-bis(trimethylsilyl)acetamide, N-(trimethylsilyl)acetamide, bis(trimethylsilyl)trifluoroacetamide, N-methyl-N-trimethylsilyl trifluoroacetamide, bis trimethylsilyl urea, N-(t-butyldimethylsilyl)N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyl trifluoromethanesulfonate, trimethylsilylphenoxide, trimethylsilylate of n-octanol, trimethylsilylate of 2-ethylhexanol, tris(trimethylsilyl)ate of glycerol, tris(trimethylsilyl)ate of trimethylolpropane, tris(trimethylsilyl)ate of pentaerythritol, and tetra(trimethylsilyl)ate of pentaerythritol. These may be used alone, or two or more may be used in combination.

A compound that can be represented by the general formula (((R⁶⁰)₃SiO) (R⁶¹O)ₛ)ₜZ, CH₃O (CH₂CH (CH₃) O)₅Si (CH₃)₃, CH₂=CHCH₂(CH₂CH (CH₃) O)₅Si (CH₃)₃, (CH₃)₃SiO(CH₂CH(CH₃)O)₅Si(CH₃)₃, or (CH₃)₃SiO(CH₂CH(CH₃)O)₇Si (CH₃)₃ wherein R⁶⁰ is identically or heterogeneously substituted or unsubstituted monovalent hydrocarbon group or a hydrogen atom, R⁶¹ is a divalent hydrocarbon group having 1 to 8 carbon atoms, s and t are a positive integer, s is from 1 to 6, s x t is 5 or more, and Z is a monovalent to hexavalent organic group; etc. can also be suitably used. These may be used alone, or two or more may be used in combination.

Among compounds capable of producing a compound having one silanol group per molecule by reacting with water, in view of that it does not adversely affect for example storage stability and weather resistance, it is preferred that the compound comprising an active hydrogen that is produced after hydrolysis is a phenol, an acid amide or an alcohol, further preferably it is a phenol or an alcohol where the compound comprising an active hydrogen is a hydroxyl group.

Among the above compounds, N,O-bis(trimethylsilyl)acetamide, N-(trimethylsilyl)acetamide, trimethylsilylphenoxide, trimethylsilylate of n-octanol, trimethylsilylate of 2-ethylhexanol, tris(trimethylsilyl)ate of glycerol, tris(trimethylsilyl)ate of trimethylolpropane, tris(trimethylsilyl)ate of pentaerythritol, and tetra(trimethylsilyl)ate of pentaerythritol etc. are preferred.

This compound capable of producing a compound having one silanol group per molecule by reacting with water produces a compound having one silanol group per molecule during storage, upon curing, or after curing by reacting with water. The compound having one silanol group per molecule thus produced is thought to reduce the number of crosslinking points and impart flexibility to the cured product by reacting the crosslinkable silyl group or the siloxane bond of the poly(meth)acrylate (I) produced by crosslinking as described above.

The amount of the silanol-containing compound added can be regulated as appropriate according to the anticipated physical property of the cured product. The silanol-containing compound can be added at from 0.1 to 50 parts by weight, preferably from 0.3 to 20 parts by weight, further preferably from 0.5 to 10 parts by weight, relative to 100 parts by weight of the poly(meth)acrylate (I). When the amount added is less than 0.1 parts by weight, the effect of addition is not shown, and when the amount is greater than 50 parts by weight, crosslinking becomes insufficient, and the strength of the cured product or the gel fraction may become too low.

The timing for adding the silanol-containing compound to the poly(meth)acrylate is not particularly limited. The silanol-containing compound may be added at the time of the production of the poly(meth)acrylate, or at the time of production of the curable composition.

### <Thixotropic Agent (Anti-Sagging Agent)>

A thixotropic agent (anti-sagging agent) may be added as necessary to the curable composition of the present invention to prevent sagging and to improve workability.

The anti-sagging agent is not particularly limited. Examples include a hydrogenated castor oil derivative; a metal soap such as calcium stearate, aluminum stearate, and barium stearate. These thixotropic agents (anti-sagging agents) may be used alone, or two or more may be used in combination.

### <Photocurable Material>

A photocurable material may be added as necessary to the curable composition of the present invention. A photocurable material is a material where the molecular structure undergoes a chemical change in a short period of time by the effect of light, and a physical change such as curing occurs. By adding the photocurable material, the stickiness on the surface of the cured product (also called residual tackiness) upon curing of the curable composition can be reduced. The photocurable material is a material that may be cured by exposure to light. A representative photocurable material is for example a material that can be cured by letting it stand at room temperature for 1 day in an indoor sunny place (near a window). Many types of this compound are known including an organic monomer, an oligomer, a resin, or a composition comprising the same. Examples of the types included are, but are not limited to, an unsaturated acrylic compound, a polyvinyl cinnamate, or an azide resin.

The unsaturated acrylic compound is a monomer or an oligomer having an unsaturated group represented by the following general formula (47), or a mixture thereof:

CH2=CHR⁶²CO(O)- (47)

wherein R⁶² is a hydrogen atom, alkyl group having 1 to 10 carbon atoms, aryl group having 6 to 10 carbon atoms, or an aralkyl group having 7 to 10 carbon atoms.

Specific examples of the unsaturated acrylic compound include, a (meth)acrylate ester of a low molecular weight alcohol such as ethylene glycol, glycerol, trimethylolpropane, pentaerythritol, and neopentyl alcohol; a (meth)acrylate ester of an alcohol where an acid such as bisphenol-A and isocyanuric acid or the low molecular weight alcohol etc. is modified with ethylene oxide or propylene oxide; a (meth)acrylate ester such as a polyether polyol having a polyether as the main chain and a hydroxyl group at the terminal, a polymer polyol obtained by radical polymerizing a vinyl monomer in a polyol having a polyether as the main chain, a polyester polyol having a polyester as the main chain and a hydroxyl group at the terminal, and a polyol having a vinyl polymer or a poly(meth)acrylate as the main chain and a hydroxyl group within the main chain; an epoxy acrylate oligomer obtained by reacting an epoxy resin of for example bisphenol-A or novolac type with (meth)acrylate; an urethane acrylate oligomer having an urethane bond and a (meth)acrylic group within the molecular chain, obtained by reacting with for example a polyol, polyisocyanate, or hydroxyl group-containing (meth)acrylate.

A polyvinyl cinnamate is a light-sensitive resin having a cinnamoyl group as the light-sensitive group, and includes a polyvinyl alcohol esterified with cinnamate, as well as many polyvinyl cinnamate derivatives.

An azide resin is known as a light-sensitive resin having an azide group as the light-sensitive group. A rubber sensitizing solution comprising an azide compound as a sensitizing agent is generally used, and other detailed examples are described in "Light-Sensitive Resin" (Mar. 17, 1972, Insatsu Gakkai Shuppanbu Ltd., p. 93-, from p. 106, p. 117-). These can be used alone or blended, and a sensitizer can be added as necessary.

Among the above photocurable materials, an unsaturated acrylic compound is preferred because it is easy to handle.

The photocurable material is preferably added at from 0.01 to 20 parts by weight relative to 100 parts by weight of the poly(meth)acrylate. When the amount is less than 0.01 parts by weight, the effect is small, and when the amount is greater than 20 parts by weight, the physical property may be adversely affected. The effect may be enhanced when a sensitizer such as a ketone or a nitro compound, or an accelerator such as an amine is added.

### <Air Oxidation-Curable Material>

An air oxidation-curable material may be added as necessary to the curable composition of the present invention. An air oxidation-curable material is a compound having an unsaturated group that can be crosslinked and cured by oxygen in the air. By adding this air oxidation-curable material, the stickiness on the surface of the cured product (also called residual tackiness) upon curing of the curable composition can be reduced. The air oxidation-curable material according to the present invention is a material that is capable of curing by exposure to air, more specifically, a material that has a property to react with oxygen in the air and become cured. A representative air oxidation-curable material, for example, can be cured by letting it stand 1 day indoors in air.

Specific examples of the air oxidation-curable material include a drying oil such as tung oil and linseed oil; various alkyd resins obtained by modifying these drying oils; an polyacrylate, an epoxy resin, and a silicone resin modified by a drying oil; a polymer or copolymer of 1,2-polybutadiene and 1,4-polybutadiene with C5 - C8 diene, as well as various modified products of the polymer or copolymer (such as a modified maleinate and a modified boiled oil). Among the tung oil and diene polymer, a liquid (liquid diene polymer) or a modified product thereof is particularly preferred.

Specific examples of the above liquid diene polymer include butadiene, a liquid polymer obtained by polymerizing or copolymerizing diene compounds such as butadiene, chloroprene, isoprene, and 1,3-pentadiene, a polymer such as NBR and SBR obtained by copolymerizing these diene compounds with a copolymerizable monomer such as acrylonitrile and styrene so that the diene compound would be the main component, as well as various modified products thereof (such as a modified maleinate and a modified boiled oil). These may be used alone, or two or more may be used in combination. Among these liquid diene compounds, a liquid polybutadiene is preferred.

An air oxidation-curable material may be used alone, or two or more may be used in combination. When a catalyst or a metal dryer that promotes oxidation-curing reaction is used together, the effect may be enhanced. Examples of the catalyst and metal dryer include a metal salt such as cobalt naphthenate, lead naphthenate, zirconium naphthenate, cobalt 2-ethylhexanoate, and zirconium 2-ethylhexanoate, and an amine compound.

The air oxidation-curable material is preferably added at from 0.01 to 20 parts by weight relative to 100 parts by weight of the poly(meth)acrylate (I). When the amount is less than 0.01 parts by weight, the effect is small, and when the amount is greater than 20 parts by weight, the physical property may be adversely affected.

### <Antioxidant>

An antioxidant may be added as necessary to the curable composition of the present invention. Various antioxidants are known, including for example various antioxidants described in for example "A Handbook of Antioxidants" (Taiseisha) and "Degradation and Stabilization of Polymeric Materials" (CMC, 235-242), but it will not be limited to these.

Examples include a thioether such as MARK PEP-36 and MARK AO-23 (all of which are available from ADEKA ARGUS CHEMICAL CO., LTD.), and a phosphorus antioxidant such as Irgafos 38, Irgafos 168, and Irgafos P-EPQ (all of which are available from NIPPON CIBA-GEIGY CO., LTD.). Among these, a hindered phenol compound as shown below is preferred.

Specific examples of the hindered phenol compound include the following.
2,6-di-tert-butyl-4-methylphenol, 2,6-di-tert-butyl-4-ethylphenol, mono- (or di- or tri-) (α methylbenzyl)phenol, 2,2'-methylene bis(4-ethyl-6-tertbutylphenol), 2,2'-methylene bis(4-methyl-6-tertbutylphenol), 4,4'-butylidenebis(3-methyl-6-tertbutylphenol), 4,4'-thiobis(3-methyl-6-tert-butylphenol), 2,5-di-tert-butylhydroquinone, 2,5-di-tert-amylhydroquinone, triethylene glycol-bis-[3-(3-t-butyl-5-methyl-4-hydroxyphenyl)propionate], 1,6-hexane diol-bis[3-(3,5-di-t-butyl-4-hydroxyphenyl)propionate], 2,4-bis-(n-octylthio)-6-(4-hydroxy-3,5-di-t-butylanilino)-1,3,5-triazine, pentaerythrityl-tetrakis[3-(3,5-di-t-butyl-4-hydroxyphenyl)propionatel, 2,2-thio-diethylenebis[3-(3,5-di-t-butyl-4-hydroxyphenyl)propionate], octadecyl-3-(3,5-di-t-butyl-4-hydroxyphenyl)propionate, N,N'-hexamethylene bis(3,5-dit-butyl-4-hydroxy-hydrocinnamamide), 3,5-di-t-butyl-4-hydroxy-benzylphosphonate-diethyl ester, 1,3,5-trimethyl-2,4,6-tris(3,5-di-t-butyl-4-hydroxybenzyl)benzene, bis(3,5-di-t-butyl-4-hydroxybenzylphosphonate ethyl)calcium, tris-(3,5-di-t-butyl-4-hydroxybenzyl)isocyanurate, 2,4-2,4-bis[(octylthio)methyl]o-cresol, N,N'-bis[3-(3,5-di-t-butyl-4-hydroxyphenyl)propionyl]hydrazine, tris(2,4-di-t-butylphenyl)phosphite, 2-(5-methyl-2-hydroxyphenyl)benzotriazole, 2-[2-hydroxy-3,5-bis(α,α-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-dit-butyl-2-hydroxyphenyl)-5-chlorobenzotriazole, 2-(3,5-di-t-amyl-2-hydroxyphenyl)benzotriazole, 2-(2'-hydroxy-5'-t-octylphenyl)-benzotriazole, a condensation product with methyl-3-[3-t-butyl-5-(2H-benzotriazole-2-yl)-4-hydroxyphenyl]propionate-polyethylene glycol (molecular weight about 300), a hydroxyphenyl benzotriazole derivative, 2-(3,5-di-t-butyl-4-hydroxybenzyl)-2-n-butylmalonate bis(1,2,2,6,6-pentamethyl-4-piperidyl), and 2,4-di-t-butylphenyl-3,5-di-t-butyl-4-hydroxybenzoate.

Examples of product names include, but are not limited to, NOCRAC 200, NOCRAC M-17, NOCRAC SP, NOCRAC SP-N, NOCRAC NS-5, NOCRAC NS-6, NOCRAC NS-30, NOCRAC 300, NOCRAC NS-7, and NOCRAC DAH (all of which are available from OUCHISHINKO CHEMICAL INDUSTRIAL CO., LTD.), MARK AO-30, MARK AO-40, MARK AO-50, MARK AO-60, MARK AO-616, MARK AO-635, MARK AO-658, MARK AO-80, MARK AO-15, MARK AO-18, MARK 328, and MARK AO-37 (all of which are available from ADEKA ARGUS CHEMICAL CO., LTD.), IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, and IRGANOX-1425WL (all of which are available from NIPPON CIBA-GEIGY CO., LTD.), and Sumilizer GM and Sumilizer GA-80 (all of which are available from SUMITOMO CHEMICAL CO., LTD.).

The antioxidant may be used in combination with a light stabilizer as described below. By using in combination, the effect may be further exerted. It is particularly preferred because the heat resistance especially may be improved. CHINUBIN C353 and CHINUBIN B75 etc. where an antioxidant and a light stabilizer is blended in advance (all of which are available from NIPPON CIBA-GEIGY CO., LTD.) may also be used.

The amount of the antioxidant used is preferably in the range of from 0.1 to 10 parts by weight relative to 100 parts by weight of the poly(meth)acrylate. When the amount added is less than 0.1 parts by weight, the effect of improving weather resistance is small, and when the amount is greater than 10 parts by weight, the effect is not large enough to be of economical advantage.

### <Light Stabilizer>

A light stabilizer may be added as necessary to the curable composition of the present invention. Various light stabilizers are known, including, but are not limited to, for example, various light stabilizers described in e.g. "A Handbook of Antioxidants" (Taiseisha) and "Degradation and Stabilization of Polymeric Materials" (CMC, 235-242).

Although it is not particularly limited, an ultraviolet absorber is preferred among light stabilizers. Specific examples include a benzotriazole compound such as CHINUBIN P, CHINUBIN 234, CHINUBIN 320, CHINUBIN 326, CHINUBIN 327, CHINUBIN 329, and CHINUBIN 213 (all of which are available from NIPPON CIBA-GEIGY CO., LTD.), and a triazine compound such as CHINUBIN 1577, a benzophenone compound such as CHIMASSORB 81, and a benzoate compound such as CHINUBIN 120 (NIPPON CIBA-GEIGY CO., LTD.).

A hindered amine compound is also preferable. Such compounds include:
A condensation product of dimethyl succinate-1-(2-hydroxyethyl)-4-hydroxy-2,2,6,6-tetramethylpiperidine, poly[{6-(1,1,3,3-tetramethylbutyl)amino-1,3,5-triazine-2,4-diyl}{(2,2,6,6-tetramethyl-4-piperidyl)imino}], a condensation product of N,N'-bis(3-aminopropyl)ethylenediamine-2,4-bis[N-butyl-N-(1,2,2,6,6-pentamethyl-4-piperidyl)amino]-6-chloro-1,3,5-triazine, bis(2,2,6,6-tetramethyl-4-piperidyl)sebacate, and succinic acid-bis(2,2,6,6-tetramethyl-4-piperidinyl) ester.

Examples of product names include, but are not limited to, CHINUBIN 622LD, CHINUBIN 144, CHIMASSORB 944LD, CHIMASSORB 119FL, and Irgafos 168 (all of which are available from NIPPON CIBA-GEIGY CO., LTD.), MARK LA-52, MARK LA-57, MARK LA-62, MARK LA-67, MARK LA-63, MARK LA-68, MARK LA-82, and MARK LA-87, (all of which are available from ADEKA ARGUS CHEMICAL CO., LTD.), and SANOL LS-770, SANOL LS-765, SANOL LS-292, SANOL LS-2626, SANOL LS-1114, SANOL LS-744, SANOL LS-440 (all of which are available from SANKYO CO., LTD.).

In addition, a combination of an ultraviolet absorber and a hindered amine compound sometimes allows exertion of a greater effect. Although it is not limited, they may therefore be used in combination, and sometimes it is preferred that they are used in combination.

The light stabilizer may be used in combination with the aforementioned antioxidant. By using in combination, the effect may be further exerted. It is particularly preferred because especially the weather resistance may be improved. CHINUBIN C353 and CHINUBIN B75 where a light stabilizer and an antioxidant is blended in advance (all of which are available from NIPPON CIBA-GEIGY CO., LTD.) etc. may also be used.

The amount of the light stabilizer used is preferably in the range of from 0.1 to 10 parts by weight relative to 100 parts by weight of the poly(meth)acrylate (I). When the amount added is less than 0.1 parts by weight, the effect of improving weather resistance is small, and when the amount is greater than 10 parts by weight, the effect is not large enough to be of economical advantage.

### Other Additives

Various additives may be added as necessary to the curable composition of the present invention, with the intent to regulate various physical properties of the curable composition or the cured product. Examples of such additives include a fire retardant, an antioxidant, a radical inhibitor, an ultraviolet absorber, a metal deactivator, an antiozonant, a phosphorus peroxide-decomposing agent, a lubricant, a pigment, and a foaming agent. These various additives may be used alone or in combination of two or more.

Specific examples of such an additive are described in for example the specifications of Japanese Patent Publication No. 4-69659, Japanese Patent Publication No. 7-108928, Japanese Patent Laid-Open No. 63-254149, and Japanese Patent Laid-Open No. 64-22904.

The curable composition of the present invention may be prepared as a one-component composition, in which all the incorporated components are formulated in advance and kept sealed, and cured by the moisture in the air after application, or as a two-component composition, in which components such as the curing catalyst, filler, plasticizer, and water are separately formulated as curing agents, and the incorporated material and the polymer composition is blended before use. When preparing as a two-component composition, a colorant can be added upon blending of the 2 components. This is preferable for e.g. low-storied buildings, because it will facilitate accommodating the need for multiple colors demanded by the market, for example by allowing different color variation with a limited stock to be possible, in for example providing a sealant that matches with the color of the siding board. The workability using a colorant will be facilitated by blending for example a pigment and a plasticizer, and optionally a filler into a paste. Further, fine adjustments of the curing rate can be made on site by adding a retardant when blending the 2 components.

### «Cured Product»

### <Application>

The curable composition of the present invention can be employed in various applications including, but not limited to, for example a sealant such as an architectural elastic sealant and a sealant for double glass, a material for electrical and electronic parts such as the back sealer of a solar battery, an electrical insulating material such as an insulating coating material for electric wire and cable, tackifier, adhesive, elastic adhesive, paint, powder paint, a coating material, a foam, an electrical and electronic potting agent, a film, a gasket, a casting material, various molding materials, and a rust proofing and waterproofing sealer for the edge (the cut edge) of a wire glass or shatterproof glass, and a liquid sealing agent used in for example automotive parts, electronics parts, and various mechanical parts.

### [Examples]

Specific Examples and Comparative Examples of the present invention will be described below. The present invention is not to be limited to the following Examples.

In the following Examples and Comparative Examples, "parts" and "%" represent "parts by weight" and "% by weight", respectively. "Triamine " in the Examples of the present invention refers to pentamethyldiethylenetriamine.

In the following Examples, "number average molecular weight" and "molecular weight distribution (the ratio of the weight average molecular weight to the number average molecular weight)" were calculated by a method based on a polystyrene standard sample using gel permeation chromatography (GPC). The GPC column used was a column packed with polystyrene crosslinking gel (shodex GPC K-804 available from SHOWA DENKO K. K.), and the GPC solvent used was chloroform.

### (Production Example 1)

### (A method for producing an n-butyl acrylate polymer having an alkenyl group at the terminal)

To a 250 L reactor equipped with a stirrer and a jacket replaced with nitrogen gas, CuBr (1.09 kg), acetonitrile (11.4 kg), n-butyl acrylate (26.0 kg) and diethyl 2,5-dibromoadipate (2.28 kg) were added, and then stirred at 70°C for about 30 minutes. Triamine (43.9g) was added to the mixture to initiate the reaction. During the reaction, n-butyl acrylate (104 kg) was continuously added dropwise. While adding n-butyl acrylate dropwise, triamine (176 g) was added in portions. Four hours after the reaction was initiated, the unreacted monomer and acetonitrile were evaporated off by stirring with heat at 80°C under reduced pressure. Acetonitrile (45.7 kg), 1,7-octadiene (14.0 kg), and triamine (439 g) were added to the concentrate, and stirring was continued for 8 hours. Acetonitrile and the unreacted 1,7-octadiene were evaporated off by stirring the mixture with heat at 80°C under reduced pressure and concentrated. Toluene (130 kg) was added to the concentrate to dissolve the polymer. The solid copper in the polymer mixture was filtered with a bag filter (available from HAYWARD, nominal pore size of filter fabric 1 µm). KYOWAAD 500SH (available from KYOWA CHEMICAL INDUSTRY CO., LTD.: 0.5 parts by weight relative to 100 parts by weight of the polymer), KYOWAAD 700SL (available from KYOWA CHEMICAL INDUSTRY CO., LTD.: 0.5 parts by weight relative to 100 parts by weight of the polymer) were added to the filtrate, and then stirred with heating for 3 hours at 100°C under oxygen-nitrogen gas mixed atmosphere (6% oxygen concentration). The insoluble matter in the mixture was filtered off. The filtrate was concentrated to obtain the polymer. The Br group was detached from the polymer by heating and volatilizing the polymer (pressure reduced to 10 torr or less) at 180°C for 12 hours.

Toluene (100 parts by weight relative to 100 parts by weight of the polymer), KYOWAAD 500SH (available from KYOWA CHEMICAL INDUSTRY CO., LTD.: 1 part by weight relative to 100 parts by weight of the copolymer), KYOWAAD 700SL (available from KYOWA CHEMICAL INDUSTRY CO., LTD.: 1 part by weight relative to 100 parts by weight of the polymer), a hindered phenolic antioxidant (Irganox 1010; CIBA SPECIALTY CHEMICALS, 0.01 parts) were added to the polymer under oxygen-nitrogen gas mixed atmosphere (6% oxygen concentration) and stirred for 4 hours with heating at 150°C. The insoluble matter in the mixture was filtered off. The filtrate was concentrated to obtain an n-butyl acrylate polymer with an alkenyl group at the terminal [P1]

Polymer [P1] had a number average molecular weight of 24300, and a molecular weight distribution of 1.2. The average number of alkenyl groups introduced into one molecule of the polymer, as determined by ¹H NMR, was 1.8 per molecule.

### (Production Example 2)

### (A method for producing an n-butyl acrylate polymer having a crosslinkable silyl group at the terminal)

To a 140 L pressure reactor equipped with a stirrer and a jacket, the polymer [P1] (65 kg), dimethoxy methyl hydrosilane (1.1 kg), methyl orthoformate (0.55 kg), and a 1,1,3,3-tetramethyl-1,3-divinyl disiloxane complex of a zero-valent platinum in xylene (10 mg as platinum relative to 1 kg of polymer) were added. The mixture was stirred for 1 hour with heating at 100 °C under nitrogen atmosphere. The volatile portion of the mixture was distilled off under reduced pressure to obtain an n-butyl acrylate polymer having a crosslinkable silyl group at the terminal ([P2]). The polymer [P2] obtained had a number average molecular weight of 24600 as measured by GPC measurement (on the basis of a polystyrene standard sample), and a molecular weight distribution of 1.3. The average number of silyl groups introduced into the polymer, as determined by ¹H NMR, was 1.8 per molecule.

### (Production Example 3)

### (A method for producing an n-butyl acrylate polymer having an acryloyl group at the terminal)

N-butyl acrylate was polymerized using cuprous bromide as the catalyst, pentamethyldiethylenetriamine as the ligand, and diethyl-2,5-dibromoadipate as the initiator. An n-butyl acrylate polymer having a bromine at the terminal having a number average molecular weight of 25200 and a molecular weight distribution of 1.20 was obtained.

Three hundred grams of this polymer was dissolved in N,N-dimethylacetamide (300 mL), 5.3 g of potassium acrylate was added, and stirred for 3 hours with heating at 70°C under nitrogen atmosphere to obtain a mixture of an n-butyl acrylate polymer having an acryloyl group at the terminal ([P3]). N,N-dimethylacetamide in the mixture was distilled off under reduced pressure, toluene was added to the residue, and the insoluble matter was removed by filtration. The toluene in the filtrate was distilled off under reduced pressure to purify the polymer [P3]. The purified polymer [P3] had a number average molecular weight of 27100, a molecular weight distribution of 1.31, and the number of average terminal acryloyl group was 2.0.

### (Examples 1 to 27) (Evaluation of surface tack)

To 100 parts of the polymer [P1] obtained in Production Example 1, a silica filler (AEROSIL R974: available from NIPPON AEROSIL CO., LTD.), a surface tack modifier (II) (the type and the amount are shown in Table 1), and an antioxidant (IRGANOX 1010: available from CIBA SPECIALTY CHEMICALS) were combined, and blended well using three paint rollers. A chain siloxane (comprising 5 hydrosilyl groups on average and 5 α-methylstyrene groups on average in the molecule) was added as the curing agent, and a platinum catalyst (a 1,1,3,3-tetramethyl-1,3-divinyl disiloxane complex of a zero-valent platinum) and a curing retardant (3,5-dimethyl-1-hexyne-3-ol) were added and stirred and mixed well. The amount of each component added is shown in Table 1. Then, a sheet of about 2 mm thick was produced by coating this composition, cured and matured under a condition as shown in Table 1, and the surface tack of the cured product was observer. The result of each is shown in Table 2.

The surface tack of the present invention is represented as follows. E: a good state where there is no or substantially no residual tackiness; tackiness increases in the order of G, M, and P; P: the surface is sticky (poor).

In Examples 7, 8, 23, and 24 where AEROSIL R974 was not used, a curable composition in which a predetermined amount of various additives shown in Table 1 were incorporated was stored at 50°C for 24 hours, and the state of the curable composition when cooled to 23°C was observed visually. This is shown in Table 2. The compositions were homogeneous even after storage.

### (Comparative Examples 1 and 2)

A cured product was produced using the polymer [P1] obtained from Production Example 1 in a similar manner as in Examples 1 and 4, except for that the surface tack modifier (II) was not used. The surface tack of the cured product was observed as before. The surface was sticky, and the surface tack was poor.

### (Comparative Example 3)

A cured product was produced using 100 parts of the polymer [P1] obtained in Production Example 1 in a similar manner as in Example 7, except for that 2 parts of liquid paraffin was used instead of the surface tack modifier (II). The surface tack of the cured product was observed as before. The curable composition was stored at 50°C for 24 hours, and the state of the curable composition when cooled to 23°C was observed visually. This is shown in Table 2. The composition after storage was not homogeneous, and phase separation had occurred.

**[Table 1]**

| | Solid Compound (II) | | AEROSIL R974 | Anti-oxidant | Curing Agent | Curing Catalyst | Curing Retardant | Curing Condition |
|---|---|---|---|---|---|---|---|---|
| | (i) | Number of Parts | Number of Parts | Number of Parts | Number of Parts | Number of Parts | Number of Parts | (ii) |
| Ex. 1 | A | 0.25 | 10 | 1 | 3.5 | 0.02 | 0.07 | G |
| Ex. 2 | A | 0.5 | 10 | 1 | 3.5 | 0.02 | 0.07 | G |
| Ex. 3 | A | 1.0 | 10 | 1 | 3.5 | 0.02 | 0.07 | G |
| Ex. 4 | A | 0.25 | 10 | 1 | 3.5 | 0.02 | 0.07 | H |
| Ex. 5 | A | 0.5 | 10 | 1 | 3.5 | 0.02 | 0.07 | H |
| Ex. 6 | A | 1.0 | 10 | 1 | 3.5 | 0.02 | 0.07 | H |
| Ex. 7 | A | 0.5 | 0 | 1 | 3.5 | 0.02 | 0.07 | H |
| Ex. 8 | A | 1.0 | 0 | 1 | 3.5 | 0.02 | 0.07 | H |
| Ex. 9 | A | 0.5 | 20 | 1 | 3.5 | 0.02 | 0.07 | H |
| Ex. 10 | A | 0.5 | 10 | 0 | 3.5 | 0.02 | 0.07 | H |
| Ex. 11 | A | 0.5 | 10 | 1 | 2.3 | 0.02 | 0.07 | H |
| Ex. 12 | A | 0.5 | 10 | 1 | 4.1 | 0.02 | 0.07 | H |
| Ex. 13 | A | 0.5 | 10 | 1 | 3.5 | 0.01 | 0.07 | H |
| Ex. 14 | A | 0.5 | 10 | 1 | 3.5 | 0.03 | 0.07 | H |
| Ex. 15 | A | 0.5 | 10 | 1 | 3.5 | 0.02 | 0 | H |
| Ex. 16 | A | 0.5 | 10 | 1 | 3.5 | 0.02 | 0.04 | H |
| Ex. 17 | B | 0.5 | 10 | 1 | 3.5 | 0.02 | 0.07 | G |
| Ex. 18 | B | 1.0 | 10 | 1 | 3.5 | 0.02 | 0.07 | G |
| Ex. 19 | B | 2.0 | 10 | 1 | 3.5 | 0.02 | 0.07 | G |
| Ex. 20 | B | 0.5 | 10 | 1 | 3.5 | 0.02 | 0.07 | H |
| Ex. 21 | B | 1.0 | 10 | 1 | 3.5 | 0.02 | 0.07 | H |
| Ex. 22 | B | 2.0 | 10 | 1 | 3.5 | 0.02 | 0.07 | H |
| Ex. 23 | B | 1.0 | 0 | 1 | 3.5 | 0.02 | 0.07 | H |
| Ex. 24 | B | 2.0 | 0 | 1 | 3.5 | 0.02 | 0.07 | H |
| Ex. 25 | | C 0.5 | 10 | 1 | 3.5 | 0.02 | 0.07 | H |
| Ex. 26 | D | 0.5 | 10 | 1 | 3.5 | 0.02 | 0.07 | H |
| Ex. 27 | E | 0.5 | 10 | 1 | 3.5 | 0.02 | 0.07 | H |
| Com. Ex. 1 | - | 0 | 10 | 1 | 3.5 | 0.02 | 0.07 | G |
| Com. Ex. 2 | - | 0 | 10 | 1 | 3.5 | 0.02 | 0.07 | H |
| Com. Ex. 3 | F | 2.0 | 0 | 1 | 3.5 | 0.02 | 0.07 | H |

| | | | | | | | | |
|---|---|---|---|---|---|---|---|---|
| "Number of Parts" in the Table all represents parts by weight relative to 100 parts of the polymer [P1]. (i) A: UNISTAR M-9676 (stearyl stearate: available from NOF CORPORATION), B: paraffin (available from WAKO PURE CHEMICAL INDUSTRIES, LTD.), C: LUVAX-2191 (available from NIPPON SEIRO CO., LTD), D: SANWAX 151-P (available from SANYO CHEMICAL INDUSTRIES, LTD.), E: methyl stearate (available from WAKO PURE CHEMICAL INDUSTRIES, LTD.), F: liquid paraffin (available from WAKO PURE CHEMICAL INDUSTRIES, LTD.) (ii) G: 150°C for 1 hour, H: 180°C for 30 minutes | | | | | | | | |

**[Table 2]**

| | Surface tack | Storage Stability |
|---|---|---|
| | (iii) | (iv) |
| Ex. 1 | E | - |
| Ex. 2 | E | - |
| Ex. 3 | E | - |
| Ex. 4 | E | - |
| Ex. 5 | E | - |
| Ex. 6 | E | - |
| Ex. 7 | G | homogeneous |
| Ex. 8 | G | homogeneous |
| Ex. 9 | E | - |
| Ex. 10 | E | - |
| Ex. 11 | E | - |
| Ex. 12 | E | - |
| Ex. 13 | E | - |
| Ex. 14 | E | - |
| Ex. 15 | E | - |
| Ex. 16 | E | - |
| Ex. 17 | E | - |
| Ex. 18 | E | - |
| Ex. 19 | E | - |
| Ex. 20 | E | - |
| Ex. 21 | E | - |
| Ex. 22 | E | - |
| Ex. 23 | G | homogeneous |
| Ex. 24 | G | homogeneous |
| Ex. 25 | G | - |
| Ex. 26 | M | - |
| Ex. 27 | G | - |
| Com. Ex. 1 | P | - |
| Com. Ex. 2 | P | - |
| Com. Ex. 3 | G | separate |

| | | |
|---|---|---|
| (iii) surface tack: good <- E > G > M > P -> poor (sticky) (iv) Visual observation of the state of the curable composition when cooled to 23°C, after storing the curable composition comprising a predetermined amount of the various additives shown in the Table at 50°C for 24 hours. | | |

### (Examples 28 to 30) (Evaluation of tensile physical property)

To 100 parts of the polymer [P1] obtained in Production Example 1, 10 parts of a silica filler (AEROSIL R974: available from NIPPON AEROSIL CO., LTD.), a surface tack modifier (II) (the type and the amount are shown in Table 3), and 1 part of an antioxidant (IRGANOX 1010: available from CIBA SPECIALTY CHEMICALS) were combined, and blended well using a three arm paint roller. 3.5 parts of a chain siloxane (comprising 5 hydrosilyl groups on average and 5 α-methylstyrene groups on average in the molecule) was added as the curing agent, 0.02 parts of a platinum catalyst (1,1,3,3-tetramethyl-1,3-divinyl disiloxane complex of a zero-valent platinum), and 0.07 parts of a curing retardant (3,5-dimethyl-1-hexyne-3-ol) were added and stirred and mixed well. The curable composition was degassed well in a vacuum oven at 50°C, and then filled into a stainless metal mold, press vulcanized at a temperature of 180°C for 10 minutes, and then secondary vulcanization was carried out at 180°C for 22 hours. The cured product sheet of about 2 mm thick obtained as such was punched out into No. 2(1/3) dumbell specimens (JIS K 7113), and tensile physical property was evaluated (using a SHIMADZU autograph; measurement temperature: 23°C; tensile rate: 200 mm/sec). The result is shown in Table 3.

### (Comparative Example 4)

A cured product was produced using polymer [P1] obtained in Production Example 1 in a similar manner as in Example 28, except that the surface tack modifier (II) was not used. The surface tack and the tensile physical property were evaluated, and the results are shown in Table 3. The surface tack was poor.

**[Table 3]**

| | Solid Compound (II) | | M50 | T_{B} | E_{B} | Surface tack |
|---|---|---|---|---|---|---|
| | (i) | Number of Parts | MPa | MPa | % | (ii) |
| Ex. 28 | A | 0.5 | 0.10 | 1.89 | 450 | E |
| Ex. 29 | A | 1.0 | 0.11 | 2.03 | 470 | E |
| Ex. 30 | B | 2.0 | 0.10 | 1.81 | 450 | E |
| Com. Ex. 4 | - | | 0.12 | 1.61 | 380 | P |

| | | | | | | |
|---|---|---|---|---|---|---|
| "Number of Parts" in the Table all represents parts by weight relative to 100 parts of the polymer [P1]. (i) A: UNISTAR M-9676 (stearyl stearate: available from NOF CORPORATION), B: paraffin (available from WAKO PURE CHEMICAL INDUSTRIES, LTD.) (ii) surface tack: good <- E > G > M > P -> poor (sticky) | | | | | | |

### (Examples 31 to 34)

To 100 parts of the polymer [P2] obtained in Production Example 2, a surface tack modifier (II) (the type and the amount are shown in Table 4) and various curing catalysts (the type and the number of parts added are shown in Table 4) were added and stirred and mixed well. This was coated into a sheet of about 2 mm thick, and cured and matured at 65°C for 24 hours. The surface tack of the cured product was observed. The result is shown in Table 4.

### (Comparative Examples 5 and 6)

A cured product was produced using polymer [P2] obtained in Production Example 2 in a similar manner as in Examples 31 and 32, except that the surface tack modifier (II) was not used. The surface tack of the cured product was observed, and the results are shown in Table 4. The surface tack was poor.

### (Example 35)

To 100 parts of the polymer [P3] obtained in Production Example 3, 1 part of stearyl stearate (UNISTAR M-9676: available from NOF CORPORATION), and 0.5 parts of tertiary butylperoxyisopropyl carbonate (PERBUTYL I: available from NOF CORPORATION) were added and stirred and mixed well. This was coated into a sheet of about 2 mm thick, and cured and matured at 180°C for 30 minutes. The surface tack of the cured product was observed. The result is shown in Table 4.

### (Comparative Example 7)

A cured product was produced using polymer [P3] obtained in Production Example 3 in a similar manner as in Example 35, except that the surface tack modifier (II) was not used. The surface tack of the cured product was observed as before. The result is shown in Table 4.

**[Table 4]**

| | Polymer | Solid Compound (II) | | Catalyst | Curing Condition | Surface tack |
|---|---|---|---|---|---|---|
| | | (i) | Number of Parts | (ii) | (iii) | (iv) |
| Ex. 31 | P2 | A | 1.0 | C | F | E |
| Ex. 32 | P2 | A | 1.0 | D | F | E |
| Ex. 33 | P2 | B | 2.0 | C | F | E |
| Ex. 34 | P2 | B | 2.0 | D | F | G |
| Ex. 35 | P3 | A | 1.0 | E | G | E |
| Com. Ex. 5 | P2 | - | 0 | C | F | P |
| Com. Ex. 6 | P2 | - | 0 | D | F | P |
| Com. Ex. 7 | P3 | - | 0 | E | G | P |

| | | | | | | |
|---|---|---|---|---|---|---|
| "Number of Parts" in the Table all represents parts by weight relative to 100 parts of the polymer. i) A: UNISTAR M-9676 (stearyl stearate: available from NOF CORPORATION), B: paraffin (available from WAKO PURE CHEMICAL INDUSTRIES, LTD.) ii) C: U-220 (dibutyltin diacetylacetonate, 1 part), D: OT/LA (tin 2-ethylhexanoate/laurylamine = 2 parts/0.5 parts), E: PERBUTYL I (tertiary butylperoxyisopropyl carbonate: available from NOF CORPORATION, 0.5 parts) (iii) F: 65°C for 24 hours, G: 180°C for 30 minutes | | | | | | |

A curable composition comprising a poly(meth)acrylate having at least one crosslinkable functional group and surface tack modifier having a melting point of between 30°C and 200°C at 1 atm provide a cured product with good tensile physical property and surface tack.

### Industrial Applicability

The present invention can provide a curable composition comprising a poly(meth)acrylate having at least one crosslinkable functional group and a surface tack modifier having a melting point of between 30°C and 200°C at 1 atm, the curable composition which can provide a cured product with mechanical properties not greatly reduced and surface tack decreased, and of which the formulation is not easily separated into components when the curable composition is in storage.

## Claims

1. A curable composition comprising:
- 100 parts by weight of a poly(meth)acrylate (I) produced by living radical polymerization, having at least one crosslinkable functional group at a chain terminal; and
- from 0.1 to 10 parts by weight of a surface tack modifier (II) having a melting point of between 30°C and 200°C at 1 atm selected from the group consisting of: an aliphatic hydrocarbon compound, an aliphatic carboxylic acid, an aliphatic alcohol, an aliphatic carboxylic acid ester obtained from an aliphatic carboxylic acid and an aliphatic alcohol having 13 or more carbon atoms, a natural wax, an aliphatic carboxylic acid amide, polyethylene and polypropylene.

2. The curable composition according to claim 1, wherein the poly(meth)acrylate (I) has a molecular weight distribution of less than 1.8.

3. The curable composition according to claim 1 or 2, wherein the crosslinkable functional group of the poly(meth)acrylate (I) is a crosslinkable silyl group.

4. The curable composition according to claim 1 or 2, wherein the crosslinkable functional group of the poly(meth)acrylate (I) is an alkenyl group.

5. The curable composition according to claim 1 or 2, wherein the crosslinkable functional group of the poly(meth)acrylate (I) is a hydroxyl group.

6. The curable composition according to claim 1 or 2, wherein the crosslinkable functional group of the poly(meth)acrylate (I) is an amino group.

7. The curable composition according to claim 1 or 2, wherein the crosslinkable functional group of the poly(meth)acrylate (I) is a group having a polymerizable carbon-carbon double bond.

8. The curable composition according to claim 1 or 2, wherein the crosslinkable functional group of the poly(meth)acrylate (I) is an epoxy group.

9. The curable composition according to any of claims 1 to 8, wherein the living radical polymerization is atom transfer radical polymerization.

10. The curable composition according to claim 9, wherein the atom transfer radical polymerization employs, as a catalyst, a complex of a metal selected from elements from the 7th, 8th, 9th, 10th, and 11th groups of the periodic table.

11. The curable composition according to claim 10, wherein the metal complex is selected from the group consisting of a copper complex, nickel complex, ruthenium complex, and iron complex.

12. The curable composition according to claim 11, wherein the metal complex is a copper complex.

13. The curable composition according to claim 1, wherein the surface tack modifier (II) has a melting point of between 40°C and 150°C at 1 atm.

14. The curable composition according to any of claims 1 to 13, wherein the aliphatic hydrocarbon compound is a petroleum wax designated in JIS K 2235.

15. The curable composition according to any of claims 1 to 13, wherein the aliphatic carboxylic acid is an aliphatic carboxylic acid having 10 or more carbon atoms.

16. The curable composition according to any of claims 1 to 13, wherein the aliphatic alcohol is an aliphatic alcohol having 13 or more carbon atoms.

17. The curable composition according to any of claims 1 to 13, wherein the natural wax is selected from the group consisting of carnauba wax, candelilla wax, beeswax, spermaceti wax, privet wax, and montan wax.

18. The curable composition according to any of claims 1 to 13, wherein the aliphatic carboxylic acid amide is an amide compound obtained by reacting an aliphatic carboxylic acid having 6 or more carbon atoms with one or more amines selected from the group consisting of ammonia, methylenediamine, 1,2-ethylenediamine, m-xylylenediamine, and p-phenylenediamine.

19. A method of improving the surface tack of a cured product, comprising adding from 0.1 to 10 parts by weight of a surface tack modifier (II) having a melting point of between 30°C and 200°C at 1 atm to 100 parts by weight of a poly(meth)acrylate (I) having at least one crosslinkable functional group at a chain terminal produced by living radical polymerization
wherein the surface tack modifier (II) is selected from the group consisting of: an aliphatic hydrocarbon compound, an aliphatic carboxylic acid, an aliphatic alcohol, an aliphatic carboxylic acid ester obtained from an aliphatic carboxylic acid and an aliphatic alcohol having 13 or more carbon atoms, a natural wax, an aliphatic carboxylic acid amide, polyethylene and polypropylene.

20. Use of the curable composition according to any of claims 1 to 18 for an application selected from the group consisting of: sealant, adhesive, paint, potting agent, coating material, moulding material.

## Patentansprüche

1. Härtbare Zusammensetzung, umfassend:
- 100 Gewichtsteile Poly(meth)acrylat (I), das durch Polymerisation mit lebenden Radikalen hergestellt ist, mit wenigstens einer vernetzbaren funktionellen Gruppe an einem Kettenende, und
- 0,1 bis 10 Gewichtsteile eines Oberflächenklebrigkeitsmodifizierers (II) mit einem Schmelzpunkt zwischen 30°C und 200°C bei 1 atm, der aus der Gruppe gewählt ist, die besteht aus: einer aliphatischen Kohlenwasserstoffverbindung, einer aliphatischen Carboxylsäure, einem aliphatischen Alkohol, einem aliphatischen Carboxylsäureester, der aus einer aliphatischen Carboxylsäure und einem aliphatischen Alkohol mit 13 oder mehr Kohlenstoffatomen erhalten ist, einem natürlichen Wachs, einem aliphatischen Carboxylsäureamid, Polyethylen und Polypropylen.

2. Härtbare Zusammensetzung nach Anspruch 1, wobei das Poly(meth)acrylat (I) eine Molekulargewichtsverteilung von weniger als 1,8 hat.

3. Härtbare Zusammensetzung nach Anspruch 1 oder 2, wobei die vernetzbare funktionelle Gruppe des Poly(meth)acrylats (I) eine vernetzbare Silylgruppe ist.

4. Härtbare Zusammensetzung nach Anspruch 1 oder 2, wobei die vernetzbare funktionelle Gruppe des Poly(meth)acrylats (I) eine Alkenylgruppe ist.

5. Härtbare Zusammensetzung nach Anspruch 1 oder 2, wobei die vernetzbare funktionelle Gruppe des Poly(meth)acrylats (I) eine Hydroxylgruppe ist.

6. Härtbare Zusammensetzung nach Anspruch 1 oder 2, wobei die vernetzbare funktionelle Gruppe des Poly(meth)acrylats (I) eine Aminogruppe ist.

7. Härtbare Zusammensetzung nach Anspruch 1 oder 2, wobei die vernetzbare funktionelle Gruppe des Poly(meth)acrylats (I) eine Gruppe mit einer polymerisierbaren Kohlenstoff-Kohlenstoff-Doppelbindung ist.

8. Härtbare Zusammensetzung nach Anspruch 1 oder 2, wobei die vernetzbare funktionelle Gruppe des Poly(meth)acrylats (I) eine Epoxygruppe ist.

9. Härtbare Zusammensetzung nach Anspruch 1 bis 8, wobei die Polymerisation mit lebenden Radikalen eine Atomüberführungsradikalpolymerisation ist.

10. Härtbare Zusammensetzung nach Anspruch 9, wobei die Atomüberführungsradikalpolymerisation als einen Katalysator einen Komplex eines Metalls einsetzt, das aus Elementen der 7., 8., 9., 10. und 11. Gruppen des Periodensystems gewählt ist.

11. Härtbare Zusammensetzung nach Anspruch 10, wobei der Metallkomplex aus der aus einem Kupferkomplex, Nickelkomplex, Rutheniumkomplex und Eisenkomplex bestehenden Gruppe gewählt ist.

12. Härtbare Zusammensetzung nach Anspruch 11, wobei der Metallkomplex ein Kupferkomplex ist.

13. Härtbare Zusammensetzung nach Anspruch 1, wobei der Oberflächenklebrigkeitsmodifizierer (II) einen Schmelzpunkt zwischen 40°C und 150°C bei 1 atm hat.

14. Härtbare Zusammensetzung nach einem der Ansprüche 1 bis 13, wobei die aliphatische Kohlenwasserstoffverbindung ein in JIS K 2235 bezeichnetes Petroleumwachs ist.

15. Härtbare Zusammensetzung nach einem der Ansprüche 1 bis 13, wobei die aliphatische Carboxylsäure eine aliphatische Carboxylsäure mit 10 oder mehr Kohlenstoffatomen ist.

16. Härtbare Zusammensetzung nach einem der Ansprüche 1 bis 13, wobei der aliphatische Alkohol ein aliphatischer Alkohol mit 13 oder mehr Kohlenstoffatomen ist.

17. Härtbare Zusammensetzung nach einem der Ansprüche 1 bis 13, wobei das natürliche Wachs aus der aus Carnaubawachs, Candelillawachs, Bienenwachs, Spermazetwachs, Rainweidenwachs und Montanwachs bestehenden Gruppe gewählt ist.

18. Härtbare Zusammensetzung nach einem der Ansprüche 1 bis 13, wobei das aliphatische Carboxylsäureamid eine Amidverbindung ist, die erhalten ist durch Reagieren einer aliphatischen Carboxylsäure mit 6 oder mehr Kohlenstoffatomen mit einem oder mehreren Aminen, gewählt aus der Gruppe, die aus Ammoniak, Methylendiamin, 1,2-Ethylendiamin, m-Xyloldiamin und p-Phenylendiamin besteht.

19. Verfahren zur Verbesserung der Oberflächenklebrigkeit eines gehärteten Produkts, umfassend 0,1 bis 10 Gewichtsteile eines Oberflächenklebrigkeitsmodifizierers (II) mit einem Schmelzpunkt zwischen 30°C und 200°C bei 1 atm auf 100 Gewichtsteile eines Poly(meth)acrylats (I) mit wenigstens einer vernetzbaren funktionellen Gruppe an einem Kettenende, welches durch Polymerisation mit lebenden Radikalen hergestellt ist,
wobei der Oberflächenklebrigkeitsmodifizierer (II) aus der Gruppe gewählt ist, die besteht aus: einer aliphatischen Kohlenwasserstoffverbindung, einer aliphatischen Carboxylsäure, einem aliphatischen Alkohol, einem aliphatischen Carboxylsäureester, der aus einer aliphatischen Carboxylsäure und einem aliphatischen Alkohol mit 13 oder mehr Kohlenstoffatomen erhalten ist, einem natürlichen Wachs, einem aliphatischen Carboxylsäureamid, Polyethylen und Polypropylen.

20. Verwendung der härtbaren Zusammensetzung nach einem der Ansprüche 1 bis 18 für eine Anwendung, die aus der Gruppe gewählt ist, die besteht aus: Dichtmittel, Klebstoff, Lack, Vergußmittel, Beschichtungsmaterial, Formmaterial.

## Revendications

1. Composition durcissable comprenant :
- 100 parties en poids d'un poly(méth)acrylate (I) produit par polymérisation radicalaire vivante, ayant au moins un groupe fonctionnel réticulable à une extrémité de la chaîne ; et
- de 0,1 à 10 parties en poids d'un modificateur de pégosité de surface (II) ayant un point de fusion entre 30°C et 200°C à 1 atm choisi dans le groupe consistant en : un composé hydrocarboné aliphatique, un acide carboxylique aliphatique, un alcool aliphatique, un ester d'acide carboxylique aliphatique obtenu à partir d'un acide carboxylique aliphatique et d'un alcool aliphatique ayant 13 ou plus atomes de carbone, une cire naturelle, un amide d'acide carboxylique aliphatique, le polyéthylène et le polypropylène.

2. Composition durcissable selon la revendication 1, où le poly(méth)acrylate (I) a une distribution de masse moléculaire inférieure à 1,8.

3. Composition durcissable selon la revendication 1 ou 2, où le groupe fonctionnel réticulable du poly(méth)acrylate (I) est un groupe silyle réticulable,

4. Composition durcissable selon la revendication 1 ou 2, où le groupe fonctionnel réticulable du poly(méth)acrylate (I) est un groupe alcényle.

5. Composition durcissable selon la revendication 1 ou 2, où le groupe fonctionnel réticulable du poly(méth)acrylate (I) est un groupe hydroxyle.

6. Composition durcissable selon la revendication 1 ou 2, où le groupe fonctionnel réticulable du poly(méth)acrylate (I) est un groupe amino.

7. Composition durcissable selon la revendication 1 ou 2, où le groupe fonctionnel réticulable du poly(méth)acrylate (I) est un groupe ayant une double liaison carbone-carbone polymérisable.

8. Composition durcissable selon la revendication 1 ou 2, où le groupe fonctionnel réticulable du poly(méth)acrylate (I) est un groupe époxy.

9. Composition durcissable selon l'une quelconque des revendications 1 à 8, où la polymérisation radicalaire vivante est une polymérisation radicalaire à transfert d'atomes.

10. Composition durcissable selon la revendication 9, où la polymérisation radicalaire à transfert d'atomes emploie, comme catalyseur, un complexe d'un métal choisi parmi les éléments des 7^{ème}, 8^{ème}, 9^{ème}, 10^{ème} et 11^{ème} groupes du tableau périodique.

11. Composition durcissable selon la revendication 10, où le complexe métallique est choisi dans le groupe consistant en un complexe du cuivre, un complexe du nickel, un complexe du ruthénium et un complexe du fer.

12. Composition durcissable selon la revendication 11, où le complexe métallique est un complexe du cuivre.

13. Composition durcissable selon la revendication 1, où le modificateur de pégosité de surface (II) a un point de fusion entre 40°C et 150°C à 1 atm.

14. Composition durcissable selon l'une quelconque des revendications 1 à 13, où le composé hydrocarboné aliphatique est une cire de pétrole désignée dans JIS K 2235.

15. Composition durcissable selon l'une quelconque des revendications 1 à 13, où l'acide carboxylique aliphatique est un acide carboxylique aliphatique ayant 10 ou plus atomes de carbone.

16. Composition durcissable selon l'une quelconque des revendications 1 à 13, où l'alcool aliphatique est un alcool aliphatique ayant 13 ou plus atomes de carbone.

17. Composition durcissable selon l'une quelconque des revendications 1 à 13, où la cire naturelle est choisie dans le groupe consistant en la cire de carnauba, la cire de candelilla, la cire d'abeille, la cire de blanc de baleine, la cire de troène et la cire minérale.

18. Composition durcissable selon l'une quelconque des revendications 1 à 13, où l'amide d'acide carboxylique aliphatique est un composé amide obtenu par réaction d'un acide carboxylique aliphatique ayant 6 ou plus atomes de carbone avec une ou plusieurs amines choisies dans le groupe consistant en l'ammoniac, la méthylènediamine, la 1,2-éthylènediamine, la m-xylylènediamine et la p-phénylènediamine.

19. Procédé d'amélioration de la pégosité de surface d'un produit durci comprenant l'addition de 0,1 à 10 parties en poids d'un modificateur de pégosité de surface (II) ayant un point de fusion entre 30°C et 200°C à 1 atm à 100 parties en poids d'un poly(méth)acrylate (I) ayant au moins un groupe fonctionnel réticulable à une extrémité de la chaîne produit par polymérisation radicalaire vivante,
où le modificateur de pégosité de surface (II) est choisi dans le groupe consistant en : un composé hydrocarboné aliphatique, un acide carboxylique aliphatique, un alcool aliphatique, un ester d'acide carboxylique aliphatique obtenu à partir d'un acide carboxylique aliphatique et d'un alcool aliphatique ayant 13 ou plus atomes de carbone, une cire naturelle, un amide d'acide carboxylique aliphatique, le polyéthylène et le polypropylène.

20. Utilisation de la composition durcissable selon l'une quelconque des revendications 1 à 18 pour une application choisie dans le groupe consistant en : un agent d'étanchéité, un adhésif, une peinture, un agent de mise en pot, un matériau de revêtement, un matériau de moulage.
